# EUROPÄISCHE PATENTSCHRIFT

(11) **EP 3 470 015 B1**
(45) Veröffentlichungstag und Bekanntmachung des Hinweises auf die Patenterteilung: **07.07.2021**
(21) Anmeldenummer: 17195869.7
(22) Anmeldetag: 11.10.2017
(51) Int. Cl.: A61C 17/22

(54) **ELEKTRISCHES ZAHNBÜRSTENHANDTEIL UND ELEKTRISCHE ZAHNBÜRSTE MIT DEM ELEKTRISCHEN ZAHNBÜRSTENHANDTEIL UND MIT EINER AUFSTECKBÜRSTE**
ELECTRICAL TOOTHBRUSH HANDLE AND ELECTRIC TOOTHBRUSH WITH THE ELECTRIC TOOTHBRUSH HANDLE AND WITH A BRUSH HEAD
PARTIE POIGNÉE DE LA BROSSE À DENTS ÉLECTRIQUE ET BROSSE À DENTS ÉLECTRIQUE DOTÉE D'UNE PARTIE POIGNÉE DE LA BROSSE ÉLECTRIQUE ET UNE BROSSE ENFICHABLE

(43) Veröffentlichungstag der Anmeldung: 17.04.2019
(73) Patentinhaber: Trisa Holding AG, 6234 Triengen (CH)
(72) Erfinder: FISCHER, Herbert, 5057 Reitnau (CH); KIRCHHOFER, Pierre Fredy, 6205 Eich (CH); ZWIMPFER, Martin, 6004 Luzern (CH)
(74) Vertreter: Daub, Thomas

(56) Entgegenhaltungen:
- EP-A1- 2 664 298
- WO-A1-95/33419
- WO-A1-2007/016066
- WO-A1-2015/159250
- CN-U- 201 676 306
- CN-U- 203 315 105
- CN-U- 206 198 076
- DE-A1-102006 060 133

## Beschreibung

### Stand der Technik

Die Erfindung betrifft ein elektrisches Zahnbürstenhandteil und eine elektrische Zahnbürste mit dem elektrischen Zahnbürstenhandteil und der Aufsteckbürste.

Es sind bereits Aufsteckbürsten für ein Zahnbürstenhandteil, elektrische Zahnbürstenhandteile und elektrische Zahnbürsten vorgeschlagen worden, wie beispielsweise in der CN 201966781 U, der DE 10 2012 006 723 A1, der EP 0 893 106 A2, der EP 2 234 561 B1, der US 9,237,943 B2, der US 2002/056402 A1 und der WO 95/33419 A1.

Aus der US 2011/0107536 A1 ist bereits eine Aufsteckbürste für ein Zahnbürstenhandteil, mit einem Kopfabschnitt, der einen Bürstenkopf umfasst, mit einem Aufsteckabschnitt, der eine Schnittstellenaufnahme umfasst und mit einem zwischen dem Kopfabschnitt und dem Aufsteckabschnitt angeordneten Halsabschnitt, bekannt.

Aus der JP 2012-165954 A ist bereits ein elektrisches Zahnbürstenhandteil mit zumindest einer Schnittstelle zu einer Kopplung mit einer Aufsteckbürste, mit zumindest einem Gehäuse, mit zumindest einer in dem Gehäuse aufgenommenen Antriebseinheit zu einem Antrieb der Schnittstelle und mit zumindest einem Energiespeicher zu einer Versorgung der Antriebseinheit mit Energie, bekannt.

Aus der CN 206198076 U ist bereits ein elektrisches Zahnbürstenhandteil mit zumindest einer Schnittstelle zu einer Kopplung mit einer Aufsteckbürste, mit zumindest einem Gehäuse, mit zumindest einer in dem Gehäuse aufgenommenen Antriebseinheit zu einem Antrieb der Schnittstelle, mit zumindest einem Energiespeicher zu einer Versorgung der Antriebseinheit mit Energie, und mit zumindest einer, in dem Gehäuse angeordneten, festen, insbesondere einstückig ausgeführten, Rahmeneinheit, welche zumindest teilweise die Antriebseinheit und den Energiespeicher aufnimmt, wobei die Antriebseinheit zumindest einen Rotor aufweist, wobei der Rotor der Antriebseinheit in einem Aufnahmebereich der Rahmeneinheit aufgenommen ist, wobei der Aufnahmebereich zu einer Seite hin geöffnet ist, wobei die Antriebseinheit zumindest einen Stator aufweist, der einen einstückig ausgeführten Träger, ein in den Träger eingesetztes Blechpaket und eine das Blechpaket umgreifende Spule aufweist, wobei der Träger eine erste geöffnete Seite des Aufnahmebereichs der Rahmeneinheit für den Rotor verdeckt, bekannt.

Die Aufgabe der Erfindung besteht insbesondere darin, vorteilhafte Eigenschaften hinsichtlich einer variablen und/oder leicht zu montierenden und/oder vorteilhaft kompakten Ausgestaltung und/oder einer kostengünstigen Herstellbarkeit zu erzielen. Die Aufgabe wird erfindungsgemäß durch die Merkmale der Patentansprüche 1 und 14 gelöst, während vorteilhafte Ausgestaltungen und Weiterbildungen der Erfindung den Unteransprüchen entnommen werden können.

### Vorteile der Erfindung

Bekannt ist eine Aufsteckbürste für ein Zahnbürstenhandteil, insbesondere für ein elektrisches Zahnbürstenhandteil, mit einem Kopfabschnitt, der einen Bürstenkopf umfasst, mit einem Aufsteckabschnitt, der eine Schnittstellenaufnahme umfasst und mit einem zwischen dem Kopfabschnitt und dem Aufsteckabschnitt angeordneten Halsabschnitt.

Insbesondere kann die Schnittstellenaufnahme von einer Universal-Schnittstellenaufnahme zu einer Aufnahme von zumindest zwei verschiedenen Schnittstellen verschiedener Zahnbürstenhandteile gebildet sein. Vorzugsweise passt die Schnittstellenaufnahme auf Schnittstellen verschiedener Form und/oder Abmessung. Bevorzugt kann die Schnittstellenaufnahme insbesondere zusammen mit verschiedenen Zahnbürstenhandteilen verwendet werden. Ferner besteht die Aufsteckbürste vorteilhaft aus genau drei Abschnitten, und zwar dem Kopfabschnitt, dem Halsabschnitt und dem Aufsteckabschnitt. Die Abschnitte grenzen vorteilhaft direkt aneinander an. Es wäre jedoch auch denkbar, dass sich die Abschnitte teilweise überscheiden.

Unter einer "Schnittstellenaufnahme" soll in diesem Zusammenhang insbesondere ein Aufnahmebereich der Aufsteckbürste verstanden werden, der zu einer verliersicheren Aufnahme einer Schnittstelle, insbesondere einer Achse der Schnittstelle, des Zahnbürstenhandteils vorgesehen ist. Vorzugsweise ist die Schnittstellenaufnahme insbesondere zu einer kraft- und/oder formschlüssigen Aufnahme der Schnittstelle vorgesehen. Die Schnittstellenaufnahme bildet insbesondere einen Aufnahmebereich aus, in welchen die Schnittstelle des Zahnbürstenhandteils eingeschoben werden kann, wobei die Schnittstelle insbesondere ab einer definierten Einschubkraft in dem Aufnahmebereich verrastet und/oder verklemmt. Vorzugsweise ist die Schnittstellenaufnahme auf einer dem Bürstenkopf abgewandten Seite der Aufsteckbürste angeordnet. Ferner soll in diesem Zusammenhang unter einer "Universal-Schnittstellenaufnahme" insbesondere eine Schnittstellenaufnahme verstanden werden, die zu einer Aufnahme von zumindest zwei verschiedenen Schnittstellen geeignet ist. Vorzugsweise soll darunter insbesondere eine Schnittstellenaufnahme verstanden werden, die zu einer verliersicheren Aufnahme von zumindest zwei, insbesondere definierten, unterschiedlich geformten und/oder unterschiedlich dimensionierten Schnittstellen geeignet ist. Bevorzugt sind dabei zumindest die Achsen der Schnittstellen unterschiedlich geformt und/oder unterschiedlich dimensioniert. Besonders bevorzugt soll darunter insbesondere eine Schnittstelle verstanden werden, die zu einer verliersicheren Aufnahme von zumindest zwei, insbesondere definierten, unterschiedlich geformten und/oder unterschiedlich dimensionieren Schnittstellen geeignet ist, wobei eine Haltekraft zu einer Sicherung der Schnittstellen zumindest annähernd identisch ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die Ausgestaltung der Aufsteckbürste kann die Aufsteckbürste insbesondere für verschiedene Zahnbürstenhandteile genutzt werden. Es kann insbesondere eine universelle Nutzung der Aufsteckbürste erreicht werden. Hierdurch kann insbesondere eine vorteilhaft variable Aufsteckbürste bereitgestellt werden.

Vorzugsweise weist die Aufsteckbürste einen tragenden Grundkörper auf, welcher zumindest teilweise an die Schnittstellenaufnahme angrenzt, und zumindest eine Klemmeinheit aufweist, welche dazu vorgesehen ist, zu einer Aufnahme einer Schnittstelle eines Zahnbürstenhandteils elastisch ausgelenkt zu werden. Vorzugsweise begrenzt der tragende Grundkörper zumindest einen wesentlichen Teil der Schnittstellenaufnahme. Dadurch kann insbesondere eine vorteilhaft form- und/oder kraftschlüssige Aufnahme einer Schnittstelle eines Zahnbürstenhandteils erreicht werden. Vorzugsweise kann dadurch insbesondere eine variable Anpassung einer Form der Schnittstellenaufnahme an die Schnittstelle erreicht werden. Hierdurch kann insbesondere die Aufnahme verschiedener Schnittstellen ermöglicht werden. Unter einem "tragenden Grundkörper" soll in diesem Zusammenhang insbesondere ein Bauteil verstanden werden, welches eine tragende Struktur der Aufsteckbürste ausbildet. Vorzugsweise besteht der tragende Grundkörper aus einem formfesten Material und erstreckt sich entlang einer Haupterstreckungsrichtung der Aufsteckbürste zumindest über einen Großteil der Aufsteckbürste. Bevorzugt ist der tragende Grundkörper von einem einstückigen Bauteil gebildet, welches zu einer Stabilisierung und Verbindung der Abschnitte der Aufsteckbürste vorgesehen ist. Dabei soll unter einer "Haupterstreckungsrichtung" eines Objekts insbesondere eine Richtung verstanden werden, welche parallel zu einer längsten Kante eines kleinsten geometrischen Quaders verläuft, welcher das Objekt gerade noch vollständig umschließt. Ferner soll dabei unter "einstückig" insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Ferner soll unter "zumindest einem wesentlichen Teil" insbesondere zumindest 30%, vorzugsweise zumindest 50% und besonders bevorzugt zumindest 70% einer begrenzten Außenfläche der Schnittstellenaufnahme verstanden werden. Unter einer "Klemmeinheit" soll in diesem Zusammenhang insbesondere eine Einheit mit wenigstens einem Klemmelement verstanden werden, das bei einem Befestigungsvorgang elastisch ausgelenkt wird, um anschließend durch eine innere Spannkraft eine form- und/oder kraftschlüssige Verbindung mit der Schnittstelle aufzubauen. Dabei soll unter einem "Klemmelement" in diesem Zusammenhang insbesondere ein federelastisches Element zur Herstellung einer Klemmverbindung verstanden werden, das dazu vorgesehen ist, bei einer Montage elastisch ausgelenkt zu werden. Es sind verschiedene, einem Fachmann als sinnvoll erscheinende Ausbildungen des Klemmelements denkbar, wie beispielsweise als Klemmwand und/oder Klemmsteg.

Vorzugsweise ist der Grundkörper vollständig aus einem Material hergestellt. Vorzugsweise besteht der Grundkörper aus einer Hartkomponente. Im Rahmen dieser Offenbarung kommen nahezu beliebige Hartkomponenten infrage, die der Fachmann zweckgemäß geeignet kombinieren und/oder auswählen wird. Als Hartkomponente kommen beispielsweise Styrolpolymerisate wie Styrolacrylnitril (SAN), Polystyrol (PS), Acrylnitrylbutadienstryrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephtalat (PET), insbesondere in Form von säuremodifiziertem Polyethylenterephtalat (PETA), glykolmodifiziertem Polyethylenterephtalat (PETG), Polybutylenterephtalat (PBT), säuremodifiziertem Polycyclohexylendimethylenterephtalat (PCT-A), glykolmodifiziertem Polycyclohexylendimethylenterephtalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphtalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen mehr umfassen. Insbesondere Polyethylen (PE) und/oder Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf. Vorzugsweise weist die Aufsteckbürste einen einzigen Grundkörper auf, der aus einem der genannten Materialien oder auch aus einem Gemisch derselben ausgebildet sein kann. Es sind jedoch auch Kombinationen unterschiedlicher Hartkomponenten denkbar, wobei diese beispielsweise in einem Zwei- und/oder Mehrkomponentenspritzguss verarbeitet und/oder miteinander verklebt und/oder verschweißt, insbesondere ultraschallverschweißt sein können. Alternativ oder zusätzlich können mehrere Hartkomponenten eingesetzt werden, die in einem Zwei- und/oder Mehrkomponentenspritzguss keinen Materialschluss eingehen. Insbesondere ist denkbar, dass in diesem Fall ein Formschluss, beispielsweise in Form zumindest eines Hinterschnitts und/oder zumindest eines Durchbruchs und/oder zumindest einer zumindest teilweisen Umspritzung oder dergleichen, zwischen Hartkomponenten erzeugt ist. Hierbei ist denkbar, dass beispielsweise eine zweite Hartkomponente, die insbesondere auf eine erste Hartkomponente gespritzt ist, nach einem Spritzguss schwindet und/oder schrumpft und vorteilhaft eine Schwundverbindung ausbildet. Geeignete Kombinationen können beispielsweise Polypropylen-Polyester, Polypropylen-Styrolacrylnitril oder andere Kombinationen sein.

Vorzugsweise weist die Klemmeinheit zumindest eine zumindest teilweise freistehende Klemmwand auf, welche direkt an die Schnittstellenaufnahme angrenzt. Dadurch kann insbesondere eine vorteilhafte Klemmeinheit bereitgestellt werden. Vorzugsweise kann dadurch insbesondere eine vorteilhaft großflächige Klemmfläche bereitgestellt werden. Hierdurch kann insbesondere eine vorteilhaft großflächige Kraftverteilung erreicht werden. Unter einer "zumindest teilweise freistehenden Klemmwand" soll in diesem Zusammenhang insbesondere eine zumindest teilweise gegenüber einem Rest des Grundkörpers freistehende Klemmwand verstanden werden. Vorzugsweise ist die Klemmwand in zumindest einer Querschnittsebene über zumindest einen Großteil einer Außenfläche frei von einer Anbindung an einen Rest des Grundkörpers. Besonders bevorzugt ist die Klemmwand über zumindest einen Großteil seiner Erstreckung parallel zu der Haupterstreckungsrichtung der Aufsteckbürste jeweils in einer Ebene senkrecht zu der Haupterstreckungsrichtung zu einem Großteil einer Außenfläche frei von einer Anbindung an einen Rest des Grundkörpers. Besonders bevorzugt soll darunter insbesondere eine freistehende Wand verstanden werden, welche lediglich an den Enden sowie an einer Grundseite mit dem Rest des Grundkörpers verbunden ist.

Vorzugsweise weist die Klemmeinheit zumindest zwei zumindest teilweise freistehende Klemmwände auf, welche auf gegenüberliegenden Seiten direkt an die Schnittstellenaufnahme angrenzen. Vorzugsweise bilden die Klemmwände zumindest teilweise jeweils eine Seitenwand der Schnittstellenaufnahme aus. Dadurch kann insbesondere vorteilhaft gleichmäßig eine Klemmkraft aufgebracht werden. Ferner kann insbesondere eine vorteilhafte Klemmeinheit bereitgestellt werden. Vorzugsweise kann dadurch insbesondere eine vorteilhaft großflächige Klemmfläche bereitgestellt werden. Hierdurch kann insbesondere eine vorteilhaft großflächige Kraftverteilung erreicht werden. Vorzugsweise weist die Klemmeinheit zudem eine zumindest teilweise in die Schnittstellenaufnahme ragende Klemmerhebung auf. Die Klemmerhebung ist insbesondere von einer Erhebung auf einer die Schnittstellenaufnahme begrenzenden Innenwand des Grundkörpers gebildet. Vorzugsweise erstreckt sich die Klemmerhebung aus Gründen der Entformbarkeit axial bis zu einem Ende der Schnittstellenaufnahme. Die Klemmerhebung weist insbesondere eine axiale Länge von 4 mm bis 8 mm, vorzugsweise von 5 mm bis 7 mm, auf. Ferner weist die Klemmerhebung insbesondere eine Breite von 0.7 mm bis 1.8 mm, vorzugsweise von 1 mm bis 1.5 mm, und eine Höhe von 0.04 mm bis 0.5 mm, vorzugsweise von 0.06 mm bis 0.3 mm, auf. Bevorzugt kann durch Anpassung einer Höhe der Klemmerhebung eine Abziehkraft der Aufsteckbürste eingestellt werden. Die Klemmerhebung dient daher insbesondere zu einer Einstellbarkeit der Rückhaltekraft und einem Verklemmen einer Achse einer Schnittstelle eines Zahnbürstenhandteils in der Schnittstellenaufnahme.

Vorzugsweise weist die Aufsteckbürste eine Umspritzung aus einem von dem Grundkörper verschiedenen Material, welche die zumindest eine Klemmwand in zumindest einer Ebene zumindest zu einem wesentlichen Teil direkt umgibt, auf. Vorzugsweise umgibt die Umspritzung die zumindest eine Klemmwand in zumindest einer Ebene senkrecht zu einer Haupterstreckungsrichtung der Aufsteckbürste zumindest zu einem wesentlichen Teil direkt. Die Umspritzung umgibt die Klemmwand insbesondere zu zumindest zwei Seiten hin. Vorzugsweise weist die Klemmwand zumindest drei von einem Rest des Grundkörpers freie Seiten auf, wobei eine Seite insbesondere die Schnittstellenaufnahme begrenzt und zwei Seiten direkt von der Umspritzung umgeben sind. Besonders bevorzugt ist eine der Schnittstellenaufnahme abgewandte Seite der zumindest einen Klemmwand hinterspritzt. Dadurch kann eine Elastizität der Klemmwand weiter verbessert werden. Es kann insbesondere eine elastische Auslenkung der Klemmwand zumindest teilweise abgedämpft werden. Hierdurch kann eine Zuverlässigkeit der Klemmeinheit weiter verbessert werden. Ferner soll dabei unter "zumindest einem wesentlichen Teil" insbesondere zumindest 20%, vorzugsweise zumindest 40% und besonders bevorzugt zumindest 60% einer Außenfläche der Klemmwand verstanden werden.

Vorzugsweise ist die Umspritzung vollständig aus einem Material hergestellt. Vorzugsweise besteht die Umspritzung aus einer Weichkomponente. Im Rahmen dieser Offenbarung kommen nahezu beliebige Weichkomponenten infrage, die der Fachmann zweckgemäß geeignet kombinieren und/oder auswählen wird. Als Weichkomponenten kommen beispielsweise thermoplastische Styrol-Elastomere (TPE-S) wie etwa ein Styrol-Ethylen-Butylen-Styrol-Copolymer (SEBS), ein Styrol-Butadien-Styrol-Copolymer (SBS) oder dergleichen infrage. Zudem ist eine Verwendung thermoplastischer Polyurethan-Elastomere (TPE-U), thermoplastischer Polyamid-Elastomere (TPE-A), thermoplastischer Polyolefin-Elastomere (TPE-O), thermoplastischer Polyerster-Elastomere (TPE-E), Polyethylen (PE), Polyurethan (PU) oder dergleichen denkbar. Weiterhin kann eine Weichkomponente beispielsweise zumindest ein Silikon umfassen. Vorteilhaft weist eine Weichkomponente eine Shore-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Materialschluss.

Bevorzugt können mittels der Umspritzung Funktionselemente an der Aufsteckbürste ausgebildet werden. Vorzugsweise wäre denkbar, dass auf einer Rückseite der Aufsteckbürste mittels der Umspritzung ein von einem Zungenreiniger gebildetes Funktionselement ausgebildet ist. Ferner sind weitere, einem Fachmann als sinnvoll erscheinende Funktionselemente denkbar. Insbesondere wäre denkbar, dass das Funktionselement als ein Reinigungselement ausgebildet ist.

Vorzugsweise weist die Schnittstellenaufnahme zumindest einen ersten, zumindest im Wesentlichen quaderförmigen Teilaufnahmebereich auf, welcher zu einer Seite hin zumindest teilweise von der zumindest einen Klemmwand begrenzt ist. Vorzugsweise ist der erste Teilaufnahmebereich zu zwei gegenüberliegenden Seiten hin von jeweils einer Klemmwand begrenzt. Bevorzugt bildet der erste Teilaufnahmebereich einen letzten Abschnitt der Schnittstellenaufnahme aus, der zu einer Aufnahme einer Spitze der Schnittstelle des Zahnbürstenhandteils vorgesehen ist. Dadurch kann insbesondere eine vorteilhafte Schnittstellenaufnahme bereitgestellt werden. Es kann insbesondere eine zuverlässige und sichere Aufnahme einer Schnittstelle erreicht werden. Ferner kann insbesondere erreicht werden, dass eine Klemmung an einer Achse der Schnittstelle des Zahnbürstenhandteils erfolgt. Hierdurch kann eine vorteilhaft zuverlässige Übertragung einer Antriebsbewegung auf die Aufsteckbürste erreicht werden. Unter einem "zumindest im Wesentlichen quaderförmigen Teilaufnahmebereich" soll in diesem Zusammenhang insbesondere ein Teilaufnahmebereich verstanden werden, dessen Volumen, insbesondere dessen Wert des Volumens, maximal 40%, vorzugsweise maximal 20% und besonders bevorzugt maximal 10% von einem Volumen, insbesondere einem Wert des Volumens, eines kleinsten gedachten Quaders abweicht, welcher den Teilaufnahmebereich gerade noch vollständig umschließt.

Vorzugsweise weist die Schnittstellenaufnahme zumindest einen zweiten, zumindest im Wesentlichen zylindrischen Teilaufnahmebereich auf, welcher axial zumindest teilweise in den ersten Teilaufnahmebereich ragt. Dadurch kann insbesondere eine vorteilhafte Formgebung der Schnittstellenaufnahme erreicht werden. Darunter, dass "der zweite Teilaufnahmebereich axial zumindest teilweise in den ersten Teilaufnahmebereich ragt" soll insbesondere verstanden werden, dass sich der erste Teilaufnahmebereich und der zweite Teilaufnahmebereich zumindest hinsichtlich einer axialen Erstreckung zumindest teilweise überschneiden. Bevorzugt sind die Teilaufnahmebereiche zumindest annähernd koaxial zueinander angeordnet und bilden eine Überschneidung aus. Vorzugsweise umfasst die Schnittstellenaufnahme zumindest eine Vereinigungsmenge aus dem ersten Teilaufnahmebereich und dem zweiten Teilaufnahmebereich. Unter einem "zumindest im Wesentlichen zylindrischen Teilaufnahmebereich" soll in diesem Zusammenhang insbesondere ein Teilaufnahmebereich verstanden werden, dessen Volumen, insbesondere dessen Wert des Volumens, maximal 40%, vorzugsweise maximal 20% und besonders bevorzugt maximal 10% von einem Volumen, insbesondere einem Wert des Volumens, eines kleinsten gedachten Zylinders abweicht, welcher den Teilaufnahmebereich gerade noch vollständig umschließt.

Vorzugsweise ist der zweite Teilaufnahmebereich den ersten Teilaufnahmebereich axial vollständig überlappend angeordnet. Vorzugsweise ist der zweite Teilaufnahmebereich axial vollständig innerhalb des ersten Teilaufnahmebereichs angeordnet. Bevorzugt ist der zweite Teilaufnahmebereich insbesondere an einem dem Ende der Schnittstellenaufnahme abgewandten Ende des ersten Teilaufnahmebereichs angeordnet. Besonders bevorzugt schließt der zweite Teilaufnahmebereich, insbesondere auf einer der Öffnung der Schnittstellenaufnahme zugewandten Seite, gemeinsam mit dem ersten Teilaufnahmebereich ab. Vorzugsweise ist ein maximaler Querschnitt des zweiten Teilaufnahmebereichs senkrecht zu einer Haupterstreckungsrichtung der Aufsteckbürste größer, als ein entsprechender maximaler Querschnitt des ersten Teilaufnahmebereichs. Dadurch kann insbesondere eine vorteilhafte Formgebung der Schnittstellenaufnahme erreicht werden. Vorteilhafterweise setzt sich die quaderförmige Struktur des ersten Teilaufnahmebereichs mindestens teilweise im zweiten Teilaufnahmebereich fort und bildet so eine durchgängige Struktur.

Vorzugsweise weist die Schnittstellenaufnahme zumindest einen dritten, zumindest im Wesentlichen kegelstumpfförmigen Teilaufnahmebereich auf, welcher axial direkt an den zweiten Teilaufnahmebereich angrenzt. Vorzugsweise ist der dritte Teilaufnahmebereich frei von einer Überschneidung mit dem ersten und/oder zweiten Teilaufnahmebereich. Bevorzugt schließt der dritte Teilaufnahmebereich direkt an den ersten Teilaufnahmebereich und den zweiten Teilaufnahmebereich an. Der dritte Teilaufnahmebereich schließt insbesondere auf einer der Öffnung der Schnittstellenaufnahme zugewandten Seite an den ersten Teilaufnahmebereich und den zweiten Teilaufnahmebereich an. Vorzugsweise bildet die Schnittstellenaufnahme zumindest eine Vereinigungsmenge aus dem ersten Teilaufnahmebereich, dem zweiten Teilaufnahmebereich und dem dritten Teilaufnahmebereich aus. Vorzugsweise ist ein maximaler Querschnitt des dritten Teilaufnahmebereichs senkrecht zu einer Haupterstreckungsrichtung der Aufsteckbürste größer, als ein entsprechender maximaler Querschnitt des zweiten Teilaufnahmebereichs. Dadurch kann insbesondere eine vorteilhafte Formgebung der Schnittstellenaufnahme erreicht werden. Unter einem "zumindest im Wesentlichen kegelstumpfförmigen Teilaufnahmebereich" soll in diesem Zusammenhang insbesondere ein Teilaufnahmebereich verstanden werden, dessen Volumen, insbesondere dessen Wert des Volumens, maximal 40%, vorzugsweise maximal 20% und besonders bevorzugt maximal 10% von einem Volumen, insbesondere einem Wert des Volumens, eines kleinsten gedachten Kegelstumpfs abweicht, welcher den Teilaufnahmebereich gerade noch vollständig umschließt.

Vorzugsweise weist der erste im Wesentlichen quaderförmige Teilaufnahmebereich zumindest eine Verjüngung auf, an welcher sich der Teilaufnahmebereich von zumindest einer Seite verjüngt. Vorzugsweise verjüngt sich der Teilaufnahmebereich an der Verjüngung von zumindest zwei Seiten radial. Bevorzugt weist der erste Teilaufnahmebereich an zumindest zwei Seiten einen, insbesondere abgeschrägten, Absatz auf, welcher die Verjüngung ausbildet. Vorzugsweise ist die Verjüngung axial in Einführrichtung der Schnittstelle neben der zumindest einen Klemmwand der Klemmeinheit angeordnet. Dadurch kann insbesondere eine vorteilhafte Formgebung der Schnittstellenaufnahme erreicht werden. Es kann insbesondere ein vorteilhaftes leichtes Einführen der Schnittstelle in die Schnittstellenaufnahme realisiert werden.

Vorzugsweise weist die Schnittstellenaufnahme ferner einen vierten, kegelstumpfförmigen Teilaufnahmebereich auf, dessen Mantelfläche koaxial gekrümmt ist. Vorzugsweise grenzt der vierte Teilaufnahmebereich axial direkt, insbesondere auf einer dem ersten Teilaufnahmebereich abgewandten Seite, an den dritten Teilaufnahmebereich an. Bevorzugt ist der vierte Teilaufnahmebereich zumindest annähernd koaxial zu dem dritten Teilaufnahmebereich angeordnet. Besonders bevorzugt schließt der vierte Teilaufnahmebereich auf einer der Öffnung der Schnittstellenaufnahme zugewandten Seite an den dritten Teilaufnahmebereich an. Der vierte Teilaufnahmebereich bildet insbesondere die Öffnung der Schnittstellenaufnahme aus. Vorzugsweise bildet die Schnittstellenaufnahme eine Vereinigungsmenge aus dem ersten Teilaufnahmebereich, dem zweiten Teilaufnahmebereich, dem dritten Teilaufnahmebereich und dem vierten Teilaufnahmebereich aus.

Bevorzugt weist die Aufsteckbürste in dem Aufsteckabschnitt eine Abtropfkante auf. Die Abtropfkante ist insbesondere von einem harten Übergang von einer Phase der Aufsteckbürste in einen runden Verlauf der Außenhaut der Aufsteckbürste gebildet. Die Abtropfkante bildet besonders bevorzugt eine radial äußerste Kante der Aufsteckbürste aus. Vorzugsweise weist die Abtropfkante einen Durchmesser von 12 mm bis 20 mm, bevorzugt von 14 mm bis 18 mm, auf. Besonders bevorzugt ist die Abtropfkante von einer kreisförmigen Kante gebildet. Grundsätzlich wäre jedoch auch eine andere, einem Fachmann als sinnvoll erscheinende Formgebung der Kante denkbar. Bei breiten Handteilen bilden die Abtropfkante und die Phase insbesondere einen Abschluss, während bei schmalen Handteilen die Abtropfkante und die Phase bevorzugt einen Übergang ausbilden. Ferner kann durch die Abtropfkante insbesondere die Funktion erreicht werden, dass, wenn die Aufsteckbürste auf einer Standfläche steht, Flüssigkeit an der Abtropfkante vorteilhaft abtropft. Des Weiteren läuft durch die Abtropfkante weniger Flüssigkeit in Richtung Standfläche und so im montierten Zustand auch weniger Flüssigkeit in Richtung der Schnittstelle.

Bekannt ist eine Aufsteckbürste für ein Zahnbürstenhandteil, insbesondere für ein elektrisches Zahnbürstenhandteil, mit einem Kopfabschnitt, der einen Bürstenkopf umfasst, mit einem Aufsteckabschnitt, der eine Schnittstellenaufnahme umfasst und mit einem zwischen dem Kopfabschnitt und dem Aufsteckabschnitt angeordneten Halsabschnitt. Vorzugsweise weist der Bürstenkopf ein Borstenfeld mit zumindest zwei wesentlich differierenden Borstenbündeln auf. Vorzugsweise weist der Bürstenkopf eine Vielzahl wesentlich differierender Borstenbündel auf. Unter "wesentlich differierenden Borstenbündeln" soll in diesem Zusammenhang insbesondere verstanden werden, dass sich die zumindest zwei Borstenbündel wesentlich zumindest hinsichtlich ihrer Form und/oder ihrer Ausrichtung voneinander unterscheiden. Vorzugsweise weisen die Borstenbündel eine wesentlich differierende Form und/oder eine wesentlich differierende Ausrichtung auf. Unter einer "wesentlich differierenden Form" der Borstenbündel soll in diesem Zusammenhang insbesondere verstanden werden, dass eine Grundfläche eines ersten Borstenbündels, insbesondere bei einer beliebigen Ausrichtung, sich zumindest zu 10%, vorzugsweise zumindest zu 30% und besonders bevorzugt zumindest zu 50% von einer Grundfläche des zweiten Borstenbündels unterscheidet. Vorzugsweise bildet maximal 80%, vorzugsweise maximal 60% und besonders bevorzugt maximal 40% einer Fläche der Grundfläche des ersten Borstenbündels und/oder des zweiten Borstenbündels bei einer Überlagerung eine Schnittmenge. Unter einer "wesentlich differierenden Ausrichtung" soll in diesem Zusammenhang insbesondere verstanden werden, dass eine Ausrichtung der Borsten eines ersten Borstenbündels zumindest 10°, vorzugsweise zumindest 20° und besonders bevorzugt zumindest 30° von einer Ausrichtung der Borsten eines zweiten Borstenbündels abweicht. Dadurch kann insbesondere eine vorteilhafte Reinigungsleistung erreicht werden. Vorzugsweise sind die Borstenbündel in einem Hot-Tufting- bzw. HT-Verfahren hergestellt. Es sind jedoch auch andere, einem Fachmann als sinnvoll erscheinende Herstellungsverfahren zur Herstellung der Borstenbündel denkbar. Spezifisch für das Hot-Tufting- bzw. HT-Verfahren weisen die Borstenlöcher in dem Bürstenkopf in der Draufsicht gesehen grundsätzlich geschlossene Konturen auf, wobei alle möglichen geometrischen Formen Anwendung finden können. Die Borstenbündel bzw. ihre Grundflächen können kreisförmig, kreisringförmig, kreissegmentförmig, sternförmig, dreieckig, polygonförmig, rechteckig oder quadratisch, etc. ausgebildet sein. Es können ferner unterschiedliche Borsten in verschiedenen Borstenbündel innerhalb eines Borstenfelds eingesetzt werden oder aber auch innerhalb eines Borstenbündels. Vorzugsweise sind die Borstenbündel ferner spiegelsymmetrisch zu einer Längsachse und/oder zur Querachse des Bürstenkopfs und/oder punktsymmetrisch, vorzugsweise zu einem geometrischen Mittelpunkt des Bürstenkopfs, ausgebildet. Eine Topografie, also insbesondere die Oberfläche nutzungsseitiger Borstenenden oder Reinigungselemente, ist innerhalb eines Borstenfelds vorzugsweise flach, domförmig, wannenförmig, cupförmig, zinnenförmig, kegelförmig, reihenförmig und/oder in Form von Logos oder Buchstaben, die erhaben und/oder eingelassen sind, ausgestaltet. Bei dem Hot-Tufting- bzw. HT-Verfahren wird zunächst der Grundkörper der Aufsteckbürste mit Sacklöchern bzw. Aussparungen im Kopfbereich gespritzt. Anschließend werden Borsten bündelweise bereitgestellt und bündelweise verschmolzen. Darauffolgend wird der Grundkörper in dem Kopfabschnitt etwa auf eine Glasübergangstemperatur erwärmt. Schließlich werden die verschmolzenen Borstenenden in die Sacklöcher bzw. Aussparungen eingeführt und die Borstenbündel mit Druck in dem Bürstenkopf verankert. Dabei wird die Größe der Sacklöcher reduziert bzw. die Geometrie verformt und die Borstenbündel so verankert.

Zumindest einige oder alle der Borsten sind vorteilhaft konventionell extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT) gefertigt, wobei beliebige andere Materialien denkbar sind. Ferner ist denkbar, dass zumindest einige der Borsten eine Zuspitzung und/oder einen veränderlichen Querschnitt aufweisen. Vorzugsweise sind die Borsten aus einem einzelnen, insbesondere auch gemischten, Material ausgebildet. Es sind aber auch Borsten mit mehreren Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein. Die Borsten können dabei sowohl aus einem Material als auch aus mehreren Materialien, insbesondere durch Coextrusion, extrudiert werden. In Mehrkomponentenextrusionsverfahren können beispielsweise 2K-Borsten, Stain Devil Borsten von Perlon ® und/oder eine Kombination aus PBT mit Weichkomponenten, wobei die Weichkomponenten Streifen in Längsrichtung der Borsten ausbilden, realisiert werden.

Insbesondere kommen zylindrische Borsten infrage, wobei beliebige andere Querschnitte wie beispielsweise polygonale, dreieckige, rechteckige, quadratische, elliptische, sternförmige, trapezförmige, parallelogrammförmige, rombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig aber auch unregelmäßig angeordnet sein. Insbesondere können sich in Gruppen angeordnete und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, einer Geometrie, einer Anspitzung und dergleichen, insbesondere abwechselnd, unterscheiden. Vorzugsweise weisen die Borsten für Mundhygieneanwendungen einen Durchmesser, insbesondere senkrecht zu deren Längsachse, von wenigstens 0,075 mm und/oder von höchstens 0,25 mm auf. Vorteilhaft weisen die Borsten eine Querschnittsfläche, insbesondere senkrecht zu deren Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden. Im Fall von zugespitzten Borsten ist insbesondere Polyester (PBT) als Material geeignet, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch auch gewellte und/oder gedrillte und/oder wendelförmige und/oder gedrehte Borsten denkbar sowie insbesondere aus Kombinationen unterschiedlicher Borsten. Ferner sind Borsten mit einer glatten Oberfläche denkbar, ebenso wie Borsten mit texturierter Oberfläche.

Ferner sind die Borsten, insbesondere als Borstenbündel, vorzugsweise mittels zumindest eines Ankerstanzens, eines Anchor-Free-Tuftings (AFT), eines In-Mold-Tuftings (IMT) oder dergleichen verarbeitet, insbesondere an dem Borstenträger befestigt. Vorzugsweise weist der Borstenträger eine Mehrzahl von, insbesondere gebohrten und/oder bei einem Spritzguss geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Anwendungselements und/oder des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens.

Alternativ sind, wie erwähnt, auch ankerlose Verfahren denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist denkbar, dass Borstenbündel zunächst vereinzelt werden, Borstenbündel verschmolzen werden und/oder Borstenenden insbesondere anschließend zu deren Befestigung umspritzt werden. Hierbei können vorteilhaft Borstenbündel zusammengeführt werden. Möglich ist hierbei eine Herstellung mittels In-Mold-Tuftings (IMT), wobei vorteilhaft bei dem Umspritzen der Borstenenden ein Grundkörper, beispielsweise des Bürstenkopfs und/oder der Griffeinheit und/oder der Befestigungseinheit, geformt wird. Ebenso ist denkbar, dass, insbesondere im Rahmen einer Integrated Anchorless Production, Borsten zunächst mit Plättchen oder dergleichen umspritzt werden und diese Plättchen anschließend wiederum umspritzt werden, beispielsweise um den Bürstenkopf und/oder die Griffeinheit auszubilden.

Ferner ist denkbar, zunächst mittels Spritzgießens Borstenplättchen mit Durchgangslöchern zu fertigen, durch welche anschließend Borsten geführt werden. Vorzugsweise werden die Borsten anschließend auf einer Rückseite verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verschweißt und/oder verklebt werden, vorzugsweise mittels eines Ultraschallschweißens. Als bekanntes Herstellungsverfahren ist in diesem Zusammenhang Boucherie AFT (Anchor Free Tuftig) zu nennen, das insbesondere ein Zusammenführen von Borstenbündeln ermöglicht.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs. Hierbei kommt beispielsweise ein Boucherie-AMR-Verfahren, welches insbesondere kein Zusammenführen von Borstenbündeln ermöglicht, oder ein AMR+-Verfahren, welches insbesondere ein Zusammenführen von Borsten ermöglicht, infrage.

Zudem ist denkbar, zunächst einen Bürstenkopf mit Sacklöchern, beispielsweise mittels Spritzgießens und/oder mittels eines Bohrens der Sacklöcher, zu fertigen. Borsten werden in diesem Fall insbesondere zu Bündeln zusammengelegt und an einem Ende verschmolzen und/oder anderweitig verbunden. Der Bürstenkopf wird anschließend, insbesondere auf eine Glastemperatur seines Materials, erwärmt. Sodann können vorteilhaft Borstenbündel in die Sacklöcher eingeführt und mittels eines Andrückens an dem Bürstenkopf verankert werden. Insbesondere verformen sich hierbei die erwärmten Sacklöcher, sodass die Borstenbündel in denselben verankert werden. Hierbei bietet sich beispielsweise ein bekanntes PTt-Verfahren von Boucherie an.

Alternativ oder zusätzlich zu gestanzten und/oder angeklebten und/oder angeschweissten Borsten sind auch angespritzte Borsten und/oder eingedrehte Borsten, wie insbesondere für Interdentalbürsten, denkbar. Die angespritzten Borsten können insbesondere während eines Mehrkomponentenspritzgießens gemeinsam mit der Anwendungseinheit, der Griffeinheit und/oder der Befestigungseinheit gefertigt sein, oder nachträglich an einen Grundkörper der Anwendungseinheit angespritzt sein.

Vorzugsweise gehen Materialien gespritzter Borsten bei einem Spritzgussprozess, insbesondere einem Zwei- und/oder Mehrkomponentenspritzgießen, keinen Materialschluss mit anderen Weichkomponenten und/oder Hartkomponenten des Mundhygienemittels ein. Bevorzugt werden gespritzte Borsten vielmehr mittels eines Formschlusses, beispielsweise mittels zumindest eines Hinterschnitts und/oder zumindest eines Durchbruchs und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Es ist jedoch auch eine Verbindung mittels zumindest eines Materialschlusses denkbar.

Für sämtliche erwähnte mögliche Spritzgussprozesse ist grundsätzlich ein Ein-, Zwei- und/oder Mehrkomponentenspritzguss denkbar. Verwendete Materialien, insbesondere unterschiedlicher Weichkomponenten und/oder Hartkomponenten, können hierbei, wie erwähnt, stoffschlüssig und/oder formschlüssig verbunden werden und/oder sein. Auch eine Ausbildung von gelenkigen Verbindungen mittels geeigneter Spritzgussschritte ist denkbar. Es kommen grundsätzlich beispielsweise Heißkanalverfahren, Kaltkanalverfahren und/oder Co-Injektionsverfahren infrage.

Alternativ oder zusätzlich zu einem als Bürstenkopf ausgebildeten Reinigungselement kann die Aufsteckbürste auch zumindest einen Zungenreiniger und/oder zumindest ein Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein. Ferner sind verschiedene Ausgestaltungen für die Borsten des Bürstenkopfs denkbar. Vorzugsweise können die Borsten von gespritzten Borsten gebildet sein, welche im Unterschied zu konventionellen, extrudierten Borsten mittels Spritzguss hergestellt sind. Es sind verschiedene, einem Fachmann als sinnvoll erscheinende Materialien für gespritzte Borsten denkbar. Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien denkbar, beispielsweise thermoplastische Polyester-Elastomere (TPE-E), thermoplastische Polyamid-Elastometer (TPE-A) oder dergleichen. Materialien für gespritzt Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-Härte eines Materials gespritzter Borsten vorteilhaft höher als eine Shore-Härte übriger verwendeter Weichkomponenten, beispielsweise für Griffelemente, Massageelemente, weitere Reinigungselemente oder dergleichen. Während des Spritzgussprozesses, insbesondere des zwei- oder Mehrkomponentenspritzgussprozesses, gehen Materialien für gespritzte Borsten in der Regel mit den anderen eingesetzten Weich- und/oder Hartmaterialien keinen Materialschluss ein. Folglich wird für allfällige Verbindungen mit anderen Hart- bzw. Weichmaterialien ein Formschluss vorgesehen, wie beispielsweise mittels eines Hinterschnitts und/oder in Form von Durchbrüchen und/oder in Form von teilweisen und/oder vollständigen Umspritzungen. Das als zweites verspritzte Material für gespritzte Borsten schwindet bei der Abkühlung auf das erste verspritzte Hart- oder Weichmaterial und bildet dann insbesondere eine Schwundverbindung.

Grundsätzlich ist ferner eine Verwendung wasserlöslicher Polymere denkbar, beispielsweise für Hartkomponenten, Weichkomponenten, gespritzte Borsten oder andere Elemente des Mundhygienemittels. Ebenso können Biokunststoffe herangezogen werden, welche insbesondere aus nachwachsenden Rohstoffen gewonnen sein können. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze/der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können.

Ferner geht die Erfindung aus von einem elektrischen Zahnbürstenhandteil mit zumindest einer Schnittstelle zu einer Kopplung mit einer Aufsteckbürste, insbesondere nach einem der vorhergehenden Ansprüche, mit zumindest einem Gehäuse, mit zumindest einer in dem Gehäuse aufgenommenen Antriebseinheit zu einem Antrieb der Schnittstelle und mit zumindest einem Energiespeicher zu einer Versorgung der Antriebseinheit mit Energie. Es wird vorgeschlagen, dass das elektrische Zahnbürstenhandteil zumindest eine, in dem Gehäuse angeordnete, feste, insbesondere einstückig ausgeführte, Rahmeneinheit aufweist, welche zumindest teilweise die Antriebseinheit und den Energiespeicher aufnimmt. Vorzugsweise erstreckt sich die Rahmeneinheit axial über die gesamte Antriebseinheit und den gesamten Energiespeicher. Bevorzugt ist die Antriebseinheit insbesondere von einem Motor gebildet. Ferner ist der Energiespeicher insbesondere von einem Akkumulator gebildet. Grundsätzlich wäre jedoch auch eine andere, einem Fachmann als sinnvoll erscheinende Ausgestaltung des Energiespeichers denkbar, wie beispielsweise als Batterie. Vorzugsweise ist die Rahmeneinheit insbesondere sowohl zu einer Aufnahme einer einzelnen Energiespeicherzelle, wie insbesondere einer AA-Energiespeicherzelle, als auch zu einer Aufnahme von drei Energiespeicherzellen gleichzeitig, insbesondere von drei AAA-Energiespeicherzellen, vorgesehen. Bevorzugt ist für drei Energiespeicherzellen ein Rahmen vorgesehen, welcher die drei Energiespeicherzellen aufnimmt und in einen Aufnahmebereich der Rahmeneinheit für die einzelne Energiespeicherzelle passt.

Unter einem "Gehäuse" soll in diesem Zusammenhang insbesondere eine schützende Außenhülle des Zahnbürstenhandteils verstanden werden. Vorzugsweise umgibt das Gehäuse einen wesentlichen Teil des Zahnbürstenhandteils. Bevorzugt weist das Gehäuse zudem einen Griffbereich auf. Vorzugsweise bildet das Gehäuse einen Griff des Zahnbürstenhandteils aus. Das Gehäuse ist vorzugsweise von einem Kunststoffgehäuse gebildet. Grundsätzlich wäre jedoch auch ein anderes, einem Fachmann als sinnvoll erscheinendes Material denkbar. Ferner kann das Gehäuse sowohl einstückig, als auch insbesondere zweischalig ausgeführt sein. Vorzugsweise weist das Gehäuse zumindest aus einer Hartkomponente bestehende Bauteile, welche eine strukturtragende Funktion aufweisen, auf. Besonders bevorzugt besteht das Gehäuse insbesondere aus Hartkomponenten und Weichkomponenten, wobei mittels den Weichkomponenten insbesondere Griffflächen und Schaltflächen ausgebildet sind. Vorzugsweise bilden die Weichkomponenten eine Umspritzung der Hartkomponenten aus. Ferner soll in diesem Zusammenhang unter einer "festen Rahmeneinheit" insbesondere eine eine Stützstruktur ausbildende Einheit verstanden werden, die einstückig ausgeführt ist und/oder zumindest lediglich aus fest miteinander verbundenen Teilen besteht. Die feste Rahmeneinheit ist insbesondere von mehreren voneinander getrennten Einzelrahmen verschieden. Vorzugsweise bildet die Rahmeneinheit mehrere Aufnahmebereiche aus, insbesondere zumindest für die Antriebseinheit und den Energiespeicher, welche, insbesondere sowohl in einem montierten Zustand, als auch in einem unmontierten Zustand der Rahmeneinheit, definiert relativ zueinander positioniert sind. Die feste Rahmeneinheit ist insbesondere zu einer Ausbildung eines vorgefertigten Moduls vorgesehen, welches an einem Stück in das Gehäuse eingebaut/eingebracht werden kann.

Durch die erfindungsgemäße Ausgestaltung des elektrischen Zahnbürstenhandteils kann insbesondere eine vorteilhafte Montage des Zahnbürstenhandteils erreicht werden. Vorzugsweise kann durch die Rahmeneinheit insbesondere eine Vormontage der Bauteil in die Rahmeneinheit erreicht werden. Hierdurch kann insbesondere die Rahmeneinheit vollständig vormontiert in das Gehäuse eingesetzt werden, wodurch Montagefehler vermieden werden können. Vorzugsweise kann eine Verkabelung des elektrischen Zahnbürstenhandteils, insbesondere zumindest der Antriebseinheit und des Energiespeichers, vorzugsweise vollständig, außerhalb des Gehäuses erfolgen.

Des Weiteren wird vorgeschlagen, dass das elektrische Zahnbürstenhandteil zumindest eine Ladespule zu einem Aufladen des Energiespeichers aufweist, welche in der festen Rahmeneinheit aufgenommen ist. Vorzugsweise weist die Rahmeneinheit einen Aufnahmebereich zu einer positionsfesten Aufnahme der Ladespule, insbesondere zumindest relativ zu dem Energiespeicher und/oder der Antriebseinheit, auf. Dadurch kann insbesondere eine vorteilhaft genaue Ausrichtung der Bauteile des Zahnbürstenhandteils relativ zueinander realisiert werden. Ferner kann dadurch eine vorteilhaft einfache Montage erreicht werden. Es kann insbesondere erreicht werden, dass die Rahmeneinheit vollständig vormontiert in das Gehäuse eingesetzt werden kann. Unter einer "Ladespule" soll in diesem Zusammenhang insbesondere eine Induktionsspule zu einer kabellosen Energieübertragung verstanden werden. Vorzugsweise wird in die Ladespule in einem Ladezustand mittels eines sich ändernden Magnetfelds eine Spannung induziert, mittels welcher der Energiespeicher geladen werden kann.

Es wird ferner vorgeschlagen, dass das elektrische Zahnbürstenhandteil eine Leiterplatte zu einer Steuerung der Antriebseinheit aufweist, welche zumindest teilweise formschlüssig durch die Rahmeneinheit aufgenommen ist und sich zumindest über einen Großteil einer axialen Erstreckung der Rahmeneinheit erstreckt. Vorzugsweise erstreckt sich die Leiterplatte über zumindest 50%, vorzugsweise über zumindest 70% und besonders bevorzugt über zumindest 90% einer axialen Erstreckung der Rahmeneinheit. Vorzugsweise weist die Rahmeneinheit eine axiale Erstreckung von zumindest 130 mm, vorzugsweise von zumindest 140 mm und bevorzugt von maximal 200 mm und besonders bevorzugt von maximal 170 mm auf. Ferner weist die Rahmeneinheit insbesondere eine Breite von zumindest 10 mm, vorzugsweise von zumindest 13 mm und bevorzugt von maximal 30 mm, besonders bevorzugt von maximal 25 mm auf. Zudem weist die Rahmeneinheit ferner insbesondere eine Höhe von zumindest 15 mm, vorzugsweise von zumindest 18 mm und bevorzugt von maximal 35 mm, besonders bevorzugt von maximal 28 mm auf. Bevorzugt ist die Leiterplatte insbesondere mittels Halteklammern der Rahmeneinheit formschlüssig an der Rahmeneinheit gehalten. Besonders bevorzugt ist die Leiterplatte von einer Printplatte gebildet. Es wäre jedoch auch eine andere, einem Fachmann als sinnvoll erscheinende Ausgestaltung der Leiterplatte denkbar. Vorzugsweise bildet die Leiterplatte eine Steuer- und/oder Regeleinheit und/oder eine Bedieneinheit des Zahnbürstenhandteils aus. Die Leiterplatte ist insbesondere zu einer Verbindung und Steuerung der elektrischen Funktionselemente des Zahnbürstenhandteils vorgesehen. Dadurch kann insbesondere eine großflächige Leiterplatte bereitgestellt werden. Hierdurch kann insbesondere eine vorteilhafte Anbindung an die Leiterplatte ermöglicht werden. Vorzugsweise kann dadurch insbesondere eine vollständige Integration der elektrisch funktionellen Teile in die Rahmeneinheit erreicht werden. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit zumindest einer elektronischen Schaltung verstanden werden, welche vorzugsweise aus Spannungs- und Vergleichsregelbausteinen besteht. Grundsätzlich kann die Steuerelektronik jedoch auch komplexer aufgebaut sein, wie insbesondere durch die Nutzung einer Prozessoreinheit und einer Speichereinheit sowie mit einem in der Speichereinheit gespeicherten Betriebsprogramm.

Vorzugsweise weist die Rahmeneinheit zu einer formschlüssigen Aufnahme der Leiterplatte zumindest zwei hakenförmige Formschlusselemente auf, welche dazu vorgesehen sind, die Leiterplatte in einem montierten Zustand teilweise zu übergreifen. Besonders bevorzugt weist die Leiterplatte für eine Montage an einer Außenkante zu den Formschlusselementen korrespondierende Ausnehmungen auf, über welche die Leiterplatte zu einer Montage an den Formschlusselementen vorbei in eine Endlage bewegt werden kann. Vorzugsweise wird die Leiterplatte bei einer Montage zu einer Endlage versetzt auf die Rahmeneinheit aufgesetzt, wobei die Leiterplatte mittels der Ausnehmungen an den Formschlusselementen vorbeigeführt werden kann. Anschließend wird die Leiterplatte insbesondere unter die Formschlusselemente geschoben und dadurch fixiert. Bevorzugt dienen die Formschlusselemente zusätzlich als Niederhalter, welche die Leiterplatte kraftschlüssig halten.

Es wird weiter vorgeschlagen, dass die Antriebseinheit zumindest einen Rotor aufweist, der zumindest ein einstückig ausgeführtes Käfigelement umfasst, welches zumindest einen Aufnahmebereich zu einer Aufnahme von zumindest einem Magneten aufweist. Vorzugsweise umfasst das Käfigelement zumindest zwei Aufnahmebereiche, die jeweils zu einer Aufnahme eines Magneten vorgesehen sind. Bevorzugt sind die Magneten jeweils von einem Permanentmagneten gebildet. Grundsätzlich wäre jedoch auch eine andere, einem Fachmann als sinnvoll erscheinende Ausgestaltung des Magneten denkbar. Bevorzugt ist der Rotor insbesondere zu einer Durchführung einer oszillierenden Bewegung vorgesehen. Besonders bevorzugt ist der Rotor insbesondere mit der Schnittstelle, vorzugsweise mit einer Achse der Schnittstelle gekoppelt, welche zu einer Übertragung einer Antriebsbewegung auf eine Aufsteckbürste vorgesehen ist. Dadurch kann insbesondere ein vorteilhafter Rotor bereitgestellt werden. Vorzugsweise kann dadurch insbesondere ein Rotor bereitgestellt werden, der zu einer direkten Aufnahme des zumindest einen Magneten vorgesehen ist. Hierdurch kann insbesondere eine Anzahl an Bauteilen vorteilhaft gering gehalten werden. Unter einem "Käfigelement" soll in diesem Zusammenhang insbesondere ein Element verstanden werden, welches zu einer umgreifenden Aufnahme des zumindest einen Magneten vorgesehen ist. Vorzugsweise bildet das Käfigelement insbesondere einen Aufnahmebereich aus, welcher in zumindest einer Ebene vollständig materiell von dem Käfigelement umschlossen ist.

Zudem wird vorgeschlagen, dass das Käfigelement einen, zumindest einen Aufnahmebereich für den zumindest einen Magneten umfassenden Grundkörper und auf beiden Seiten des Grundkörpers angeordnete Achsfortsätze aufweist, die eine Rotationsachse des Rotors ausbilden. Vorzugsweise umfasst der Grundkörper zumindest zwei nebeneinander angeordnete Aufnahmebereiche. Bevorzugt dienen die Achsfortsätze insbesondere zu einer Lagerung des Käfigelements in der Rahmeneinheit. Vorzugsweise ist der Grundkörper des Käfigelements über die Achsfortsätze drehbar an der Rahmeneinheit gelagert. Besonders bevorzugt dient zumindest einer der Achsfortsätze zudem zu einer Übertragung einer Antriebsbewegung des Grundkörpers auf die Schnittstelle. Vorzugsweise ist einer der Achsfortsätze direkt mit einer Achse der Schnittstelle gekoppelt. Dadurch kann insbesondere eine vorteilhafte Lagerung des Käfigelements erreicht werden. Ferner kann insbesondere eine Anzahl von Bauteilen gering gehalten werden. Es kann ferner eine vorteilhaft einfache und schnelle Montage des Zahnbürstenhandteils erreicht werden. Unter einer "Achse der Schnittstelle" soll in diesem Zusammenhang insbesondere eine aus einem Gehäuse des Zahnbürstenhandteils ragende Welle verstanden werden, welche zu einer direkten Übertragung einer Antriebsbewegung der Antriebseinheit des Zahnbürstenhandteils auf die Aufsteckbürste vorgesehen ist. Vorzugsweise ist die Achse der Schnittstelle insbesondere von einer Metallwelle gebildet. Grundsätzlich wäre jedoch auch eine andere, einem Fachmann als sinnvoll erscheinende Ausgestaltung der Achse denkbar. Das Käfigelement ist vorzugsweise aus einer Hartkomponente gebildet.

Ferner wird vorgeschlagen, dass der Rotor zumindest eine metallische Abdeckung aufweist, welche zu einer Verschließung des Aufnahmebereichs des Käfigelements vorgesehen ist. Vorzugsweise ist der Aufnahmebereich des Käfigelements zu zumindest einer Seite, vorzugsweise zu zumindest zwei gegenüberliegenden Seiten, hin geöffnet. Bevorzugt weist der Rotor insbesondere zwei Abdeckungen auf, die von gegenüberliegenden Seiten mit dem Grundkörper des Käfigelements verbunden werden und die geöffneten Seiten der Aufnahmebereiche verdecken. Besonders bevorzugt sind die Abdeckungen mit dem Käfigelement verschraubt oder verklebt. Dadurch kann insbesondere eine vorteilhaft sichere Aufnahme des zumindest einen Magnets erreicht werden. Vorzugsweise kann dadurch insbesondere eine vorteilhaft positionsgenaue Aufnahme des Magneten und eine bessere Verteilung des Magnetfelds erreicht werden. Ferner kann eine vorteilhaft einfache und leichte Montage des Zahnbürstenhandteils erreicht werden.

Des Weiteren wird vorgeschlagen, dass die Antriebseinheit zumindest eine Rückstellfeder aufweist, welche mit einem ersten Ende drehfest mit einem ersten Achsfortsatz des Rotors gekoppelt ist und mit einem zweiten Ende über ein Fixierelement variabel drehfest an der Rahmeneinheit fixiert ist. Vorzugsweise greift die Rückstellfeder mit einem ersten Ende in eine radial durch eine Drehachse des Rotors verlaufende Nut des ersten Achsfortsatzes des Käfigelements ein. Bevorzugt ist die Rückstellfeder insbesondere von einer Schraubenfeder gebildet. Es wäre jedoch auch eine andere, einem Fachmann als sinnvoll erscheinende Ausgestaltung der Rückstellfeder denkbar, wie beispielsweise als Spiralfeder. Dadurch kann insbesondere vorteilhaft eine selbstständige Rückstellung des Rotors erreicht werden. Es kann insbesondere erreicht werden, dass die Achse der Schnittstelle jeweils immer in derselben Stellung stehen bleibt. Hierdurch kann eine einfache, immergleiche Montage der Aufsteckbürste erreicht werden, wodurch ein hoher Komfort erreicht werden kann. Ferner kann vorteilhaft eine Rückstellposition optimal eingestellt werden. Produktionsunterschiede können dadurch vorteilhaft ausgeglichen werden. Des Weiteren kann eine Nachstellung der Ausgangslage realisiert werden. Hierdurch kann insbesondere eine verbesserte Positionierung des Rotors in einer Ruhelage erreicht werden. Ferner kann eine vorteilhaft ruhig laufende Antriebseinheit bereitgestellt werden. Unter einer "Rückstellfeder" soll in diesem Zusammenhang insbesondere ein Federelement verstanden werden, welches dazu vorgesehen ist, den Rotor nach einer Verdrehung in eine definierte Ausgangslage zurück zu bewegen. Vorzugsweise ist das Federelement zudem zu einer Dämpfung der oszillierenden Bewegung des Rotors vorgesehen. Insbesondere ist die Rückstellfeder dazu vorgesehen, die Achse der Schnittstelle nach einem Abschalten der Antriebseinheit in eine Ausgangslage zu bewegen. Ferner soll in diesem Zusammenhang unter einem "Fixierelement" insbesondere ein Element verstanden werden, welches dazu vorgesehen ist, ein Ende der Rückstellfeder gegenüber einem festen Bauteil, wie insbesondere der Rahmeneinheit, zu fixieren, insbesondere zu verklemmen. Vorzugsweise ist das Fixierelement insbesondere dazu vorgesehen das zweite Ende der Rückstellfeder durch ein Andrücken des Endes gegen die Rahmeneinheit zu fixieren. Bevorzugt kann das zweite Ende der Rückstellfeder in verschiedenen Positionen fixiert werden. Dabei soll darunter, dass "die Rückstellfeder variabel drehfest an der Rahmeneinheit fixiert ist" insbesondere verstanden werden, dass die Rückstellfeder variabel drehfest zumindest hinsichtlich einer Drehlage an der Rahmeneinheit fixiert ist. Vorzugsweise soll darunter insbesondere verstanden werden, dass die Rückstellfeder, insbesondere mittels des Fixierelements, in verschiedenen Drehlagen relativ zu der Rahmeneinheit drehfest an der Rahmeneinheit fixierbar ausgeführt ist. Insbesondere kann mittels des Fixierelements eine gesamte Drehlage der Rückstellfeder relativ zu der Rahmeneinheit eingestellt werden. Es kann insbesondere indirekt eine Ausgangslage des Rotors relativ zu der Rahmeneinheit eingestellt werden. Ferner soll dabei unter einem "Federelement" insbesondere ein makroskopisches Element verstanden werden, das zumindest eine Erstreckung und/oder eine relative Drehlage der Enden aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung und/oder der relativen Drehlage abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden.

Es wird ferner vorgeschlagen, dass die Antriebseinheit von einem Schwingankermotor gebildet ist. Vorzugsweise wird der Schwingankermotor sinusförmig angesteuert. Hierdurch kann insbesondere eine verbesserte Bewegung des Rotors der Antriebseinheit erreicht werden. Es kann insbesondere eine vorteilhaft ruhige Bewegung des Rotors erreicht werden. Ferner können Geräusche der Antriebseinheit zuverlässig vermieden werden. Unter einem "Schwingankermotor" soll in diesem Zusammenhang insbesondere ein Antrieb verstanden werden, welcher zu einer elektromagnetischen Erzeugung einer Schwingungsbewegung, insbesondere Oszillationsbewegung, vorgesehen ist. Der Antrieb umfasst insbesondere einen positionsfesten Eisenkern mit einer Erregerspule und einen beweglichen Rotor, welcher zumindest einen Magneten umfasst. Vorzugsweise ist der Rotor durch eine Rückstellfeder in Ruhelage gehalten.

Erfindungsgemäß weist die Antriebseinheit zumindest einen Stator auf, der einen einstückig ausgeführten Träger, ein in den Träger eingesetztes Blechpaket und eine das Blechpaket umgreifende Spule aufweist. Vorzugsweise bildet das Blechpaket einen Eisenkern des Stators aus, während die Spule eine Erregerspule des Stators ausbildet. Bevorzugt wird die Spule des Stators während eines Betriebs sinusförmig angesteuert. Besonders bevorzugt sind die Spule und das Blechpaket kontaktlos. Vorzugsweise ist der Stator insbesondere von einem vorgefertigten Modul gebildet, welches in einem Stück eingesetzt werden kann. Dadurch kann insbesondere ein vorteilhaft kompakter und leicht zu montierender Stator bereitgestellt werden. Es kann insbesondere eine Anzahl an Bauteilen gering gehalten werden. Ferner kann dadurch insbesondere ein vorteilhaft modularer Stator bereitgestellt werden. Unter einem "Blechpaket" soll in diesem Zusammenhang insbesondere ein Paket aus mehreren miteinander verbundenen und/oder aneinander anliegenden Blechteilen verstanden werden. Vorzugsweise weisen die Blechteile jeweils dieselbe Form auf und sind in derselben Ausrichtung dicht an dicht zu einem Paket verbunden.

Zudem wird vorgeschlagen, dass der Träger der Antriebseinheit direkt mit der Rahmeneinheit verbunden ist und einen Rotor der Antriebseinheit von zumindest einer Seite abdeckt. Vorzugsweise ist der Träger der Antriebseinheit direkt an die Rahmeneinheit angeschraubt. Es wäre jedoch auch eine andere, einem Fachmann als sinnvoll erscheinende Art der Verbindung denkbar. Erfindungsgemäß ist der Rotor der Antriebseinheit insbesondere in einem Aufnahmebereich der Rahmeneinheit aufgenommen, wobei der Aufnahmebereich zu einer, bevorzugt zu zumindest zwei Seiten hin, geöffnet ist. Der Träger ist insbesondere dazu vorgesehen, zumindest eine geöffnete Seite des Aufnahmebereichs der Rahmeneinheit zu verschließen. Vorzugsweise wird der Rotor der Antriebseinheit in einem montierten Zustand zumindest teilweise von dem Blechpaket des Stators umgriffen. Dadurch kann insbesondere ein vorteilhaft leicht zu montierendes Zahnbürstenhandteil bereitgestellt werden. Es kann insbesondere eine vorteilhaft einfache und zuverlässige Ausrichtung des Stators gegenüber dem Rotor während einer Montage erreicht werden. Hierdurch können insbesondere Montagefehler vermieden werden.

Ferner wird vorgeschlagen, dass das elektrische Zahnbürstenhandteil zumindest ein Anschlagselement aufweist, welches dazu vorgesehen ist, eine Verdrehung eines Rotors der Antriebseinheit aus einer Ausgangslage heraus zu begrenzen. Vorzugsweise ist das Anschlagselement dazu vorgesehen, eine oszillierende Bewegung des Rotors zu begrenzen. Bevorzugt dient das Anschlagselement insbesondere zu einer Bereitstellung einer immergleichen Bewegung des Rotors. Vorzugsweise ist das Anschlagselement insbesondere von einem mechanischen Anschlag gebildet, an welchen der Rotor bei einer Bewegung bei Erreichen einer Endlage mechanisch anschlägt. Hierdurch kann eine Bewegung des Rotors gezielt begrenzt werden. Es kann insbesondere gezielt eine Bewegung des Rotors definiert begrenzt werden. Insbesondere kann dadurch eine Beschädigung der Rückstellfeder, insbesondere durch Überbelastung und/oder Überdrehung, verhindert werden. Ferner kann ein manuelles Überdrehen des Rotors, beispielsweise durch einen Bediener, durch Verdrehen der Aufsteckbürste, vermieden werden. Es kann insbesondere eine Beschädigung des Zahnbürstenhandteils gezielt vermieden werden.

Des Weiteren wird vorgeschlagen, dass das zumindest eine Anschlagselement von einem fest mit dem Rotor der Antriebseinheit verbundenen Stift gebildet ist, welcher mit einem Ende elastisch an der Rahmeneinheit gelagerter ist. Vorzugsweise ist der Stift radial in eine Öffnung des Rotors, insbesondere des Achsfortsatzes, besonders bevorzugt des zweiten Achsfortsatzes, eingesteckt. Bevorzugt ist der Stift positionsfest an dem Rotor angeordnet und ragt insbesondere radial aus dem Rotor. Besonders bevorzugt ist der Stift mit einem von dem Rotor angewandten Ende über eine elastische Muffe, insbesondere über eine Gummimuffe, in der Rahmeneinheit gelagert. Hierdurch kann ein vorteilhaft einfaches Anschlagselement realisiert werden. Es kann insbesondere ein vorteilhaft kompaktes Anschlagselement bereitgestellt werden.

Es wird ferner vorgeschlagen, dass das elektrische Zahnbürstenhandteil zumindest eine Rotorabdeckung aufweist, welche fest mit der Rahmeneinheit verbunden ist und zusammen mit der Rahmeneinheit zu einer Lagerung und/oder Fixierung eines Rotors der Antriebseinheit vorgesehen ist. Vorzugsweise ist der Rotor der Antriebseinheit insbesondere in einem Aufnahmebereich der Rahmeneinheit aufgenommen, wobei der Aufnahmebereich vorzugsweise zu einer, vorzugsweise zu zumindest zwei, Seiten hin geöffnet ist. Bevorzugt wird zumindest eine geöffnete Seite des Aufnahmebereichs der Rahmeneinheit von einem Träger der Antriebseinheit verschlossen, wobei die Rotorabdeckung insbesondere die zweite geöffnete Seite verschließt. Vorzugsweise ist die Rotorabdeckung mit der Rahmeneinheit verschraubt. Es wäre jedoch auch eine andere, einem Fachmann als sinnvoll erscheinende Art der Verbindung denkbar. Besonders bevorzugt bilden sowohl die Rotorabdeckung als auch die Rahmeneinheit zumindest eine halbkreisförmige Achsaufnahme zu einer Aufnahme von zumindest einem Achsfortsatz des Rotors auf. Bevorzugt ist der Rotor direkt zwischen der Rahmeneinheit und der Rotorabdeckung gelagert. Hierdurch kann eine vorteilhaft einfache und schnelle Montage erreicht werden. Es kann insbesondere eine vorteilhafte Abdeckung und Lagerung des Rotors bereitgestellt werden. Ferner kann insbesondere ein vorteilhaft schneller und positionsgenauer Einbau des Rotors gewährleistet werden. Vorzugsweise dienen die Rotorabdeckung und die Rahmeneinheit zudem zu einer Lagerung und/oder Abdichtung der Achse der Schnittstelle. Die Achse ist vorzugsweise über eine Dichtung in einer Achsaufnahme gelagert, die sich aus einer halbkreisförmigen Achsaufnahme der Rahmeneinheit und einer halbkreisförmigen Achsaufnahme der Rotorabdeckung zusammensetzt.

Es wird weiter vorgeschlagen, dass das zumindest eine Anschlagselement einstückig mit der Rotorabdeckung ausgeführt ist. Vorzugsweise bildet das Anschlagselement einen einstückig mit der Rotorabdeckung ausgebildeten Fortsatz aus, welcher dem Rotor zugewandt ist. Bevorzugt ist die Form des Fortsatzes dabei an die Endlagen des Rotors angepasst. Vorzugsweise ist das Anschlagselements insbesondere von einer Ausformung in der Rotorabdeckung gebildet. Dadurch kann ein vorteilhaft einfaches Anschlagselement realisiert werden. Es kann insbesondere ein vorteilhaft leicht zu montierendes Anschlagselement bereitgestellt werden. Ferner kann insbesondere ein vorteilhaft robustes und leicht herzustellendes Anschlagselement bereitgestellt werden. Vorzugsweise kann insbesondere auf ein separates Anschlagselement verzichtet werden. Es muss insbesondere lediglich eine Form der Rotorabdeckung angepasst werden. Zudem ist ein Verfahren zur Herstellung des elektrischen Zahnbürstenhandteils bekannt. Ferner geht die Erfindung aus von einer elektrischen Zahnbürste mit dem elektrischen Zahnbürstenhandteil und mit der Aufsteckbürste.

Des Weiteren ist ein System mit einem ersten elektrischen Zahnbürstenhandteil mit einer ersten Schnittstelle, mit einem zweiten elektrischen Zahnbürstenhandteil mit einer zweiten, von der ersten Schnittstelle verschiedenen Schnittstelle und mit der Aufsteckbürste mit einer Schnittstellenaufnahme zu einer Aufnahme der ersten Schnittstelle und der zweiten Schnittstelle bekannt. Vorzugsweise weisen die erste Schnittstelle und die zweite Schnittstelle differierende Formen und/oder Dimensionierungen auf, wobei die Aufsteckbürste zu einer verliersicheren Aufnahme der ersten Schnittstelle und der zweiten Schnittstelle geeignet ist. Durch die Ausgestaltung des Systems kann die Aufsteckbürste insbesondere für verschiedene Zahnbürstenhandteile genutzt werden. Es kann insbesondere eine universelle Nutzung der Aufsteckbürste erreicht werden.

Die Begriffe "axial" und "radial" sind in diesem Zusammenhang insbesondere auf eine Haupterstreckungsachse der Aufsteckbürste und/oder des elektrischen Zahnbürstenhandteils bezogen, sodass der Ausdruck "axial" insbesondere eine Richtung bezeichnet, die parallel oder koaxial zu einer der Haupterstreckungsachsen verläuft. Ferner bezeichnet der Ausdruck "radial" im Folgenden insbesondere eine Richtung, die senkrecht zu einer der Haupterstreckungsachsen verläuft. Vorzugsweise verläuft die Haupterstreckungsachse der Aufsteckbürste parallel zu der Haupterstreckungsachse des elektrischen Zahnbürstenhandteils. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt, und insbesondere einen geometrischen Mittelpunkt des Objekts schneidet.

Ferner sollen die Begriffe "Oberseite" oder "Vorderseite" der Zahnbürste in diesem Zusammenhang insbesondere als jene Seite der Zahnbürste verstanden werden, auf welcher der Daumen aufgelegt wird. Die Ober - oder Vorderseite ist normalerweise auch jene Seite, auf welche das Borstenfeld, insbesondere des Bürstenkopfes der Aufsteckbürste, gerichtet ist. Als "Unterseite" oder "Rückseite" der Zahnbürste soll insbesondere jene Seite verstanden werden, die dem Borstenfeld des Bürstenkopfs abgewandt ist. Des Weiteren sind die Begriffe "linke Seite" und "rechte Seite" jeweils auf eine Betrachtung der Vorderseite bezogen. Als "Unterseite des Kopfplättchens" wird jene Seite bezeichnet, welche in die Ausnehmung des Grundkörpers gelegt wird und in Richtung Unterseite der Zahnbürste zeigt. Entsprechend zeigt die "Oberseite des Kopfplättchens" in Richtung der Oberseite der Zahnbürste.

Die Aufsteckbürste, das erfindungsgemäße elektrische Zahnbürstenhandteil, die erfindungsgemäße elektrische Zahnbürste, das System sowie das Verfahren sollen hierbei nicht auf die oben beschriebene Anwendung und Ausführungsform beschränkt sein. Insbesondere können die Aufsteckbürste, das erfindungsgemäße elektrische Zahnbürstenhandteil, die erfindungsgemäße elektrische Zahnbürste, das System sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen. Der Fachmann wird die Merkmale daher zweckmäßigerweise auch einzeln betrachten und zu sinnvollen weiteren Kombinationen zusammenfassen.

Es zeigen:
- Fig. 1: eine Aufsteckbürste mit einem Bürstenkopf und mit einer Schnittstellenaufnahme in einer ersten 3D-Ansicht,
- Fig. 2: die Aufsteckbürste mit der Schnittstellenaufnahme in einer zweiten 3D-Ansicht,
- Fig. 3: die Aufsteckbürste in einer dritten 3D-Ansicht,
- Fig. 4: die Aufsteckbürste mit dem Bürstenkopf in einer Draufsicht von vorne,
- Fig. 5: die Aufsteckbürste mit dem Bürstenkopf in einer Draufsicht von der Seite,
- Fig. 6: die Aufsteckbürste in einer Draufsicht von hinten,
- Fig. 7: die Aufsteckbürste in einer Draufsicht entlang einer Längsachse auf die Schnittstellenaufnahme,
- Fig. 8: die Aufsteckbürste in einer Draufsicht entlang einer Längsachse auf den Bürstenkopf,
- Fig. 9: die Aufsteckbürste in einer Längsschnittdarstellung entlang der Schnittlinie IX-IX,
- Fig. 10: die Aufsteckbürste in einer Längsschnittdarstellung entlang der Schnittlinie X-X,
- Fig. 11: die Aufsteckbürste in einer Querschnittdarstellung entlang der Schnittlinie XI-XI,
- Fig. 12: die Aufsteckbürste in einer Querschnittdarstellung entlang der Schnittlinie XII-XII,
- Fig. 13: die Aufsteckbürste in einer Querschnittdarstellung entlang der Schnittlinie XIII-XIII,
- Fig. 14: die Aufsteckbürste in einer Querschnittdarstellung entlang der Schnittlinie XIV-XIV,
- Fig. 15: die Aufsteckbürste in einer Querschnittdarstellung entlang der Schnittlinie XV-XV,
- Fig. 16: ein erfindungsgemäßes Zahnbürstenhandteil mit einem Gehäuse und mit einer Schnittstelle in einer Draufsicht von vorne,
- Fig. 17: das erfindungsgemäße Zahnbürstenhandteil mit dem Gehäuse und mit der Schnittstelle in einer Draufsicht von der Seite,
- Fig. 18: das erfindungsgemäße Zahnbürstenhandteil mit dem Gehäuse und mit der Schnittstelle in einer Draufsicht von hinten,
- Fig. 19: eine elektrische Zahnbürste mit dem elektrischen Zahnbürstenhandteil und mit der Aufsteckbürste in einer ersten 3D-Ansicht,
- Fig. 20: die elektrische Zahnbürste mit dem elektrischen Zahnbürstenhandteil und mit der Aufsteckbürste in einer zweiten 3D-Ansicht,
- Fig. 21: die elektrische Zahnbürste mit dem elektrischen Zahnbürstenhandteil und mit der Aufsteckbürste in einer Draufsicht von vorne,
- Fig. 22: die elektrische Zahnbürste mit dem elektrischen Zahnbürstenhandteil und mit der Aufsteckbürste in einer Teilschnittdarstellung von der Seite
- Fig. 23: die Aufsteckbürste mit einer ersten Borstenfeldanordnung in einer Draufsicht von der Seite,
- Fig. 24: den Bürstenkopf der Aufsteckbürste mit einer alternativen zweiten Borstenfeldanordnung in einer Draufsicht von vorne,
- Fig. 25: den Bürstenkopf der Aufsteckbürste mit einer alternativen dritten Borstenfeldanordnung in einer Draufsicht von vorne,
- Fig. 26: den Bürstenkopf der Aufsteckbürste mit einer alternativen vierten Borstenfeldanordnung in einer Draufsicht von vorne,
- Fig. 27: den Bürstenkopf der Aufsteckbürste mit einer alternativen fünften Borstenfeldanordnung in einer Draufsicht von vorne,
- Fig. 28: den Bürstenkopf der Aufsteckbürste mit einer alternativen sechsten Borstenfeldanordnung in einer Draufsicht von vorne,
- Fig. 29: den Bürstenkopf der Aufsteckbürste mit einer alternativen siebten Borstenfeldanordnung in einer Draufsicht von vorne,
- Fig. 30: den Bürstenkopf der Aufsteckbürste mit einer alternativen achten Borstenfeldanordnung in einer Draufsicht von vorne,
- Fig. 31a: den Bürstenkopf der Aufsteckbürste mit einer alternativen neunten Borstenfeldanordnung in einer Draufsicht von vorne,
- Fig. 31b: den Bürstenkopf der Aufsteckbürste mit dem alternativen neunten Borstenfeldanordnung in einer 3D-Ansicht,
- Fig. 32a: den Bürstenkopf der Aufsteckbürste mit einer alternativen zehnten Borstenfeldanordnung in einer Draufsicht von vorne,
- Fig. 32b: den Bürstenkopf der Aufsteckbürste mit dem alternativen zehnten Borstenfeldanordnung in einer 3D-Ansicht,
- Fig. 33a: den Bürstenkopf der Aufsteckbürste mit einer alternativen elften Borstenfeldanordnung in einer Draufsicht von vorne,
- Fig. 33b: den Bürstenkopf der Aufsteckbürste mit dem alternativen elften Borstenfeldanordnung in einer 3D-Ansicht,
- Fig. 34a: den Bürstenkopf der Aufsteckbürste mit einer alternativen zwölften Borstenfeldanordnung in einer Draufsicht von vorne,
- Fig. 34b: den Bürstenkopf der Aufsteckbürste mit dem alternativen zwölften Borstenfeldanordnung in einer 3D-Ansicht,
- Fig. 35a: den Bürstenkopf der Aufsteckbürste mit einer alternativen dreizehnten Borstenfeldanordnung in einer Draufsicht von vorne,
- Fig. 35b: den Bürstenkopf der Aufsteckbürste mit dem alternativen dreizehnten Borstenfeldanordnung in einer 3D-Ansicht,
- Fig. 36: den Bürstenkopf der Aufsteckbürste mit einer alternativen vierzehnten Borstenfeldanordnung in einer Draufsicht von vorne,
- Fig. 37: den Bürstenkopf der Aufsteckbürste mit einer alternativen fünfzehnten Borstenfeldanordnung in einer Draufsicht von vorne,
- Fig. 38: den Bürstenkopf der Aufsteckbürste mit einer alternativen sechzehnten Borstenfeldanordnung in einer Draufsicht von vorne,
- Fig. 39: den Bürstenkopf der Aufsteckbürste mit einer alternativen siebzehnten Borstenfeldanordnung in einer Draufsicht von vorne,
- Fig. 40: einen Teil des erfindungsgemäßen Zahnbürstenhandteils mit einer Rahmeneinheit, mit einem Energiespeicher, mit einer Antriebseinheit und mit der Schnittstelle in einer ersten 3D-Ansicht,
- Fig. 41: den Teil des erfindungsgemäßen Zahnbürstenhandteils mit der Rahmeneinheit, mit dem Energiespeicher, mit der Antriebseinheit und mit der Schnittstelle in einer zweiten 3D-Ansicht,
- Fig. 42: den Teil des erfindungsgemäßen Zahnbürstenhandteils mit der Rahmeneinheit, mit dem Energiespeicher, mit der Antriebseinheit und mit der Schnittstelle in einer Explosionsdarstellung in der ersten 3D-Ansicht,
- Fig. 43: den Teil des erfindungsgemäßen Zahnbürstenhandteils mit der Rahmeneinheit, mit dem Energiespeicher, mit der Antriebseinheit und mit der Schnittstelle in einer Explosionsdarstellung in der zweiten 3D-Ansicht und
- Fig. 44: einen Teil des erfindungsgemäßen Zahnbürstenhandteils mit der Rahmeneinheit, mit einem alternativen Energiespeicher, mit der Antriebseinheit und mit der Schnittstelle in einer dritten 3D-Ansicht.

### Beschreibung des Ausführungsbeispiels

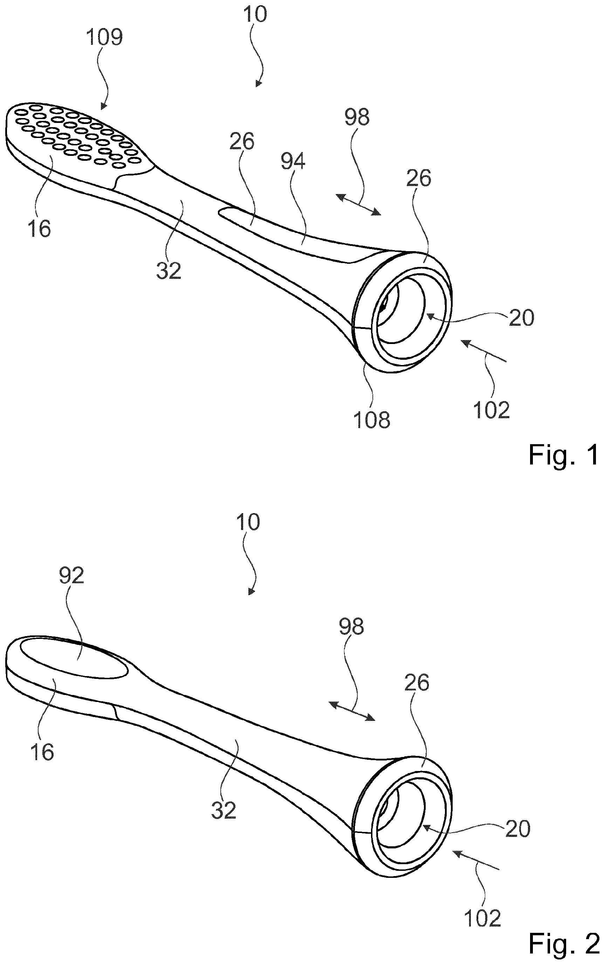

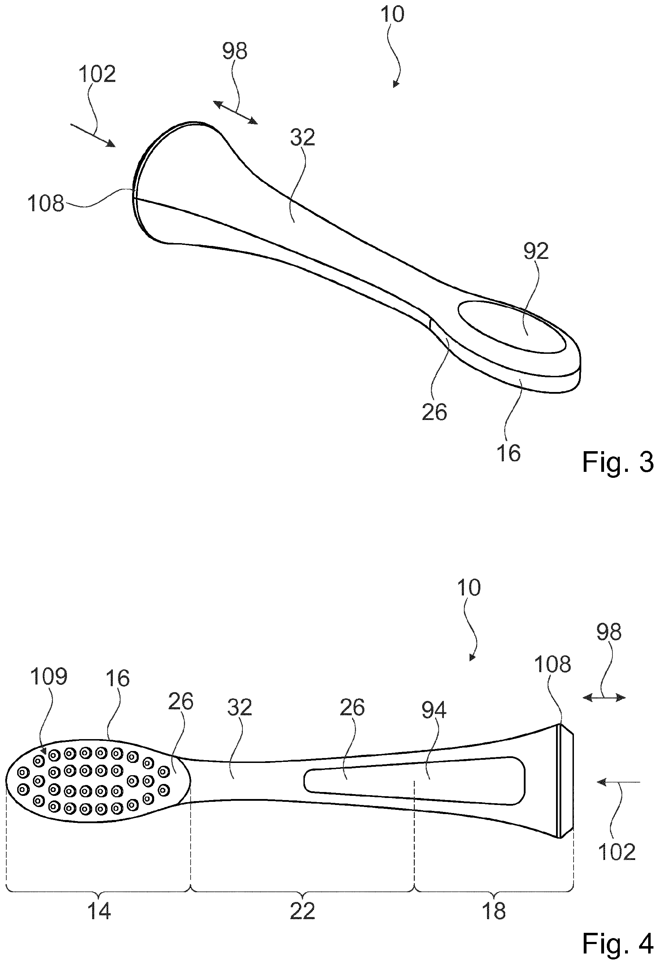

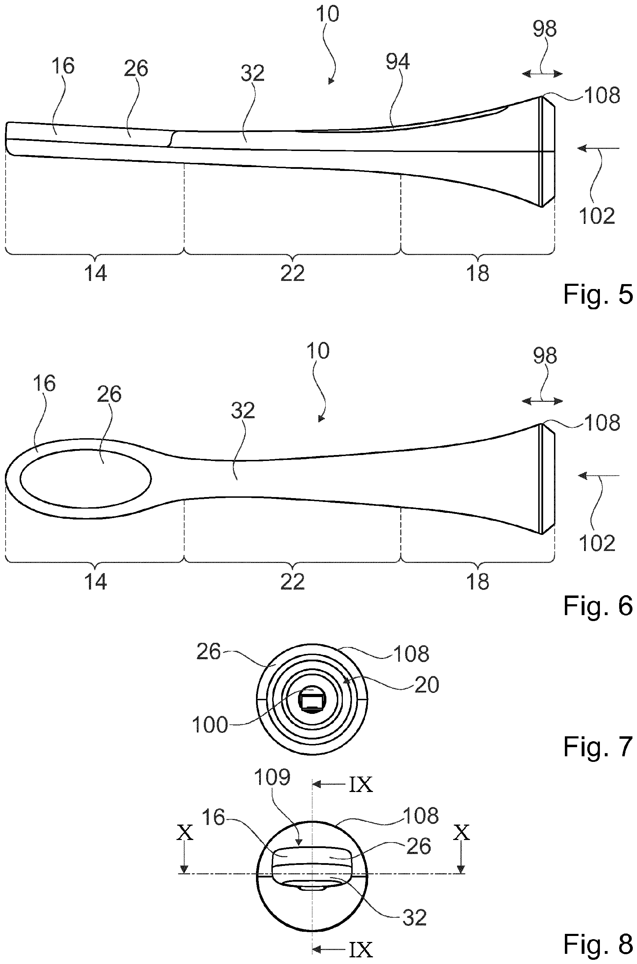

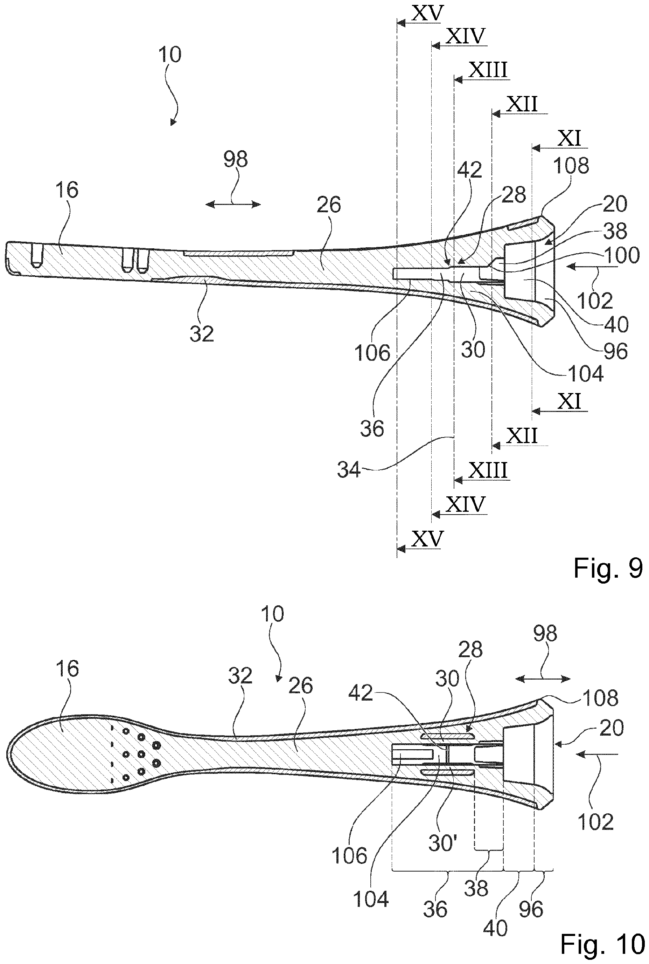

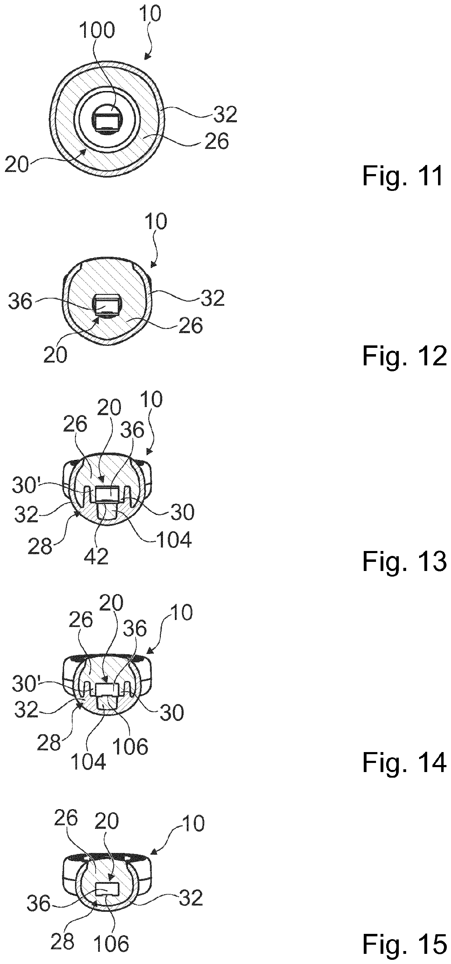

Die Figuren 1 bis 15 zeigen eine Aufsteckbürste 10. Die Aufsteckbürste 10 ist für ein Zahnbürstenhandteil 12 vorgesehen. Die Aufsteckbürste 10 ist für ein elektrisches Zahnbürstenhandteil 12 vorgesehen. Die Aufsteckbürste 10 ist von einer Wechselbürste gebildet. Grundsätzlich ist die Anwendung der Aufsteckbürste 10 und/oder einer Schnittstellenaufnahme 20 bzw. Schnittstelle 24 für elektrische Zahnbürsten 90 mit schwenkender Bewegung oder mit vibrierender Bewegung ausgelegt. Die Aufsteckbürste 10 und/oder die Schnittstellenaufnahme 20 bzw. Schnittstelle 24 kann jedoch auch für andere Produkte eingesetzt werden, wie beispielsweise manuelle Zahnbürsten, wie insbesondere Mehrwegzahnbürsten , wie z.B. Wechselkopfzahnbürsten, alternative elektrische Zahnbürsten, wie insbesondere mit translatorischen und/oder drehenden Bewegungen, mit Aufsteckteilen mit Interdentalreinigern, wie insbesondere Interdentalbürsten mit eingedrehten Borsten und/oder Zungenreiniger.

Im Folgenden wird auf die Figuren 1 bis 15 Bezug genommen, welche unterschiedliche Ansichten der Aufsteckbürste 10 zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Aufsteckbürste 10 weist einen Kopfabschnitt 14 auf. Der Kopfabschnitt 14 umfasst einen Bürstenkopf 16. Ferner weist die Aufsteckbürste 10 einen Aufsteckabschnitt 18 auf. Der Aufsteckabschnitt 18 umfasst eine Schnittstellenaufnahme 20. Des Weiteren weist die Aufsteckbürste 10 einen zwischen dem Kopfabschnitt 14 und dem Aufsteckabschnitt 18 angeordneten Halsabschnitt 22 auf. Der Kopfabschnitt 14, der Aufsteckabschnitt 18 und der Halsabschnitt 22 sind jeweils räumliche Abschnitte der Aufsteckbürste 10. Der Kopfabschnitt 14, der Aufsteckabschnitt 18 und der Halsabschnitt 22 sind jeweils axiale Teilabschnitte der Aufsteckbürste 10. Ferner besteht die Aufsteckbürste 10 vorteilhaft aus genau drei Abschnitten, und zwar dem Kopfabschnitt 14, dem Halsabschnitt 22 und dem Aufsteckabschnitt 18. Die Abschnitte grenzen vorteilhaft direkt aneinander an. Der Kopfabschnitt 14, der Aufsteckabschnitt 18 und der Halsabschnitt 22 erstrecken sich gemeinsam in axialer Richtung über die gesamte Aufsteckbürste 10.

Eine generelle Form der Aufsteckbürste 10 bildet von einer Vorderseite aus betrachtet einen Verlauf von einer größeren Breite im Aufsteckabschnitt 18 zu einer Verengung im Halsabschnitt 22 zu einer größeren Breite im Kopfabschnitt 14. Der Bürstenkopf 16 der Aufsteckbürste 10 weist eine schmale, lange Grundform auf. Der Bürstenkopf 16 der Aufsteckbürste 10 ist von einer Vorderseite aus betrachtet im Wesentlichen elliptisch geformt. Von der Seite weist der Bürstenkopf 16 eine konstante Dicke auf. Es wäre jedoch auch denkbar, dass der Bürstenkopf 16 von der Seite einen Verlauf aufweist, wie beispielsweise eine Wellenform oder eine gegen Halsbereich zunehmende Dicke. Ferner können zusätzliche funktionale Elemente wie beispielsweise Zungenreiniger diese Dimension des Bürstenkopfs 16 beeinflussen. Der Bürstenkopf 16 hat frei von Borsten eine Höhe von 3 mm bis 9 mm, vorzugsweise von 4 mm bis 6 mm. Der Bürstenkopf 16 ist frei von scharfen Kanten. Die Aufsteckbürste 10 ist ferner in dem Halsabschnitt 22 und dem Aufsteckabschnitt 18 im Wesentlichen rotationssymmetrisch geformt, wobei in Richtung des Kopfabschnitts 14 ein fließender Übergang stattfindet und die Rotationssymmetrie verloren geht. Der Übergang zwischen dem Halsabschnitt 22 und dem Kopfabschnitt 14 erfolgt vorzugsweise über eine Taillierung, welche einen minimalen Durchmesser der Aufsteckbürste 10 ausbildet. Alternativ wäre jedoch auch ein Verlauf frei von einer Taillierung denkbar. Die Folge davon ist, dass der Kopfabschnitt 14 ein massigeres, weniger elegantes Aussehen erhält und sich weniger gegenüber dem Halsabschnitt 22 absetzt. Die Aufsteckbürste 10 ist dabei in dem Halsabschnitt 22 kegelförmig, wobei ein Durchmesser zu dem Aufsteckabschnitt 18 zunimmt. In dem Aufsteckabschnitt 18 wird eine Kegelform des Halsabschnitts 22 fortgesetzt, wobei die Aufsteckbürste 10 in dem Aufsteckabschnitt 18 zu einem freien Ende hin zudem konkav kegelförmig ausgebildet ist. Vor einem freien, dem Bürstenkopf 16 abgewandten Ende weist die Aufsteckbürste 10 einen kurzen kegelstumpfförmigen Anschnitt auf, welcher eine Phase ausbildet und durch welchen eine Abtropfkante 108 ausgebildet ist. Die Abtropfkante 108 bildet einen harten Übergang von der Phase in den runden Verlauf der Außenhaut aus. Die Abtropfkante 108 bildet eine radial äußerste Kante der Aufsteckbürste 10 aus. Die Phase weist, gemessen als Flächennormale zur Längsachse, einen Winkel von 30° bis 70° vorzugsweise von 40° bis 60° auf. Ferner weist die Abtropfkante 108, in axialer Richtung betrachtet, zu der Standfläche einen Abstand von 0.5 mm bis 4 mm, vorzugsweise von 1 mm bis 3 mm auf. Des Weiteren weist die Abtropfkante 108 einen Durchmesser von 12 mm bis 20 mm, vorzugsweise von 14 mm bis 18 mm auf. Durch die vorliegende Gestaltung können sowohl geometrisch größere Handteile als auch schmälere Handteile optisch ansprechend mit der Aufsteckbürste 10 gekoppelt werden. Bei breiten Handteilen bilden die Abtropfkante 108 und die Phase einen Abschluss, während bei schmalen Handteilen die Abtropfkante 108 und die Phase einen Übergang ausbilden. Ferner weist die Abtropfkante 108 die Funktion auf, dass, wenn die Aufsteckbürste 10 auf einer Standfläche steht, Flüssigkeit an der Abtropfkante vorteilhaft abtropft. Des Weiteren läuft durch die Abtropfkante 108 weniger Flüssigkeit in Richtung Standfläche und so im montierten Zustand auch weniger Flüssigkeit in Richtung der Schnittstelle 24.

Die Standfläche ist an einem freien, dem Bürstenkopf abgewandten Ende des Aufsteckabschnitts 18 ausgebildet. Ein Grundkörper 26 der Aufsteckbürste 10 bildet die Standfläche aus. Die Standfläche ist von einer ringförmigen Fläche des Grundkörpers 26 gebildet, welche um die Längsachse angeordnet ist. Die Fläche weist dabei eine Breite von 0.5 mm bis 2 mm, vorzugsweise von 0.7 mm bis 1.5 mm, auf. Ferner beträgt ein Außendurchmesser der Standfläche von 9 mm bis 17 mm, vorzugsweise von 11 mm bis 15 mm, und ein Innendurchmesser von 7 mm bis 15 mm, vorzugsweise von 9 mm bis 13 mm. Die Standfläche ermöglicht es, die Aufsteckbürste 10 auf eine plane Fläche zu stellen, sodass sich eine Haupterstreckungsrichtung 98 der Aufsteckbürste 10 im Wesentlichen senkrecht zu der Fläche erstreckt. Ob die Standfläche seine Funktion effektiv ausführen kann, hängt von verschiedenen Faktoren ab, die den Schwerpunkt beeinflussen, wie beispielsweise eine Gestaltung des Borstenfelds 43, insbesondere der Borstenlänge, und/oder eine Masseverteilung im Körper.

Die Aufsteckbürste 10 weist eine axiale Länge von 50 mm bis 110 mm, vorzugsweise von 70 mm bis 90 mm, auf. Ferner weist die Aufsteckbürste 10 in dem Kopfabschnitt 14 eine Breite von 7 mm bis 16 mm, vorzugsweise von 10 mm bis 14 mm, auf. In dem Halsabschnitt 22 weist die Aufsteckbürste 10 eine Breite von 3 mm bis 8 mm, vorzugsweise von 5 mm bis 7 mm, auf. In dem Aufsteckabschnitt 18 weist die Aufsteckbürste eine Breite von 12 mm bis 20 mm, vorzugsweise von 14 mm bis 18 mm, auf.

Ferner weist die Aufsteckbürste 10 einen tragenden Grundkörper 26 auf. Der tragende Grundkörper 26 weist eine Hartkomponente auf. Der tragende Grundkörper 26 besteht aus einer Hartkomponente. Grundsätzlich wäre jedoch auch denkbar, dass der Grundkörper aus mehreren verschiedenen Hartkomponenten besteht. Insbesondere könnten dadurch verschiedene Eigenschaften an verschiedenen Körperpartien des Grundkörpers 26 mit den verschiedenen Komponenten erreicht werden. Beispielsweise könnte die Schnittstellenaufnahme 20 aus einem Material für gute Ausbildung und Eigenschaften der Schnittstellenaufnahme 20 gebildet sein, während der eigentliche Kopfabschnitt 14 aus einem zweiten Material besteht, welches gegenüber den chemischen Mundhygienemitteln wie Zahnpasta resistenter ist. Alternativ können Kunststoffe verschiedener Dichte bzw. auch spezifischer Masterbatch mit anderer Dichte eingesetzt werden. Für vibrierende Zahnbürsten wie Schall, Ultraschall, etc. kann die Gewichtsverteilung am Produkt für die Ausbreitung der Schwingungen extrem relevant sein. Beispielsweise könnten Komponenten des Grundkörpers 26 oder auch andere Komponenten mit hoher Dichte ausgeführt werden, um das Gewicht zu erhöhen, um Schwingung zu optimieren. Ferner kann durch schwere Bereiche eine gewisse Gewichtsverteilung erreicht werden, um eine optimale Schwingung zu erhalten. Beispielsweise kann mit einem zweiten schweren Hartmaterial, insbesondere 2k Spritzguss, vorzugsweise sogar innen, nicht sichtbar ein Ring eingespritzt werden. Ferner sind auch drei Hartkomponenten und/oder eine Kombination mit Weichkomponenten denkbar. Der tragende Grundkörper 26 bildet eine tragende Struktur der Aufsteckbürste 10 aus. Der tragende Grundkörper 26 bildet eine tragende Struktur des Bürstenkopfs 16 aus. Ferner bildet der tragende Grundkörper 26 eine tragende Begrenzung der Schnittstellenaufnahme 20 aus. Zudem ist der Bürstenkopf 16 über den tragenden Grundkörper 26 im Wesentlichen starr mit der Schnittstellenaufnahme 20 gekoppelt. Der tragende Grundkörper 26 erstreckt sich von dem Aufsteckabschnitt 18 über den Halsabschnitt 22 hin zu dem Kopfabschnitt 14. Der Grundkörper 26 ist einstückig ausgebildet. Grundsätzlich wäre jedoch auch denkbar, dass der Grundkörper 26 zumindest teilweise unterbrochen ist und die Aufsteckbürste 10 beispielsweise ein bewegliches Gelenk aufweist, über welches der Bürstenkopf 16 beweglich gelagert ist. Die Aufsteckbürste 10 kann auch nur aus Hartkomponenten gebildet sein bzw. nur aus einem Grundkörper 26 ohne Umspritzung 32 bestehen.

Des Weiteren weist die Aufsteckbürste 10 eine Umspritzung 32 auf. Die Umspritzung 32 ist aus einem von dem Grundkörper 26 verschiedenen Material. Die Umspritzung 32 weist eine Weichkomponente auf. Die Umspritzung 32 besteht aus einer Weichkomponente. Die Umspritzung 32 und der Grundkörper 26 sind in einem Mehrkomponenten-Spritzgussverfahren hergestellt. Grundsätzlich wäre jedoch auch ein anderes, einem Fachmann als sinnvoll erscheinendes Herstellungsverfahren denkbar. Die Umspritzung 32 umgibt einen wesentlichen Teil einer Außenfläche des Grundkörpers 26. Der Grundkörper 26 ist im Bereich einer Vorderseite des Bürstenkopfs 16 frei von der Umspritzung 32. Hierdurch kann insbesondere ein Einbringen von Borsten besser ermöglicht werden. Es wäre jedoch auch denkbar, dass der Bürstenkopf 16 mit Weichelementen aus der Weichkomponente der Umspritzung 32 versehen ist. Ferner ist der Grundkörper 26, im Bereich der Schnittstellenaufnahme 20 frei von der Umspritzung 32. Des Weiteren weist der Grundkörper 26 auf einer Rückseite des Bürstenkopfs 26 einen Abstützbereich 92 auf, welcher frei von der Umspritzung 32 ist. Der Abstützbereich 92 dient insbesondere zu einer Abstützung des Bürstenkopfs 16 bei einem Einbringen von Borsten in den Grundkörper 26 und/oder beim Umspritzen des Grundkörpers 26. Die Umspritzung 32 würde dabei nachgeben und würde im Prozess keine genaue Positionierung für Beborstung möglich machen. Zusätzlich könnte auf der Rückseite des Bürstenkopfs 26 zudem ein Zungenreiniger realisiert werden. Der Zungenreiniger kann beispielsweise Noppen und/oder Lamellen, insbesondere in Kreisen oder als gerade oder wellenförmige Längs- oder Querstreifen, aufweisen und aus einer Hartkomponente, einer Weichkomponente oder in Hart- und Weichkomponenten hergestellt sein. Bei der Verwendung von Weichkomponenten kann die Weichkomponente beispielsweise als Ring um den Abstützbereich 92 ausgebildet sein. Zudem weist der Grundkörper 26 in dem Halsabschnitt 22 einen Logobereich 94 auf, welcher frei von der Umspritzung 32 ist. Der Logobereich 94 dient insbesondere zu einer Bedruckung des Grundkörpers 26, wie beispielsweise mittels Tampondruck, Laserbeschriftung oder Prägung. Alternativ kann eine Beschriftung bereits als Schrifteinsatz im Spritzgiesswerkzeug realisiert sein. Die Beschriftung erfolgt dabei als versenkter oder erhabener Schriftzug. Eine sekundäre Funktion des Logobereichs 94 ist ferner die Abstützung zur genauen Positionierung des Grundkörpers 26 im Spritzgusswerkzeug beim Einspritzen einer zweiten Komponente bzw. der Weichkomponente für die Umspritzung 32.

Die Schnittstellenaufnahme 20 weist mehrere Teilaufnahmebereiche 36, 38, 40, 96 auf. Die Schnittstellenaufnahme 20 ist in mehrere Teilaufnahmebereiche 36, 38, 40, 96 unterteilt. Die Schnittstellenaufnahme 20 weist einen ersten, im Wesentlichen quaderförmigen Teilaufnahmebereich 36 auf. Der erste Teilaufnahmebereich 36 bildet einen letzten Teilaufnahmebereich der Schnittstellenaufnahme 20. Der erste Teilaufnahmebereich 36 ist zu einer Aufnahme einer Spitze der Schnittstelle 24 des Zahnbürstenhandteils 12 vorgesehen. Der erste Teilaufnahmebereich 36 ist zu einer Aufnahme eines vorderen, freien Achsbereichs einer Achse 110 der Schnittstelle 24 des Zahnbürstenhandteils 12 vorgesehen. Der erste Teilaufnahmebereich 36 bildet einen dem Bürstenkopf 16 zugewandten Teilaufnahmebereich der Schnittstellenaufnahme 20. Ferner weist der erste im Wesentlichen quaderförmige Teilaufnahmebereich 36 eine Verjüngung 42 auf. Der erste Teilaufnahmebereich 36 verjüngt sich an der Verjüngung 42 von zumindest einer Seite radial. Der erste Teilaufnahmebereich 36 verjüngt sich an der Verjüngung 42 von zwei gegenüberliegenden Seiten radial. Die Verjüngung 42 ist dabei von zwei gegenüberliegenden abgeschrägten Absätzen gebildet. Ein Querschnitt des ersten Teilaufnahmebereichs 36 verringert sich dabei in axialer Richtung zu dem Bürstenkopf 16 hin. Auf einer dem zweiten Teilaufnahmebereich 38 zugewandten Seite der Verjüngung 42 weist der erste Teilaufnahmebereich 36 eine axiale Länge von 2 mm bis 7 mm, vorzugsweise von 3.5 mm bis 5 mm, auf. Auf einer dem zweiten Teilaufnahmebereich 38 abgewandten Seite der Verjüngung 42 weist der erste Teilaufnahmebereich 36 eine axiale Länge von 5 mm bis 11 mm, vorzugsweise von 7 mm bis 9 mm, auf. Eine Rückseite des ersten Teilaufnahmebereichs 36 weist auf einer dem zweiten Teilaufnahmebereich 38 zugewandten Seite der Verjüngung 42 zu einer Längsachse der Aufsteckbürste 10 einen maximalen Abstand von 0.5 mm bis 3 mm, vorzugsweise von 1 mm bis 2 mm, auf. Ferner weist die Rückseite des ersten Teilaufnahmebereichs 36 auf einer dem zweiten Teilaufnahmebereich 38 abgewandten Seite der Verjüngung 42 zu einer Längsachse der Aufsteckbürste 10 einen maximalen Abstand von 0.8 mm bis 1.6 mm, vorzugsweise von 1.1 mm bis 1.4 mm, auf. Des Weiteren weist die Vorderseite des ersten Teilaufnahmebereichs 36 auf einer dem zweiten Teilaufnahmebereich 38 abgewandten Seite der Verjüngung 42 zu einer Längsachse der Aufsteckbürste 10 einen maximalen Abstand von 0.8 mm bis 1.6 mm, vorzugsweise von 1.1 mm bis 1.4 mm, auf. Die Seiten des ersten Teilaufnahmebereichs 36 weisen auf einer dem zweiten Teilaufnahmebereich 38 zugewandten Seite der Verjüngung 42 zu einer Längsachse der Aufsteckbürste 10 einen maximalen Abstand von 0.5 mm bis 3 mm, vorzugsweise von 1 mm bis 2 mm, auf. Ferner weisen die Seiten des ersten Teilaufnahmebereichs 36 auf einer dem zweiten Teilaufnahmebereich 38 abgewandten Seite der Verjüngung 42 zu einer Längsachse der Aufsteckbürste 10 einen maximalen Abstand von 1 mm bis 2 mm, vorzugsweise von 1.3 mm bis 1.7 mm, auf. Der erste Teilaufnahmebereich 36 weist einen gewissen "Anzug" aufgrund der nötigen Entformbarkeit beim Herstellen, insbesondere beim Spritzgießen, auf. In dem ersten Teilaufnahmebereich 36 findet die Klemmung der Achse 110 statt. Die Achse 110 liegt jedoch nicht komplett auf, da komplementäre Geometrien mit einem Luftspalt dazwischen geformt sind. Beispielsweise weist die Achse in einem Querschnitt betrachtet eine runde Geometrie auf, welche in einem eckigen Teil der Schnittstellen-Geometrie angeordnet ist. Ferner weist die Schnittstellenaufnahme einen zweiten, im Wesentlichen zylindrischen Teilaufnahmebereich 38 auf. Der zweite Teilaufnahmebereich 38 ragt axial zumindest teilweise in den ersten Teilaufnahmebereich 36. Der zweite Teilaufnahmebereich 38 ist den ersten Teilaufnahmebereich 36 axial vollständig überlappend angeordnet. Der zweite Teilaufnahmebereich 38 ist axial vollständig innerhalb des ersten Teilaufnahmebereichs 36 angeordnet. Der zweite Teilaufnahmebereich 38 ist an einem dem Ende der Schnittstellenaufnahme 20 abgewandten Ende des ersten Teilaufnahmebereichs 36 angeordnet. Der zweite Teilaufnahmebereich 38 schließt auf einer der Öffnung der Schnittstellenaufnahme 20 zugewandten Seite gemeinsam mit dem ersten Teilaufnahmebereich 36 ab. Ein maximaler Querschnitt des zweiten Teilaufnahmebereichs 38 senkrecht zu einer Haupterstreckungsrichtung 98 der Aufsteckbürste 10 ist größer als ein entsprechender maximaler Querschnitt des ersten Teilaufnahmebereichs 36. Der erste Teilaufnahmebereich 36 ist gegenüber dem zweiten Teilaufnahmebereich 38 außermittig. Der erste Teilaufnahmebereich 36 ragt in einem überschneidenden Bereich mit dem zweiten Teilaufnahmebereich mit zumindest zwei Kanten axial durch den zweiten Teilaufnahmebereich 38 hindurch. Der erste Teilaufnahmebereich 36 ragt in einem überschneidenden Bereich mit dem zweiten Teilaufnahmebereich mit zumindest zwei Kanten radial aus dem zweiten Teilaufnahmebereich 38 hinaus. Ferner weist der zweite Teilaufnahmebereich 38 eine Verjüngung 100 auf. Der zweite Teilaufnahmebereich 38 verjüngt sich an der Verjüngung 100 von zumindest einer Seite radial zu dem ersten Teilaufnahmebereich 36 hin. Die Verjüngung 100 ist dabei von einem abgeschrägten Absatz gebildet. Die Verjüngung 100 weist gegenüber der Längsachse der Aufsteckbürste 10 einen Winkel von 25° bis 65°, vorzugsweise von 35° bis 55°, auf. Ein Minimalabstand der Verjüngung zu der Längsachse der Aufsteckbürste 10 beträgt von 0.3 mm bis 1.5 mm, vorzugsweise von 0.5 mm bis 1mm. Die Verjüngung weist eine axiale Länge von 0.2 mm bis 2 mm, vorzugsweise von 0.5 mm bis 1.5 mm, auf. Ein Querschnitt des zweiten Teilaufnahmebereichs 38 verringert sich dabei in axialer Richtung zu dem Bürstenkopf 16 hin. Der erste Teilaufnahmebereich 36 und der zweite Teilaufnahmebereich 38 sind gemeinsam spiegelsymmetrisch ausgebildet. Der zweite Teilaufnahmebereich 38 weist auf einer dem Bürstenkopf 16 abgewandten Seite einen Durchmesser von 2 mm bis 6 mm, vorzugsweise von 3.5 mm bis 5 mm, auf. Ferner weist der zweite Teilaufnahmebereich 38 eine Länge von 2 mm bis 6 mm, vorzugsweise von 2.5 mm bis 4.5 mm, auf. Der zweite Teilaufnahmebereich 38 ist teilweise gegenüber einer Längsachse der Aufsteckbürste 10 leicht gewinkelt. Der zweite Teilaufnahmebereich 38 bzw. dessen Seitenwände weist dabei zur Längsachse einen Winkel von 0.5° bis 5° vorzugsweise von 1° bis 3° auf. Ferner bildet der zweite Teilaufnahmebereich auf einer dem Bürstenkopf 16 zugewandten Seite zu dem ersten Teilaufnahmebereich 36 hin eine Fase aus. Der zweite Teilaufnahmebereich 38 dient zu einer Aufnahme der Achse 110 bzw. zu einer Führung der Achse 110 in die korrekte Lage in der Schnittstellenaufnahme 20. Die Achse 110 ist dazu an dieser Stelle einseitig, in Richtung der Rückseite, rund gestaltet und hat auf der Vorderseite eine Abflachung.

Des Weiteren weist die Schnittstellenaufnahme 20 einen dritten kegelstumpfförmigen Teilaufnahmebereich 40 auf. Der dritte Teilaufnahmebereich 40 grenzt axial direkt an den zweiten Teilaufnahmebereich 38 an. Der dritte Teilaufnahmebereich 40 ist frei von einer Überschneidung mit dem ersten Teilaufnahmebereich 36 und dem zweiten Teilaufnahmebereich 38. Ferner ist der dritte Teilaufnahmebereich 40 zumindest annähernd koaxial zu dem zweiten Teilaufnahmebereich 38 angeordnet. Bevorzugt schließt der dritte Teilaufnahmebereich 40 direkt an den ersten Teilaufnahmebereich 36 und den zweiten Teilaufnahmebereich 38 an. Der dritte Teilaufnahmebereich 40 schließt auf einer der Öffnung der Schnittstellenaufnahme 20 zugewandten Seite an den ersten Teilaufnahmebereich 36 und den zweiten Teilaufnahmebereich 38 an. Vorzugsweise bildet die Schnittstellenaufnahme 20 eine Vereinigungsmenge aus dem ersten Teilaufnahmebereich 36, dem zweiten Teilaufnahmebereich 38 und dem dritten Teilaufnahmebereich 38 aus. Ein maximaler Querschnitt des dritten Teilaufnahmebereichs 40 senkrecht zu der Haupterstreckungsrichtung 98 der Aufsteckbürste 10 ist größer als ein entsprechender maximaler Querschnitt des zweiten Teilaufnahmebereichs 38. An einem dem zweiten Teilaufnahmebereich 26 abgewandten Ende weist der dritte Teilaufnahmebereich 40 einen Durchmesser von 5 mm bis 13 mm, vorzugsweise von 7 mm bis 11 mm, auf. Auf einer dem zweiten Teilaufnahmebereich 26 zugewandten Ende weist der dritte Teilaufnahmebereich 40 einen Durchmesser von 4 mm bis 12 mm, vorzugsweise von 6 mm bis 10 mm, auf. Ferner weist der dritte Teilaufnahmebereich 40 eine axiale Länge von 3 mm bis 11 mm, vorzugsweise von 5 mm bis 9 mm, auf. Der dritte Teilaufnahmebereich 40 ist im Wesentlichen rotationssymmetrisch.

Des Weiteren weist die Schnittstellenaufnahme 20 einen vierten Teilaufnahmebereich 96 auf. Der vierte Teilaufnahmebereich 96 weist eine kegelstumpfform auf, wobei eine Mantelfläche des Teilaufnahmebereichs 96 konkav gekrümmt ist. Der vierte Teilaufnahmebereich 96 grenzt axial direkt an den dritten Teilaufnahmebereich 40 an. Ferner ist der vierte Teilaufnahmebereich 96 annähernd koaxial zu dem dritten Teilaufnahmebereich 40 angeordnet. Der vierte Teilaufnahmebereich 96 schließt direkt an den dritten Teilaufnahmebereich 40 an. Der vierte Teilaufnahmebereich 96 schließt auf einer der Öffnung der Schnittstellenaufnahme 20 zugewandten Seite an den dritten Teilaufnahmebereich 40 an. Der vierte Teilaufnahmebereich 96 bildet die Öffnung der Schnittstellenaufnahme 20 aus. Der vierte Teilaufnahmebereich 96 dient zu einer Aufnahme eines Schafts der Schnittstelle 24 des Zahnbürstenhandteils 12. Der vierte Teilaufnahmebereich 96 bildet die Stelle aus, an welcher eine Achse 110 des Zahnbürstenhandteils 12 in die Aufsteckbürsten 10 eingeführt wird. Der vierte Teilaufnahmebereich 96 dient als Einführhilfe und startet gegenüber der Standfläche mit einem kleinen Absatz. Der vierte Teilaufnahmebereich 96 weist an einem freien Ende einen Durchmesser von 7 mm bis 15 mm, vorzugsweise von 9 mm bis 13 mm, auf. An einem Übergang zu dem dritten Teilaufnahmebereich 40 weist der vierte Teilaufnahmebereich 96 einen Durchmesser von 5 mm bis 13 mm, vorzugsweise von 7 mm bis 11 mm, auf. Ferner weist der vierte Teilaufnahmebereich 96 axial eine Länge von 1 mm bis 5 mm, vorzugsweise von 1.5 mm bis 3.5 mm, auf. Der vierte Teilaufnahmebereich 96 ist im Wesentlichen rotationssymmetrisch. Der dritte Teilaufnahmebereich 40 und der vierte Teilaufnahmebereich 96 dienen zu einer Aufnahme eines Nockens des Zahnbürstenhandteils 12. Wenn kein Nocken da ist, wird die Achse 110 durch den "Raum" geführt, durch welchen sie hindurch geführt werden kann, da die Achse 110 in der Regel weniger voluminös ist als ein Nocken.

Die Schnittstellenaufnahme 20 ist von einer Universal-Schnittstellenaufnahme gebildet. Die Schnittstellenaufnahme 20 ist zu einer Aufnahme von zumindest zwei verschiedenen Schnittstellen 24 verschiedener Zahnbürstenhandteile 12 geeignet. Die Schnittstellenaufnahme 20 passt daher auf Schnittstellen 24 verschiedener Form und/oder Abmessung. Der tragende Grundkörper 26, welcher teilweise an die Schnittstellenaufnahme 20 angrenzt, weist dazu eine Klemmeinheit 28 auf. Die Klemmeinheit 28 ist dazu vorgesehen, zu einer Aufnahme einer Schnittstelle 24 eines Zahnbürstenhandteils 12 elastisch ausgelenkt zu werden. Die Klemmeinheit 28 ist zu einem Verklemmen der Achse 110 vorgesehen. Die Klemmeinheit 28 grenzt direkt an die Schnittstellenaufnahme 20 an. Die Klemmeinheit 28 ist axial in einem Bereich des ersten Teilaufnahmebereichs 36 angeordnet. Die Klemmeinheit 28 ist axial vollständig in einem Bereich des ersten Teilaufnahmebereichs 36 angeordnet. Ferner ist die Klemmeinheit 28 teilweise axial in einem Bereich des zweiten Teilaufnahmebereichs 38 angeordnet.

Die Klemmeinheit 28 weist eine zumindest teilweise freistehende Klemmwand 30, 30' auf, welche direkt an die Schnittstellenaufnahme 20 angrenzt. Die Klemmeinheit 28 weist zwei teilweise freistehende Klemmwände 30, 30' auf, welche auf gegenüberliegenden Seiten direkt an die Schnittstellenaufnahme 20 angrenzen. Die Klemmwände 30, 30' grenzen jeweils an eine Seite der Schnittstellenaufnahme 20 an. Der erste Teilaufnahmebereich 36 der Schnittstellenaufnahme 20 ist zu zwei gegenüberliegenden Seiten hin von den Klemmwänden 30, 30' begrenzt. Die Klemmwände 30, 30' sind gegenüber einem Rest des Grundkörpers 26 teilweise freistehend. Die Klemmwände 30, 30' sind über Schlitze und Durchbrüche zu der Schnittstellenaufnahme 20, welche sich jeweils parallel zur Längsachse erstrecken, gegenüber einem Rest des Grundkörpers 26 teilweise freigestellt. Die Schlitze sind jeweils ausgehend von der Schnittstellenaufnahme 20 hinter den Klemmwände 30, 30' angeordnet, während die Durchbrüche neben den Klemmwänden 30, 30' angeordnet sind und in die Schnittstellenaufnahme 20 münden. Die Schlitze und Durchbrüche weisen jeweils eine Länge von 6.5 mm bis 9 mm, vorzugsweise von 7 mm bis 8 mm, auf. Das Gesamtmass von Schlitz zusammen mit der Breite der Klemmwand beträgt 1 mm bis 2.5 mm, vorzugsweise 1.2 mm bis 1.8 mm. Die Durchbrüche weisen jeweils eine Höhe von 0.02 mm bis 0.3 mm, vorzugsweise von 0.05 mm bis 0.15 mm, und eine Breite von 0.1 mm bis 0.5 mm, vorzugsweise von 0.15 mm bis 0.3 mm, auf. Die Klemmwände 30, 30' sind dazu vorgesehen bei einem Aufstecken der Aufsteckbürste 10 auf ein Zahnbürstenhandteil 12 radial nach außen ausgelenkt zu werden. Die Klemmwände 30, 30' der Klemmeinheit 28 erstrecken sich axial in Einführrichtung 102 der Schnittstelle 24 über die Verjüngung 42 des ersten Teilaufnahmebereichs 36 hinweg. Die Klemmwände 30, 30' der Klemmeinheit 28 sind axial in Einführrichtung 102 hinter der Verjüngung 100 des zweiten Teilaufnahmebereichs 38 angeordnet. Die Umspritzung 32 umgibt die Klemmwände 30, 30' jeweils in zumindest einer Ebene 34 zumindest zu einem wesentlichen Teil direkt. Die Umspritzung 32 umgibt die Klemmwände 30, 30' jeweils in radialer Richtung auf einer der Schnittstellenaufnahme 20 abgewandten Seite. Die Klemmwände 30, 30' sind zu zwei Seiten hin von der Umspritzung 32 begrenzt. Die Umspritzung 32 ist, radial von der Schnittstellenaufnahme 20 aus betrachtet, hinter den Klemmwänden 30, 30'. Der Grundkörper 26 weist auf einer der Schnittstellenaufnahme 20 angewandten Seite hinter den Klemmwänden 30, 30' jeweils eine zweistufige Ausnehmung auf, die gegen innen schmäler und gegen außen breiter wird. In einem Bereich der Durchbrüche des Grundkörpers 26, die mittels der Umspritzung 32 ausgespritzt sind, grenzt die Umspritzung 32 direkt an die Schnittstellenaufnahme 20 an. Die Umspritzung 32 dient zu einer Abfederung einer elastischen Auslenkung der Klemmwände 30, 30'. Die Klemmwände 30, 30' weisen einen axialen Abstand von 3 mm bis 6 mm, vorzugsweise von 4 mm bis 5 mm, zu der Standfläche auf. Ferner weisen die Klemmwände 30, 30' jeweils eine Wandstärke von 0.3 mm bis 1.2 mm, vorzugsweise von 0.5 mm bis 0.9 mm, auf. Die Klemmwände 30, 30' sind so ausgestaltet, dass sie im eingeführten Zustand der Achse 110 plan ab der Achse 1110 anliegen. Die Achse 110 ist im Bereich der Klemmwände 30, 30' seitlich flach ausgeführt. Die Kontaktflächen der Klemmwände 30, 30' sind ebenfalls glatt gestaltet.

Eine durch die Klemmwände 30, 30' aufgebrachte Klemmkraft ist grundsätzlich abhängig vom Achsaufbau bzw. von den Geometrien der Achse 110 und den Dimensionen der Achse 110. Eine Klemmung findet nicht über eine punktuelle Berührung sondern über eine flächige Berührung der Teile statt. Parallel zur seitlichen Klemmung entsteht automatisch auch eine gewisse Klemmmöglichkeit des Elements auf der Rückseite, zwischen den beiden Durchbrüchen. Eine angestrebte Klemmkraft der Klemmwände 30, 30' beträgt von 1 kg bis 4 kg, vorzugsweise von 1.2 kg bis 2.5 kg.

Grundsätzlich wäre auch denkbar, dass die Freiräume um die Innengeometrie nicht mit Umspritzung 32 gefüllt sind. Dies könnte insbesondere eine Einkomponentenlösung darstellen, beispielsweise dass die Aufsteckbürste 10 nur aus einer Hartkomponente besteht und technische Geometrien, wie insbesondere die Klemmwände 30, 30', nicht umspritzt sind und so frei stehen . Hierdurch könnte eine kostengünstige Aufsteckbürste 10 geschaffen werden. Ferner kann eine weitere Entlüftungsmöglichkeit beim Einführen der Achse 110 geschaffen werden.

Ferner weist die Klemmeinheit 28 einen teilweise freistehenden Klemmsteg 104 auf. Der Klemmsteg 104 ist axial auf Höhe der Klemmwände 30, 30' angeordnet. Der Klemmsteg 104 begrenzt den ersten Teilaufnahmebereich 36 der Schnittstellenaufnahme 20 zu einer dritten Seite hin. Der Klemmsteg 104 der Klemmeinheit 28 erstreckt sich axial in Einführrichtung 102 der Schnittstelle 24 über die Verjüngung 42 des ersten Teilaufnahmebereichs 36 hinweg. Die Umspritzung 32 umgibt den Klemmsteg 104 in zumindest einer Ebene 34 zumindest zu einem wesentlichen Teil direkt. Die Umspritzung 32 umgibt den Klemmsteg 104 in radialer Richtung auf einer der Schnittstellenaufnahme 20 abgewandten Seite.

Die Umspritzung 32 weist verschiedene Funktionen auf. Mittels der Umspritzung 32 kann eine hohe Flexibilität der Klemmung sowie der Rückstellung erreicht werden. Ferner kann allgemein eine verbesserte Griffigkeit der Aufsteckbürste 10 erreicht werden. Zudem weist die Umspritzung 32 im montierten Zustand Abdichtfunktionen beispielsweise der Schnittstellenaufnahme 20 gegenüber der Umwelt auf. Des Weiteren dient die Umspritzung 32 zu einer Dämpfung des Bürstenkopfs 16. Die mögliche Ausformung eines Zungenreinigers aus der Umspritzung wurde bereits ausgeführt.

Des Weiteren weist die Klemmeinheit 28 eine zumindest teilweise in die Schnittstellenaufnahme 20 ragende Klemmerhebung 106 auf. Die Klemmerhebung 106 ist von einer Erhebung auf einer die Schnittstellenaufnahme 20 begrenzenden Innenwand des Grundkörpers 26 gebildet. Die Klemmerhebung 106 ist axial vollständig in einem Bereich des ersten Teilaufnahmebereichs 36 angeordnet. Die Klemmerhebung 106 ist axial in Einführrichtung 102 der Schnittstelle 24 hinter der Verjüngung 42 des ersten Teilaufnahmebereichs 36 angeordnet. Die Klemmerhebung 106 ist axial zumindest 1 mm, vorzugsweise zumindest 1,5 mm und bevorzugt maximal 3 mm, besonders bevorzugt maximal 2.5 mm, von der Verjüngung 42 entfernt. Die Klemmerhebung 106 erstreckt sich axial bis zu einem Ende des ersten Teilaufnahmebereichs 36. Die Klemmerhebung 106 erstreckt sich aus Gründen der Entformbarkeit axial bis zu einem Ende des ersten Teilaufnahmebereichs 36. Die Klemmerhebung 106 weist eine axiale Länge von 4 mm bis 8 mm, vorzugsweise von 5 mm bis 7 mm, auf. Ferner weist die Klemmerhebung 106 eine Breite von 0.7 mm bis 1.8 mm, vorzugsweise von 1 mm bis 1.5 mm, und eine Höhe von 0.04 mm bis 0.5 mm, vorzugsweise von 0.06 mm bis 0.3 mm, auf. Des Weiteren weist die Klemmerhebung 106 einen Abstand von der Mittelachse von 0.7 mm bis 1.5 mm, vorzugsweise von 1 mm bis 1.3 mm, auf. Die Klemmerhebung 106 ist auf einer Seite des Klemmstegs 104 der Klemmeinheit 28 angeordnet. Die Klemmerhebung 106 ist auf einer Rückseite des ersten Teilaufnahmebereichs 38 angeordnet. Die Klemmerhebung 106 erstreckt sich teilweise axial über den Klemmsteg 104. Durch Anpassung einer Höhe der Klemmerhebung 106 kann eine Abziehkraft der Aufsteckbürste eingestellt werden. Die Klemmerhebung 106 dient daher zu einer Einstellbarkeit der Rückhaltekraft und einem Verklemmen der Achse 110 in der Schnittstellenaufnahme 20. Eine Kontaktfläche der Achse 110 zu der Klemmerhebung 106 weist vorzugsweise eine Riffelung und/oder Aufrauung auf.

Ein dargestelltes Lochfeld 109 des Bürstenkopfs 16 in dem Grundkörper 26 ist, wie dargestellt, ausgelegt für den Einsatz konventioneller Filamente. Das Lochfeld 109 weist drei Bereiche auf. Das Lochfeld 109 weist einen vorderen Bereich auf, der gegen das freie Ende gerichtet ist. Der vordere Bereich weist zwei Querreihen auf. Eine vorderste Reihe weist zwei Löcher auf, während eine zweite Reihe drei Löcher aufweist. Das Lochfeld 109 weist eine steigende Anzahl von Löchern gegen einen mittleren Bereich des Lochfelds 109 auf. Der mittlere Bereich des Lochfelds 109 ist im Zentrum des Lochfelds 109 angeordnet und weist fünf Querreihen auf. Die Querreihen weisen jeweils vier Löcher auf. Des Weiteren weist das Lochfeld 109 einen hinteren Bereich auf, der gegen den Bürstenhals gerichtet ist. Der hintere Bereich weist drei Querreihen auf. Eine erste an den mittleren Bereich angrenzende Querreihe weist drei Löcher auf. Anschließend folgt eine weitere Reihe mit drei Löchern. Am freien Ende ist nochmals eine Querreihe mit zwei Löchern vorgesehen. Die Lochanzahl sinkt gegen den Halsabschnitt 22. Damit die verschiedenen Bereiche geschaffen werden können, sind die Löcher in Querreihen angeordnet, damit ein Verdrängen und somit ein Schneiden/Profilieren der Borsten möglich ist.

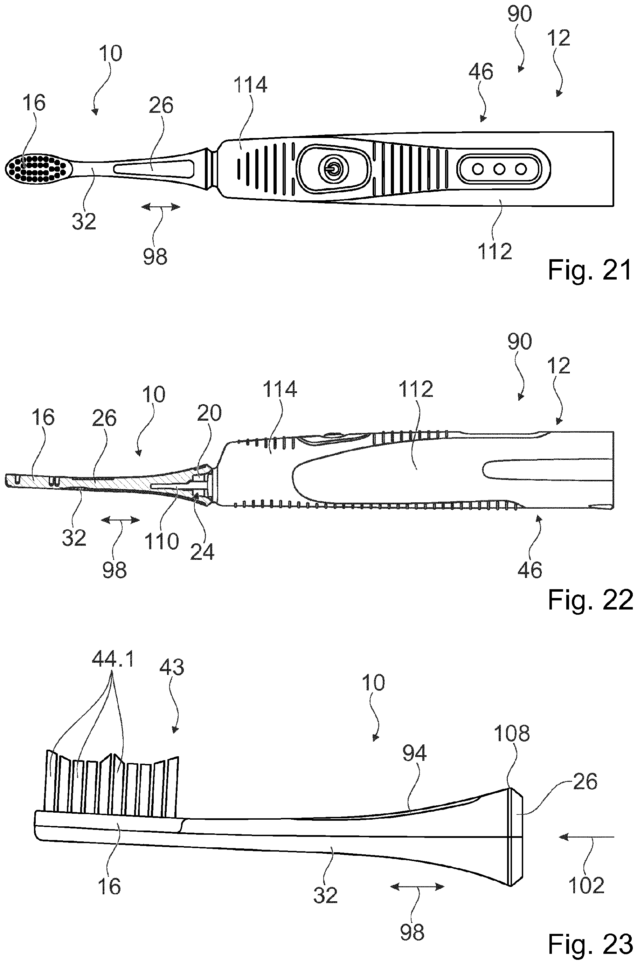

Figur 23 zeigt den Bürstenkopf 16 mit einem herkömmlichen Borstenfeld 43 mit einer herkömmlichen Anordnung der Borstenbündel 44.1. Es sind dabei insbesondere verschiedene Ausgestaltungen des Borstenfelds 43 in dem Lochfeld 109 denkbar. Beispielsweise können Bündel aus Borsten mit einem zugespitzten und einem abgerundeten zylindrischen Ende vorgesehen werden, wobei das Borstenfeld 43 identische Borstenbündel 44.1 und/oder asymmetrisch gestanzte Borstenbündel 44.1 vorsehen kann. Ferner kann in dem Borstenfeld 43 ein Mittelkamm ausgebildet werden, wobei das Borstenfeld 43 dabei insbesondere aus zylindrischen Filamenten besteht. Ein Schnitt ist dabei insbesondere so gestaltet, dass das vordere und das hintere Ende erhöht sind und sich in der Mitte des Borstenfelds 43 ebenfalls eine Erhöhung und/oder ein Kamm bildet. Der Mittelkamm kann dabei sowohl mittels flacher Borstenbündel 44.1 realisiert werden, wobei eine Profilierung mittels mehrerer kleiner Stufen realisiert ist, als auch mittels im Winkel geschnittener Borstenbündel 44.1, wie in Fig. 23 gezeigt. Alternativ wäre auch denkbar, dass der Kamm als eine höherstehende Bündelquerreihe ausgebildet ist, wobei ein vorderes und hinteres Ende der Bündelquerreihe schräg geschnitten ist. Als Filamente für die Borstenbündel 44.1 sind verschiedene, einem Fachmann als sinnvoll erscheinende Filamente denkbar, wie beispielsweise 2K-Filamente, Stain Devil-(von Perlon ®), Charcoal- oder Spiral-/Twister-Filamente in einem Borstenfeld einer Sonic-Bürste.

Ferner sind auch noch weitere, einem Fachmann als sinnvoll erscheinende Beborstungsmethoden denkbar. Beispielsweise wäre denkbar, dass in dem Bürstenkopf 16 beispielsweise Ausnehmungen für AFT-Plättchen oder für das PTt-Verfahren vorgesehen sind. Insbesondere wäre denkbar, dass die Beborstungsmethode spezifisch für schwenkende und Sonic-Bewegungen ausgelegt ist. Dies kann beispielsweise durch das PTt-Verfahren realisiert werden, da hierbei eine minimale Kopfdicke benötigt und daher weniger "Material" benötigt wird. Ferner kann ein kleiner Abstand der Borsten vom Rand erreicht werden.

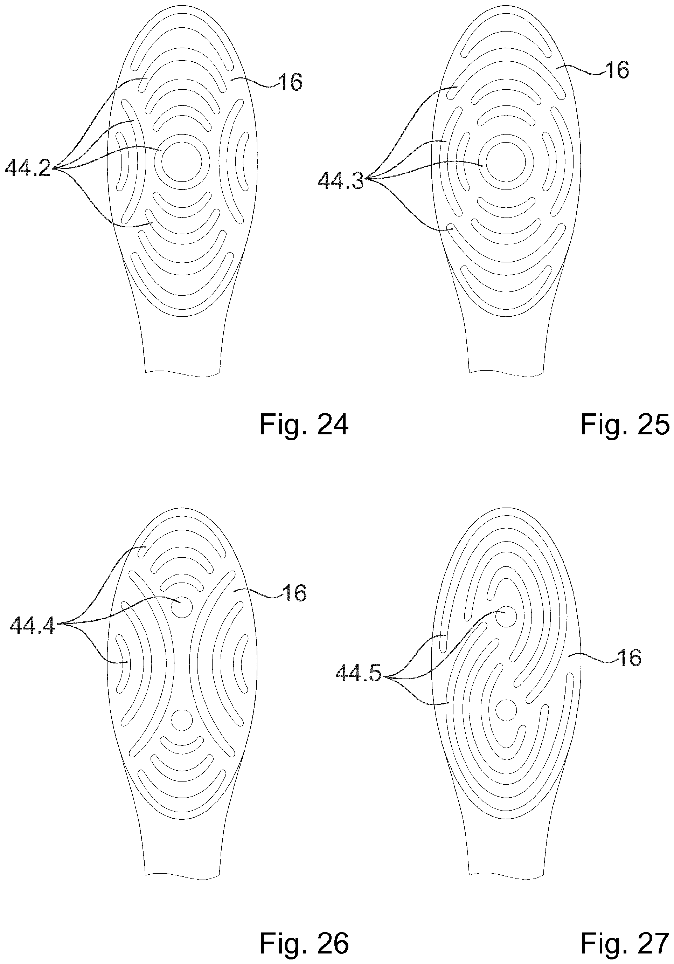

Des Weiteren sind auch noch weitere, alternative Ausgestaltungen und Anordnungen der Borstenbündel 44.1 des Borstenfelds 43 denkbar. In den Figuren 24 bis 39 sind beispielhaft verschiedene alternative Ausgestaltungen und Anordnungen von Borstenbündeln 44.2; 44.3; 44.4; 44.5; 44.6; 44.7; 44.8; 44.9; 44.10; 44.11; 44.12; 44.13; 44.14; 44.15; 44.16; 44.17 des Borstenfelds 43 für den Bürstenkopf 16 dargestellt. Der Bürstenkopf 16 weist dabei jeweils ein Borstenfeld 43 mit zumindest zwei wesentlich differierenden Borstenbündeln 44.2; 44.3; 44.4; 44.5; 44.6; 44.7; 44.8; 44.9; 44.10; 44.11; 44.12; 44.13; 44.14; 44.15; 44.16; 44.17 auf. Die Borstenbündel 44.2; 44.3; 44.4; 44.5; 44.6; 44.7; 44.8; 44.9; 44.10; 44.11; 44.12; 44.13; 44.14; 44.15; 44.16; 44.17 sind dabei jeweils hinsichtlich einer Form und/oder einer Ausrichtung unterschiedlich.

Figur 24 zeigt den Bürstenkopf 16 der Aufsteckbürste 10 mit einer alternativen zweiten Anordnung der Borstenbündel 44.2 des Borstenfelds 43. Die Borstenbündel 44.2 sind jeweils von Kämmen gebildet. Die Borstenbündel 44.2 sind jeweils von Kämmen gebildet, die in einem Längsprofil gebogen sind und verschiedene Längen aufweisen. Eine Biegung ist dabei insbesondere individuell und kann grundsätzlich auch innerhalb eines Borstenfelds 43 und/oder innerhalb des Borstenbündels 44.2 variieren. Eines der Borstenbündel 44.2 weist eine Ringform auf. Ein Teil der Borstenbündel 44.2 ist um das ringförmige Borstenbündel 44.2 herum gebogen, während ein Teil der Borstenbündel 44.2 von dem ringförmigen Borstenbündel 44.2 weggebogen ist.

Figur 25 zeigt den Bürstenkopf 16 der Aufsteckbürste 10 mit einer alternativen dritten Anordnung der Borstenbündel 44.3 des Borstenfelds 43. Die Borstenbündel 44.3 sind jeweils von Kämmen gebildet. Die Borstenbündel 44.3 sind jeweils von Kämmen gebildet, die in einem Längsprofil gebogen sind. Eines der Borstenbündel 44.3 weist eine Ringform auf. Ein Rest der Borstenbündel 44.3 ist um das ringförmige Borstenbündel 44.3 herum gebogen.

Figur 26 zeigt den Bürstenkopf 16 der Aufsteckbürste 10 mit einer alternativen vierten Anordnung der Borstenbündel 44.4 des Borstenfelds 43. Die Borstenbündel 44.4 sind jeweils teilweise von Kämmen gebildet. Ferner sind zwei der Borstenbündel 44.4 von herkömmlichen kreisförmigen Bündeln gebildet. Ein Teil der Borstenbündel 44.4 ist um die kreisförmigen Borstenbündel 44.4 herum gebogen, während ein Teil der Borstenbündel 44.4 von den kreisförmigen Borstenbündeln 44.4 weggebogen ist.

Figur 27 zeigt den Bürstenkopf 16 der Aufsteckbürste 10 mit einer alternativen fünften Anordnung der Borstenbündel 44.5 des Borstenfelds 43. Die Borstenbündel 44.5 sind jeweils teilweise von Kämmen gebildet. Ferner sind zwei der Borstenbündel 44.5 von herkömmlichen kreisförmigen Bündeln gebildet. Die kammartigen Borstenbündel 44.5 sind um die kreisförmigen Borstenbündel 44.5 herum gebogen.

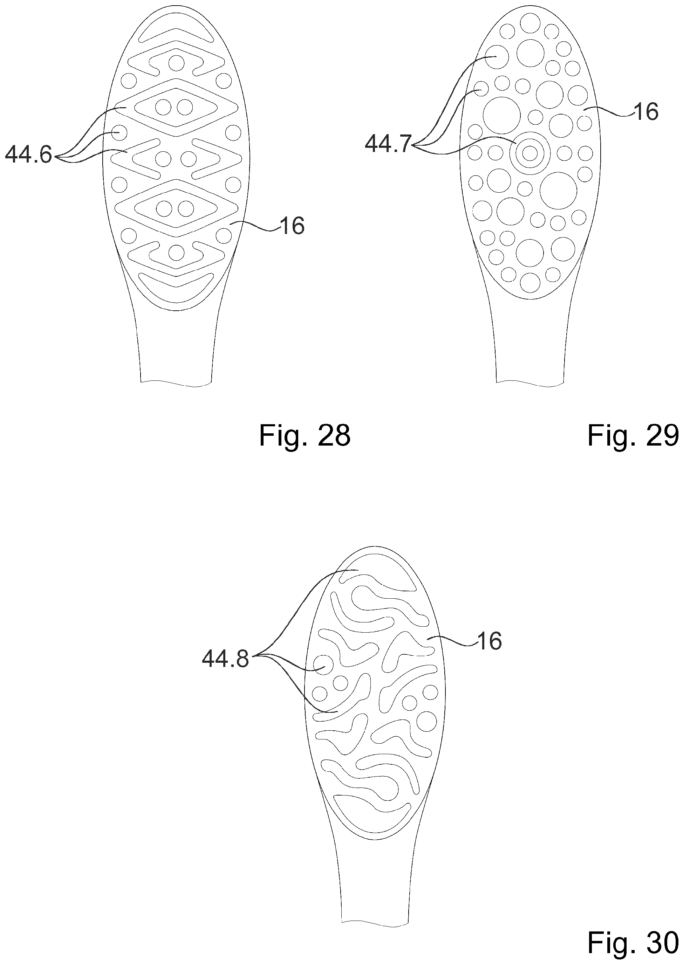

Figur 28 zeigt den Bürstenkopf 16 der Aufsteckbürste 10 mit einer alternativen sechsten Anordnung der Borstenbündel 44.6 des Borstenfelds 43. Die Borstenbündel 44.6 weisen jeweils teilweise eine Pfeilform auf, wobei die Spitzen gegen außen gerichtet sind.

Hierdurch kann eine vorteilhafte Reinigungswirkung insbesondere bei der Anwendung auf einer Schallzahnbürste bzw. einer Zahnbürste mit einer hin- und herschwenkenden Bewegung erzielt werden. Ferner sind mehrere der Borstenbündel 44.6 von herkömmlichen kreisförmigen Bündeln gebildet.

Figur 29 zeigt den Bürstenkopf 16 der Aufsteckbürste 10 mit einer alternativen siebten Anordnung der Borstenbündel 44.7 des Borstenfelds 43. Die Borstenbündel 44.7 sind von herkömmlichen kreisförmigen Bündeln gebildet, wobei eine Größe der Borstenbündel 44.7 variiert und die Verteilung zumindest teilweise zufällig ist. Die Verteilung ist insbesondere frei von einer zu den Hauptrichtungen der Zahnbürste parallelen Symmetrieachse. Integriert sind auch zwei ineinander liegende Borstenbündel 44.7, wobei eines als kreisringförmiges Bündel ausgestaltet ist und das andere als ein in dem kreisringförmigen Bündel liegendes herkömmliches kreisförmiges Bündel geformt ist.

Figur 30 zeigt den Bürstenkopf 16 der Aufsteckbürste 10 mit einer alternativen achten Anordnung der Borstenbündel 44.8 des Borstenfelds 43. Ein Teil der Borstenbündel 44.8 ist von herkömmlichen kreisförmigen Bündeln gebildet, wobei eine Größe der Borstenbündel 44.8 variiert. Ein weiterer Teil der Borstenbündel 44.8 weist eine Freiform auf.

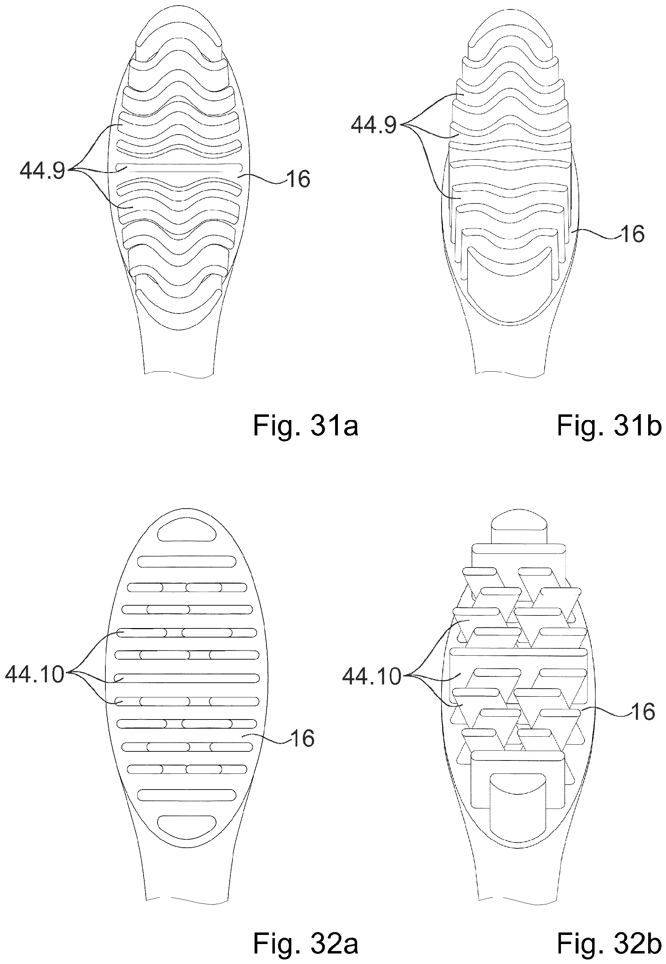

Die Figuren 31a und 31b zeigen den Bürstenkopf 16 der Aufsteckbürste 10 mit einer alternativen neunten Anordnung der Borstenbündel 44.9 des Borstenfelds 43. Die Borstenbündel 44.9 sind jeweils von Kämmen gebildet. Die Borstenbündel 44.9 sind jeweils von Kämmen gebildet, die in einem Längsprofil und/oder einem Endprofil gewellt sind. Die Anzahl der Wellentäler und -berge ist insbesondere variabel. Es besteht die Möglichkeit verschiedener Wellen im gleichen Borstenfeld 43. Die Kämme weisen jeweils teilweise unterschiedliche Schrägstellungen auf, wobei die Winkel der Schrägstellungen gegenüber einer Normalen des Bürstenkopfs 16 bei den Borstenbündeln 44.9 gegen das vordere und hintere Ende des Borstenfeldes 43 zunimmt und die Borstenbündel 44.9 der mittleren Kämme eher senkrecht stehen.

Die Figuren 32a und 32b zeigen den Bürstenkopf 16 der Aufsteckbürste 10 mit einer alternativen zehnten Anordnung der Borstenbündel 44.10 des Borstenfelds 43. Die Borstenbündel 44.10 weisen eine längliche Grundform auf und weisen jeweils teilweise unterschiedliche Schrägstellungen auf. Die quer angeordneten Kämme mit Schrägstellung bilden miteinander betrachtet eine X-Form aus, wenn das Borstenfeld in Längsrichtung betrachtet wird.

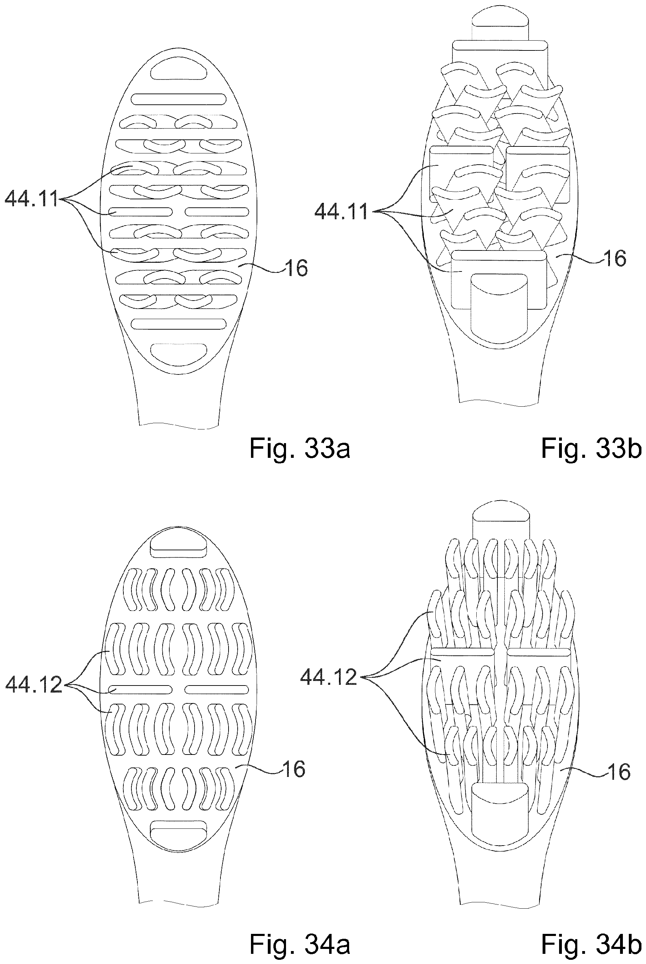

Die Figuren 33a und 33b zeigen den Bürstenkopf 16 der Aufsteckbürste 10 mit einer alternativen elften Anordnung der Borstenbündel 44.11 des Borstenfelds 43. Die Borstenbündel 44.11 sind jeweils teilweise von Kämmen gebildet, die in einem Längsprofil gebogen sind. Ferner weisen die Borstenbündel 44.11 jeweils teilweise unterschiedliche Schrägstellungen auf, wobei wiederum eine X-Form gebildet wird.

Die Figuren 34a und 34b zeigen den Bürstenkopf 16 der Aufsteckbürste 10 mit einer alternativen zwölften Anordnung der Borstenbündel 44.12 des Borstenfelds 43. Die Borstenbündel 44.12 sind jeweils teilweise von Kämmen gebildet, die in einem Längsprofil gebogen sind. Ferner weisen die Borstenbündel 44.12 jeweils teilweise unterschiedliche Schrägstellungen auf. Die Haupterstreckung der meisten Kämme ist parallel zu der Längsachse der Zahnbürste, wobei die Biegung der einzelnen Kämme symmetrisch zur Längsachse der Zahnbürste angelegt ist.

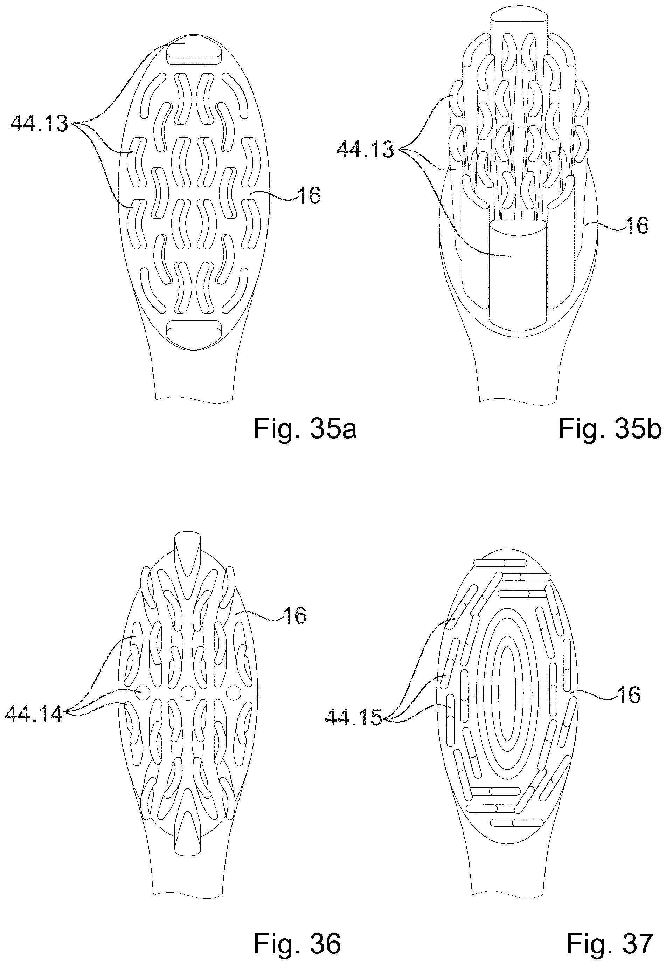

Die Figuren 35a und 35b zeigen den Bürstenkopf 16 der Aufsteckbürste 10 mit einer alternativen dreizehnten Anordnung der Borstenbündel 44.13 des Borstenfelds 43. Die Borstenbündel 44.13 sind jeweils teilweise von Kämmen gebildet, die in einem Längsprofil gebogen sind. Ferner weisen die Borstenbündel 44.13 jeweils teilweise unterschiedliche Schrägstellungen auf. Die Haupterstreckung der Kämme ist parallel zu der Längsachse der Zahnbürste, wobei die Biegung der einzelnen Kämme symmetrisch zur Längsachse der Zahnbürste angelegt ist.

Figur 36 zeigt den Bürstenkopf 16 der Aufsteckbürste 10 mit einer alternativen vierzehnten Anordnung der Borstenbündel 44.14 des Borstenfelds 43. Ein Teil der Borstenbündel 44.14 ist von herkömmlichen kreisförmigen Bündeln gebildet. Ferner ist ein Teil der Borstenbündel 44.13 jeweils von Kämmen gebildet, die in einem Längsprofil gebogen sind und jeweils teilweise unterschiedliche Schrägstellungen aufweisen.

Figur 37 zeigt den Bürstenkopf 16 der Aufsteckbürste 10 mit einer alternativen fünftzehnten Anordnung der Borstenbündel 44.15 des Borstenfelds 43. Zwei der Borstenbündel 44.15 sind elliptisch geformt. Ferner sind mehrere Borstenbündel 44.15 um die elliptischen Borstenbündel 44.15 angeordnet, welche unterschiedliche, zum Teil auch gegeneinander laufende, Schrägstellungen aufweisen.

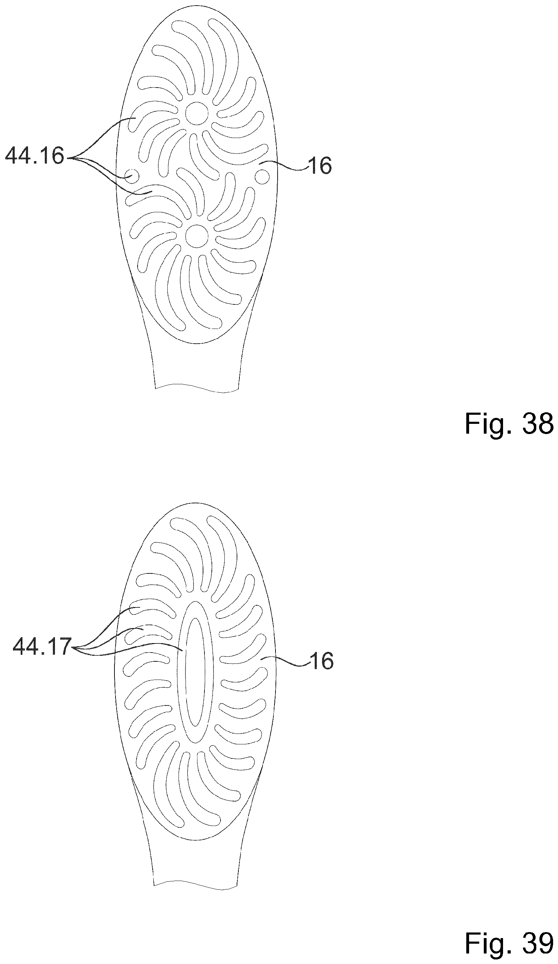

Figur 38 zeigt den Bürstenkopf 16 der Aufsteckbürste 10 mit einer alternativen sechzehnten Anordnung der Borstenbündel 44.16 des Borstenfelds 43. Ein Teil der Borstenbündel 44.16 weist eine Freiform auf und bildet jeweils die Form einer Turbinenschaufel aus. Ferner sind zumindest zwei der Borstenbündel 44.16 von herkömmlichen kreisförmigen Bündeln gebildet. Die Freiform-Borstenbündel 44.16 sind um die kreisförmigen Borstenbündel 44.16 herum angeordnet.

Figur 39 zeigt den Bürstenkopf 16 der Aufsteckbürste 10 mit einer alternativen siebzehnten Anordnung der Borstenbündel 44.17 des Borstenfelds 43. Eines der Borstenbündel 44.17 ist elliptisch geformt. Ein Rest der Borstenbündel 44.17 weist eine Freiform auf und bildet jeweils die Form einer Turbinenschaufel aus. Die freiform-Borstenbündel 44.17 sind um das elliptische Borstenbündel 44.17 herum angeordnet. Die Borstenfelder 43 weisen jeweils alle eine gewisse Symmetrie, insbesondere eine Punkt- und/oder Spiegelsymmetrie, auf. Grundsätzlich wären jedoch auch Anordnungen frei von einer Symmetrie denkbar. Ferner sind auch noch weitere Anordnungen und Formen der Borstenbündel denkbar, wie beispielsweise als Multilevel-Tufts, wobei die Borstenbündel verschiedene Höhen innerhalb des Borstenbündels aufweisen.

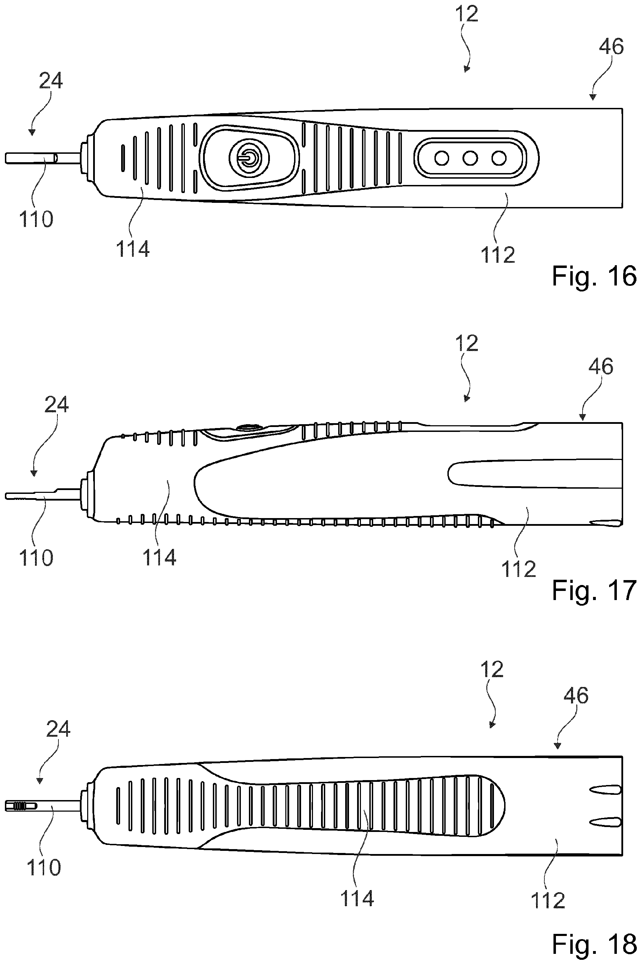

Figur 16 zeigt ein elektrisches Zahnbürstenhandteil 12. Das Zahnbürstenhandteil 12 weist eine Schnittstelle 24 zu einer Kopplung mit der Aufsteckbürste 10 auf. Die Schnittstelle 24 weist eine Achse 110 zu einem direkten Eingriff in die Schnittstellenaufnahme 20 der Aufsteckbürste 10 auf. Die Achse 110 ist von einer Metallwelle gebildet. Grundsätzlich wäre jedoch auch eine andere, einem Fachmann als sinnvoll erscheinende Ausgestaltung der Achse 110 denkbar. Ferner weist das Zahnbürstenhandteil 12 ein Gehäuse 46 auf.

Das Gehäuse 46 weist einen aus einer Hartkomponente bestehenden Grundkörper 112 auf. Der Grundkörper 112 bildet eine tragende Struktur des Gehäuses 46. Der Grundkörper 112 ist einstückig ausgeführt. Grundsätzlich wäre jedoch auch eine andere, einem Fachmann als sinnvoll erscheinende Ausgestaltung denkbar, wie beispielsweise ein zweischalige Ausgestaltung. Ferner weist das Gehäuse 46 eine aus einem Weichmaterial bestehende Umspritzung 114 auf. Die Umspritzung 114 ist teilweise auf eine Außenfläche des Grundkörpers 112 angeordnet. Die Umspritzung 114 bildet einen Griffbereich des Gehäuses 46 aus. Ferner weist das elektrische Zahnbürstenhandteil 12 einen Deckel 113 auf. Der Deckel 113 ist dazu vorgesehen, das Gehäuse 112 auf einer der Schnittstelle 24 abgewandten Seite zu verschließen (Figuren 16, 17, 18, 19 und 20).

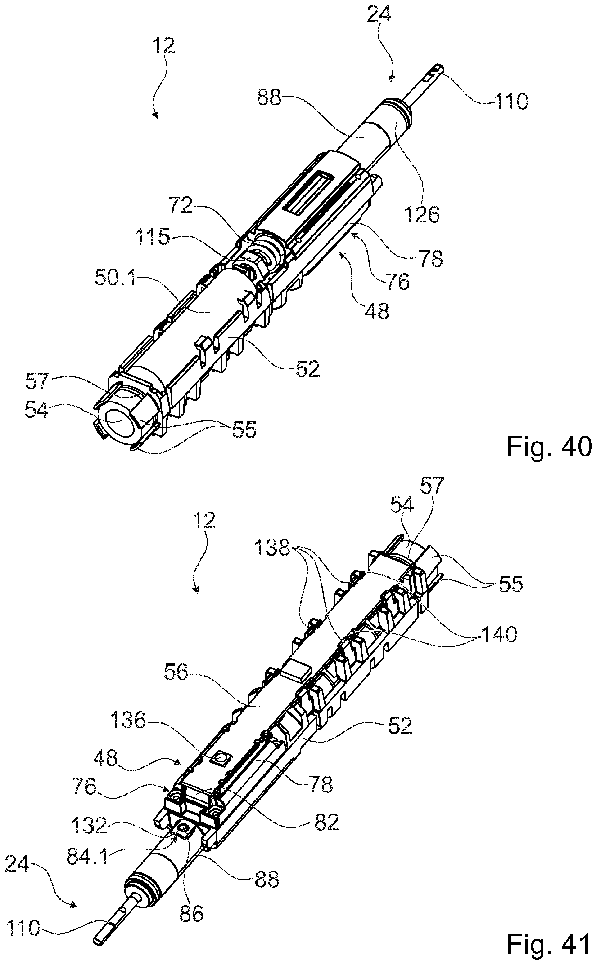

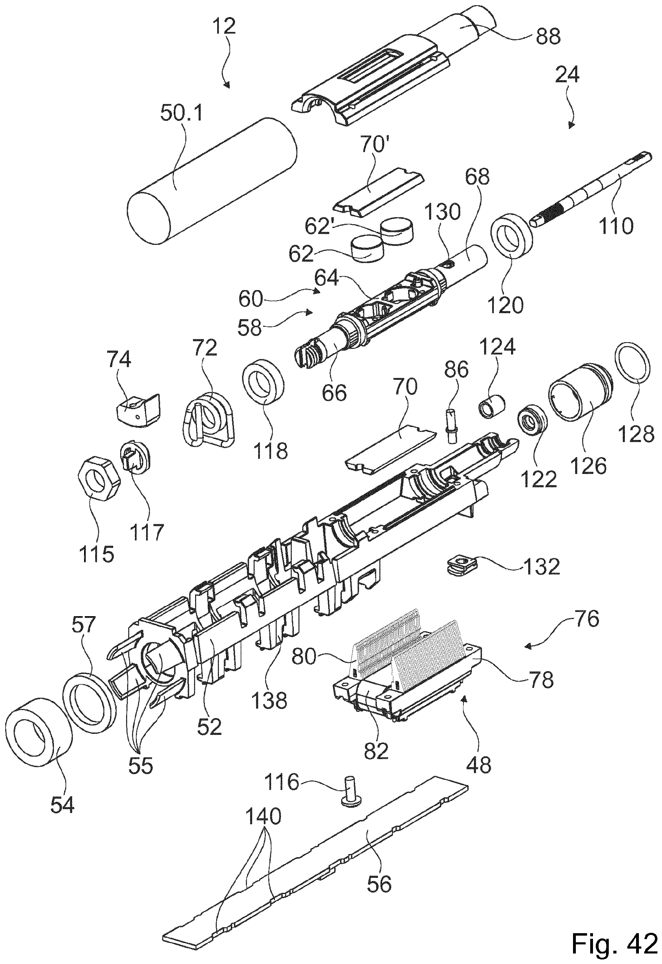

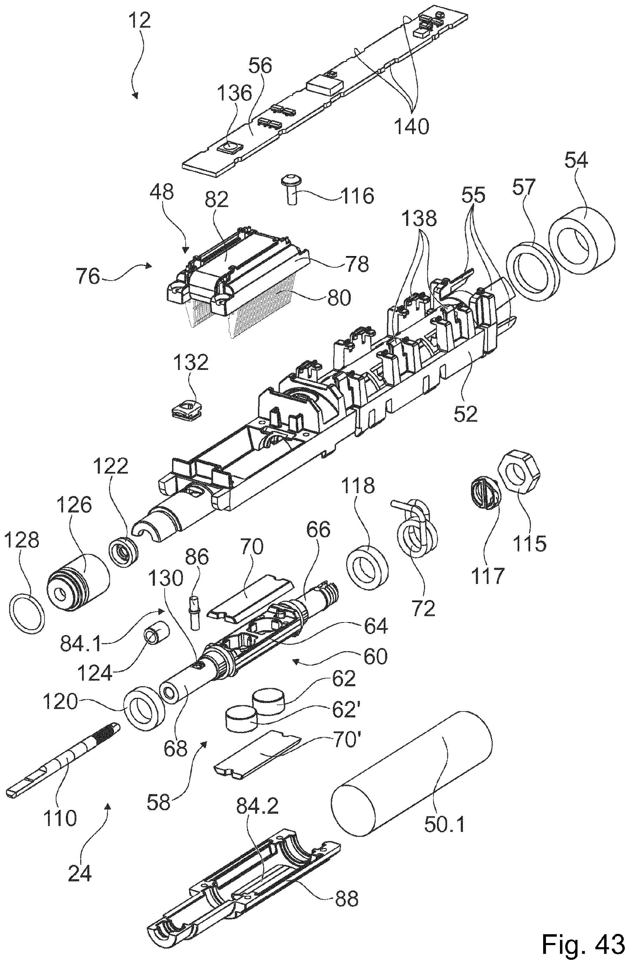

Im Folgenden wird auf die Figuren 40 bis 44 Bezug genommen, welche unterschiedliche Ansichten des Zahnbürstenhandteils 12 zeigen, wobei das Gehäuse 46 und der Deckel 113 jeweils ausgeblendet sind. Aufgrund der unterschiedlichen Ansichten sind einige Elemente nicht in sämtlichen Figuren dargestellt und entsprechend nicht in sämtlichen Figuren mit Bezugszeichen versehen.

Ferner weist das Zahnbürstenhandteil 12 eine in dem Gehäuse 46 angeordnete, feste Rahmeneinheit 52 auf. Die Rahmeneinheit 52 ist in einem montierten Zustand in das Gehäuse 46 eingeschoben. Die Rahmeneinheit 52 ist einstückig ausgebildet. Die Rahmeneinheit 52 erstreckt sich axial über einen Großteil des Gehäuses 46. Die Rahmeneinheit 52 ist von einem Kunststoffrahmen gebildet. Die Rahmeneinheit 52 besteht aus Kunststoff, vorzugsweise einem Polypropylen. Grundsätzlich wäre jedoch auch eine andere, einem Fachmann als sinnvoll erscheinende Ausgestaltung der Rahmeneinheit 52 denkbar. Die Rahmeneinheit 52 weist ferner verschiedene aneinandergereihte Geometrien für die Aufnahme von unterschiedlichen Bauteilen des Innenlebens des Zahnbürstenhandteils 12 auf. Ferner weist die Rahmeneinheit 52 Durchbrüche und Schlitze für Kabel und zur Gewichtsreduktion auf.

Des Weiteren weist das Zahnbürstenhandteil 12 eine in dem Gehäuse 46 aufgenommene Antriebseinheit 48 zu einem Antrieb der Schnittstelle 24 auf. Die Antriebseinheit 48 ist zu einem Antrieb der Achse 110 der Schnittstelle 24 vorgesehen. Die Antriebseinheit 48 ist von einem Motor gebildet. Die Antriebseinheit 48 ist von einem Schwingankermotor gebildet. Die Rahmeneinheit 52 nimmt die Antriebseinheit 48 zumindest teilweise auf. Die Rahmeneinheit 52 nimmt die Antriebseinheit 48 vollständig auf. Die Antriebseinheit 48 ist direkt in der Rahmeneinheit 52 montiert. Es existiert insbesondere keine eigentliche separate Motorenbaugruppe. Die Antriebseinheit 48 weist einen Rotor 58 auf. Der Rotor 58 ist zu einer Durchführung einer oszillierenden Bewegung vorgesehen. Der Rotor 58 weist ein einstückig ausgeführtes Käfigelement 60 auf. Das Käfigelement 60 ist zu einer Aufnahme von zumindest einem Magneten 62, 62' vorgesehen. Das Käfigelement 60 ist zu einer Aufnahme von zwei Magneten 62, 62' vorgesehen. Die Magneten 62, 62' sind jeweils von Permanentmagneten gebildet. Das Käfigelement 60 weist zu einer Aufnahme der Magneten 62, 62' jeweils einen Aufnahmebereich auf. Ferner weist das Käfigelement 60 einen den zumindest einen Aufnahmebereich umfassenden Grundkörper 64 und auf beiden Seiten des Grundkörpers 64 angeordnete Achsfortsätze 66, 68 auf, die eine Rotationsachse des Rotors 58 ausbilden. Die Achsfortsätze 66, 68 sind jeweils auf gegenüberliegenden Seiten des Grundkörpers 64 angeordnet. Ein erster Achsfortsatz 66 ist auf einer der Schnittstelle 24 abgewandten Seite des Grundkörpers 64 angeordnet. Ein zweiter Achsfortsatz 68 ist auf einer der Schnittstelle 24 zugewandten Seite des Grundkörpers 64 angeordnet. Der zweite Achsfortsatz 68 ist direkt mit der Schnittstelle gekoppelt. Der zweite Achsfortsatz 68 ist zu einer drehfesten Aufnahme der Achse 110 der Schnittstelle 24 vorgesehen. Eine Aufnahme der Achse 110 kann dabei beispielsweise über einen Presssitz, durch Verkleben oder durch Verschweißen erreicht werden. Ferner weist der Rotor 58 zumindest eine Abdeckung 70, 70' auf, welche zu einer Verschließung der Aufnahmebereiche des Käfigelements 60 vorgesehen ist. Der Rotor 58 weist zumindest zwei Abdeckungen 70, 70' auf, welche jeweils zu einer Verschließung einer Seite der Aufnahmebereiche des Käfigelements 60 vorgesehen sind und insbesondere gleichzeitig auch dazu dienen, das Magnetfeld zu lenken. Die Aufnahmebereiche sind jeweils zu zwei gegenüberliegenden Seiten geöffnet und werden nach einem Einsetzen der Magnete 62, 26' mittels der Abdeckungen 70, 70' verschlossen. Die Abdeckungen 70, 70' sind jeweils an den Grundkörper 64 des Käfigelements 60 angeschraubt, angeklebt oder verschraubt. Bei einer Montage wird vorzugsweise zuerst die erste Abdeckung 70 mit dem Grundkörper 64 verbunden, anschließend die Magnete 62, 62' eingesetzt und darauffolgend die zweite Abdeckung 70' mit dem Grundkörper 64 verbunden. Anschließend erfolgt die Montage von Lagern 118, 120 zur Lagerung des Rotors 58. Der Rotor 58 ist über seine Lager 118, 120 in einem Aufnahmebereich der Rahmeneinheit 52 aufgenommen. Der Aufnahmebereich für den Rotor 58 ist zu zwei gegenüberliegenden Seiten hin geöffnet. Die Abdeckungen 70, 70' sind dazu vorgesehen, die Magnete 62, 62' zu überdecken und ein Magnetfeld der Magnete 62, 62' zu verteilen.

Des Weiteren weist die Antriebseinheit 48 eine Rückstellfeder 72 auf. Die Rückstellfeder 72 ist von einer Schraubenfeder gebildet. Es wäre jedoch auch eine andere, einem Fachmann als sinnvoll erscheinende Ausgestaltung der Rückstellfeder denkbar, wie beispielsweise als Spiralfeder. Die Rückstellfeder 72 ist mit einem ersten Ende drehfest mit dem ersten Achsfortsatz 66 des Rotors 58 gekoppelt. Die Rückstellfeder 72 greift dazu mit einem ersten Ende in eine radial durch eine Drehachse des Rotors 58 verlaufende Nut des ersten Achsfortsatzes 66 des Käfigelements 60 ein. Das erste Ende der Rückstellfeder 72 wird ferner mittels einer auf den ersten Achsfortsatz 66 aufgeschraubten Mutter 115 und einem mit ihr zusammenwirkenden Klemmring 117 an dem ersten Achsfortsatz 66 fixiert. Der Klemmring 117 dient dazu, die Kraft für die Fixierung durch die Mutter 115 optimal auf die Rückstellfeder 72 zu verteilen. Ferner ist die Rückstellfeder 72 mit einem zweiten Ende über ein Fixierelement 74 variabel drehfest an der Rahmeneinheit 52 fixiert. Die Rückstellfeder 72 ist variabel drehfest hinsichtlich einer Drehlage an der Rahmeneinheit 52 fixiert ist. Die Rückstellfeder 72 ist mittels des Fixierelements 74 in verschiedenen Drehlagen relativ zu der Rahmeneinheit 52 drehfest an der Rahmeneinheit 52 fixierbar ausgeführt. Mittels des Fixierelements 74 kann eine gesamte Drehlage der Rückstellfeder 72 relativ zu der Rahmeneinheit 52 eingestellt werden, um Toleranzen in der Fertigung der Rückstellfeder 72 aufzufangen. Es kann indirekt eine Ausgangslage des Rotors 58 relativ zu der Rahmeneinheit 52 eingestellt werden. Das Fixierelement 74 wird dazu das zweite Ende der Rückstellfeder 72 aufnehmend über eine Schraube 116, welche sich durch die Rahmeneinheit 52 in das Fixierelement 74 erstreckt, gegen die Rahmeneinheit 52 fixiert. Das zweite Ende der Rückstellfeder 72 ist dabei in einer Ausnehmung des Fixierelements 74 aufgenommen. Die Schraube 116 ist dabei durch ein Langloch der Rahmeneinheit 52 geführt, sodass das Fixierelement 74 in verschiedenen Lagen relativ zu der Rahmeneinheit 52 an der Rahmeneinheit 52 fixiert werden kann. Das zweite Ende der Rückstellfeder 72 wird dadurch in einer aktuellen Position gehalten. Das zweite Ende der Rückstellfeder 72 kann dabei insbesondere in verschiedenen Positionen relativ zur Rahmeneinheit 52 fixiert werden. Bei einer Montage kann dabei das Fixierelement 74 mit der Rückstellfeder 52 vormontiert werden, wobei die Schraube 116 nicht angezogen wird. Anschließend kann die Achse 110 bzw. der Rotor 58 ausgerichtet und darauffolgend die Schraube 116 angezogen werden. Die Rückstellfeder 72 ist insbesondere zu einer Durchführung einer Verdrehung von 2° bis 10° vorzugsweise von 3° bis 7° vorgesehen.

Alternativ kann die Schraube 116 statt durch ein Langloch durch ein einfaches Sackloch geführt werden. Dadurch geht die Einstellbarkeit verloren, sodass keine Ausrichtung möglich ist. Die Rückstellfeder 72 kann aber dennoch positioniert und fixiert werden. Zudem weist die Antriebseinheit 48 einen Stator 76 auf. Der Stator 76 umfasst einen einstückig ausgeführten Träger 78, ein in den Träger 78 eingesetztes Blechpaket 80 und eine das Blechpaket 80 umgreifende Spule 82. Der Stator 76 umfasst den einstückig ausgeführten Träger 78 aus einer Hartkomponente, das in den Träger 78 eingesetzte Blechpaket 80, die das Blechpaket 80 umgreifende Spule 82 sowie eine zwischen der Spule 82 und dem Blechpaket 80 angeordnete Leitblechabdeckung. Der Stator 76 ist als ein Modul ausgebildet. Der Träger 78 ist von einem Kunststoffträger gebildet. Der Träger 78 ist von einem im Wesentlichen quaderförmigen Träger gebildet welcher auf einer ersten Seite eine quaderförmige Ausnehmung zu einer Aufnahme des Blechpakets 80 aufweist. Das Blechpaket 80 weist einen U-förmigen Querschnitt auf, wobei die freien Enden des Blechpakets 80 jeweils von dem Träger wegweisen. Das Blechpaket 80 besteht aus einer Vielzahl von dicht an dicht gepackten Leitblechen. Die Leitbleche sind insbesondere in den Trägern 78 eingeklebt, eingepresst, eingerastet oder sonstwie verbunden. Ferner weist der Träger 78 auf einer Rückseite der Ausnehmungen eine Führungsnut zu einer Aufnahme der Spule 82 auf. Die Spule 82 umschließt den Träger 78 und das Blechpaket 80. Die Spule 82 ist um das Blechpaket 80 und den Träger 78 gewickelt. Die Spule 82 ist in Längsrichtung orientiert. Die Spule 82 und das Blechpaket 80 sind kontaktlos ausgeführt. Zu einer Isolierung der Spule 82 gegenüber dem Blechpaket 80 auf einer dem Träger 78 abgewandten Seite weist der Stator 76 ein nicht weiter sichtbares Isolationsplättchen auf, welches zwischen der Spule 82 und dem Blechpaket 80 angeordnet ist. Das Isolationsplättchen ist von einer Leitblechabdeckung gebildet. Das Isolationsplättchen besteht aus Kunststoff. Eine Montage der Leitblechabdeckung erfolgt mittels Einrasten, Kleben oder Ähnlichem. Das Isolationsplättchen schützt den Draht der Spule 82 vor den Kanten des Blechpakets 80 und verhindert einen Kurzschluss zwischen der Spule 82 und dem Blechpaket 80. Der Träger 78 der Antriebseinheit 48 ist direkt mit der Rahmeneinheit 52 verbunden. Der Träger 78 ist mit der Rahmeneinheit 52 verschraubt. Grundsätzlich wäre jedoch auch eine andere, einem Fachmann als sinnvoll erscheinende Verbindung denkbar. Der Träger 78 deckt den Rotor 58 der Antriebseinheit 48 von einer Seite ab. Der Träger 78 verdeckt eine erste geöffnete Seite des Aufnahmebereichs der Rahmeneinheit 52 für den Rotor 58. Ferner ragt das Blechpaket 80 teilweise in den Aufnahmebereich des Rotors 58 auf. Das Blechpaket 80 umgreift den Rotor 58 in einem montierten Zustand zumindest teilweise. Ferner weist das elektrische Zahnbürstenhandteil 12 eine Rotorabdeckung 88. Die Rotorabdeckung 88 deckt den Rotor 58 der Antriebseinheit 48 von einer dem Träger 78 gegenüberliegenden Seite ab. Die Rotorabdeckung 88 verdeckt eine zweite geöffnete Seite des Aufnahmebereichs der Rahmeneinheit 52 für den Rotor 58. Der Rotor 58 ist in einem montierten Zustand direkt von dem Stator 76, der Rahmeneinheit 52 und der Rotorabdeckung 88 umgeben. Die Rotorabdeckung 88 ist von einem Kunststoffteil gebildet. Die Rotorabdeckung 88 ist fest mit der Rahmeneinheit 52 verbunden. Die Rotorabdeckung 88 ist gegenüber dem Träger 78 mit der Rahmeneinheit 52 verbunden. Die Rotorabdeckung 88 ist mit der Rahmeneinheit 52 verschraubt. Grundsätzlich wäre jedoch auch eine andere, einem Fachmann als sinnvoll erscheinende Art der Verbindung denkbar. Die Rotorabdeckung 88 ist zusammen mit der Rahmeneinheit 52 zu einer Lagerung und Fixierung des Rotors 58 der Antriebseinheit 48 vorgesehen. Die Rotorabdeckung 88 und die Rahmeneinheit 52 bilden jeweils zwei halbkreisförmige Achsaufnahmen zu einer Aufnahme des Rotors 58 aus. Die halbkreisförmigen Achsaufnahmen sind jeweils von korrespondierenden Achsaufnahmen gebildet, welche gemeinsam eine vollständige Achsaufnahme ausbilden. Die Achsaufnahmen sind jeweils zu einer Aufnahme der beiden Achsfortsätze 66, 68 des Rotors 58 über jeweils ein Lager 118, 120 vorgesehen. In den Achsaufnahmen sind dazu die Lager 118, 120 aufgenommen, welche wiederum zu einer Lagerung der Achsfortsätze 66, 68 des Rotors 58 gegenüber der Rahmeneinheit 52 vorgesehen sind. Es sind verschiedene, einem Fachmann als sinnvoll erscheinende Ausgestaltungen der Lager 118, 120 denkbar. Der Rotor 58 ist zwischen der Rahmeneinheit 52 und der Rotorabdeckung 88 gelagert. Die Rotorabdeckung 88 ist zusammen mit der Rahmeneinheit 52 zudem zu einer Lagerung und Abdichtung der Achse 110 der Schnittstelle 24 vorgesehen. Die Rotorabdeckung 88 und die Rahmeneinheit 52 bilden dazu jeweils eine halbkreisförmige Achsaufnahme zu einer Aufnahme eines Dichtrings 122 sowie eines Lagers 124 für die Achse 110 aus. Die Achse 110 ist zwischen der Rotorabdeckung 88 und der Rahmeneinheit 52 gelagert. Es sind verschiedene, einem Fachmann als sinnvoll erscheinende Ausgestaltungen des Lagers 124 denkbar. Beispielsweise wäre denkbar, dass das Lager 124 jeweils von einem Gleitlager aus Kunststoff oder dem Material Iglidur gebildet ist. Die Rotorabdeckung 88 erstreckt sich daher axial von der Antriebseinheit 48 bis zu einem Achsaustritt der Schnittstelle 24 aus dem Gehäuse 46.

Des Weiteren weist das elektrische Zahnbürstenhandteil 12 eine Abdeckkappe 126 auf. Die Abdeckkappe 126 ist dazu vorgesehen, über ein achsseitiges Ende der Rotorabdeckung 88 und der Rahmeneinheit 52 geschoben zu werden. Die Abdeckkappe 126 umgreift in einem montierten Zustand jeweils das achsseitige Ende der Rotorabdeckung 88 und der Rahmeneinheit 52. Die Abdeckkappe 126 dient zu einer weiteren Verbindung und Zentrierung der Rotorabdeckung 88 und der Rahmeneinheit 52 zueinander. Des Weiteren dient die Abdeckkappe 126 zu einer Achsführung der Achse 110 der Schnittstelle 24. Die Achse 110 ist dazu durch die Abdeckkappe 126 hindurch geführt. Ferner dient die Abdeckkappe 126 zu einer Abdichtung eines Gehäuseinneren gegenüber der Schnittstelle 24. Die Abdeckkappe 126 dient zu einer Abdichtung zwischen dem Gehäuse 46 und der Rahmeneinheit 52. Die Abdeckkappe 126 umfasst dazu einen Dichtring 128.

Ferner weist das elektrische Zahnbürstenhandteil zumindest ein Anschlagselement 84.1, 84.2 auf. In dem dargestellten Ausführungsbeispiel sind beispielhaft zwei Anschlagselemente 84.1, 84.2 offenbart, wobei grundsätzlich auch lediglich eines der beiden Anschlagselemente 84.1, 84.2 vorgesehen sein könnte. Die Anschlagselemente 84.1, 84.2 sind dazu vorgesehen, eine Verdrehung des Rotors 58 der Antriebseinheit 48 aus einer Ausgangslage heraus zu begrenzen. Die Anschlagselemente 84.1, 84.2 bilden jeweils einen Endanschlag des Rotors 58 bei einer oszillierenden Antriebsbewegung aus. Die Anschlagselemente 84.1, 84.2 dienen insbesondere zu einer Vermeidung einer Überdehnung der Rückstellfeder 72. Ein erstes Anschlagselement 84.1 ist von einem fest mit dem Rotor 58 der Antriebseinheit 48 verbundenen Stift 86 gebildet. Der Stift 86 ist radial in eine Öffnung 130 des Rotors 58 eingesteckt. Der Stift 86 ist radial in eine Öffnung 130 des zweiten Achsfortsatzes 68 eingesteckt. Der Stift 86 ist positionsfest an dem Rotor 58 angeordnet und ragt teilweise radial aus dem Rotor 58. Ferner ist der Stift 58 mit einem Ende elastisch an der Rahmeneinheit 52 gelagert. Der Stift 58 ist mit einem freien Ende elastisch an der Rahmeneinheit 52 gelagert. Der Stift 58 ist mit einem von dem Rotor 58 angewandten Ende über eine elastische Muffe 132 in einer Öffnung 131 der Rahmeneinheit 52 gelagert. Die Muffe 132 ist beispielhaft von einer Silikonmuffe gebildet. Grundsätzlich wäre jedoch auch eine andere, einem Fachmann als sinnvoll erscheinende Ausgestaltung denkbar. Die Anschlagspositionen bzw. ein maximaler Winkel wird dabei über die Größe der Öffnung 131 in der Rahmeneinheit 52 definiert.

Ein zweites Anschlagselement 84.2 ist einstückig mit der Rotorabdeckung 88 ausgeführt. Das zweite Anschlagselement 84.2 bildet einen einstückig mit der Rotorabdeckung 88 ausgebildeten Fortsatz aus, welcher dem Rotor 58 zugewandt ist. Die Form des zweiten Anschlagselements 84.2 ist dabei an die Endlagen des Rotors 58 angepasst. Das zweite Anschlagselement 84.2 dient als Anschlag für den Grundkörper 64 des Käfigelements 60 und/oder für die Abdeckungen 70, 70' des Rotors 58. Das zweite Anschlagselement 84.2 ist von einer Ausformung in der Rotorabdeckung 88 gebildet. Grundsätzlich wäre jedoch auch denkbar, dass das zweite Anschlagselement 84.2 von einem separaten Bauteil gebildet ist, welches an der Rotorabdeckung 88 befestigt ist.

Die Anschlagselemente 84.1, 84.2 und die entsprechenden begrenzenden Gegenelemente, also insbesondere die Öffnungen 130 ,131 und die Abdeckung 70',sind so gewählt/geformt, dass eine Bewegung aus einer Nullstellung pro Seite nur in einem Rahmen von 3° bis 12° vorzugsweise von 4° bis 8° möglich ist.

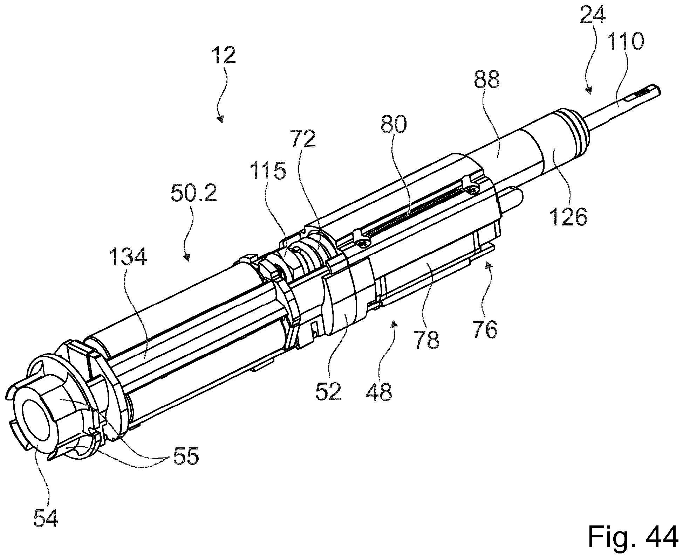

Des Weiteren weist das Zahnbürstenhandteil 12 einen in dem Gehäuse 46 aufgenommenen Energiespeicher 50.1; 50.2 zu einer Versorgung der Antriebseinheit 48 mit Energie auf. Die Rahmeneinheit 52 nimmt den Energiespeicher 50.1; 50.2 auf. Der Energiespeicher 50.1; 50.2 ist auf einer der Schnittstelle 24 abgewandten Seite der Antriebseinheit 48 angeordnet. Der Energiespeicher 50.1; 50.2 wird radial durch seitliche Haltearme der Rahmeneinheit 52 verklemmt. Ferner wird eine Längsverschiebung des Energiespeichers 50.1; 50.2 durch den kammerartigen Aufbau der Rahmeneinheit 52 vermieden. Der Energiespeicher 50.1; 50.2 ist im Wesentlichen koaxial zu der Antriebseinheit 48 angeordnet. Der Energiespeicher 50.1; 50.2 ist von einem Akkumulator, insbesondere einem NiMh-Akkumulator und/oder einem Li-Ion-Akkumulator, gebildet. Grundsätzlich wäre jedoch auch eine andere, einem Fachmann als sinnvoll erscheinende Ausgestaltung des Energiespeichers 50.1; 50.2 denkbar, wie beispielsweise als Batterie. Es sind beispielhaft zwei verschiedene Energiespeicher 50.1; 50.2 vorgesehen, welche zu dem Zahnbürstenhandteil 12 verwendet werden. Ein erster vorgeschlagener Energiespeicher 50.1, wie er in den Figuren 40, 42 und 43 dargestellt ist, ist von einer einzelnen Energiespeicherzelle gebildet. Der erste vorgeschlagene Energiespeicher 50.1 ist von einer AA-Energiespeicherzelle gebildet. Ein zweiter vorgeschlagener Energiespeicher 50.2, wie er in den Figur 44 dargestellt ist, ist von drei Energiespeicherzellen gebildet, die mittels eines Rahmens 134 des Energiespeichers 50.2 verbunden sind. Die Rahmeneinheit 52 ist, mit leichten Anpassungen, zu einer Aufnahme beider Energiespeicher 50.1; 50.2 geeignet. Die Rahmeneinheit 52 ist sowohl zu einer Aufnahme einer einzelnen AA-Energiespeicherzelle, als auch zu einer Aufnahme von drei AAA-Energiespeicherzellen in dem Rahmen 134 vorgesehen. Der Rahmen 134 ist dazu vorgesehen, die drei Energiespeicherzellen in Serie zu verschalten. Die SerienSchaltung wird durch Bleche erreicht, welche die Kontaktstellen zu den Energiespeicherzellen darstellen. Eine axiale Erstreckung des Rahmens 134 entspricht einer axialen Erstreckung der einzelnen AA-Energiespeicherzellen.

Das elektrische Zahnbürstenhandteil 12 weist ferner eine Ladespule 54 zu einem Aufladen des Energiespeichers 50.1; 50.2 auf. Grundsätzlich wäre jedoch auch eine Aufladung des Energiespeichers 50.1; 50.2 direkt mittels Steckverbindung denkbar. Die Ladespule 54 ist von einer Induktionsspule gebildet. Die Ladespule 54 ist in der festen Rahmeneinheit 52 aufgenommen. Die Rahmeneinheit 54 weist einen Aufnahmebereich zu einer positionsfesten Aufnahme der Ladespule 54 auf. Die Ladespule 54 wird von der Rahmeneinheit 54 von außen gehalten und geklemmt. Dazu weist die Rahmeneinheit 54 zumindest zwei bis fünf, vorzugsweise zumindest drei bis vier, Haltearme 55 auf, die an einen Grundkörper der Rahmeneinheit 54 angeformt sind und die Position der Ladespule 54 sowohl radial als auch axial sichern. Vorzugsweise weist die Rahmeneinheit 54 beispielhaft genau vier Haltearme auf. Grundsätzlich ist jedoch auch eine andere, insbesondere auch über fünf hinausgehende, einem Fachmann als sinnvoll erscheinende Anzahl von Halteelementen denkbar. Eine Montage der Ladespule 54 erfolgt insbesondere entlang der Längsachse. Die Ladespule 54 ist auf einer der Antriebseinheit 48 abgewandten Seite des Energiespeichers 50.1; 50.2 angeordnet. Die Ladespule 54 ist im Wesentlichen koaxial zu dem Energiespeicher 50.1; 50.2 und der Antriebseinheit 48 angeordnet. Der Deckel 113 greift ferner in einem montierten Zustand in die Ladespule 54 ein, um zu ermöglichen, dass ein Ferritkern eines Ladegeräts in der Spule platziert werden kann. Die Ladespule 54 weist insbesondere einen Innendurchmesser von 6 mm bis 14 mm, vorzugsweise von 8 mm bis 15 mm, und einen Außendurchmesser von 12 mm bis 19mm, vorzugsweise von 14 mm bis 17 mm, auf. Ferner weist die Ladespule 54 insbesondere eine Höhe von 4 mm bis 15 mm, vorzugsweise von 5 mm bis 10 mm, auf. Ferner weist das elektrische Zahnbürstenhandteil 12 eine Leiterplatte 56 auf. Die Leiterplatte 56 ist zu einer Steuerung der Antriebseinheit 48 vorgesehen. Die Leiterplatte 56 ist in einem Betrieb zu einer Sinus-Ansteuerung der Antriebseinheit 48 vorgesehen. Die Leiterplatte 56 ist dazu mit dem Energiespeicher 50.1; 50.2 gekoppelt. Der Energiespeicher 50.1; 50.2 ist mit Leitungen über die Leiterplatte 56, auf welcher die Steuerung integriert ist, mit der eigentlichen Antriebseinheit 48 verbunden. Der Energiespeicher 50.1; 50.2 ist mit der Spule 82 verbunden, welche um das Blechpaket 80 gewickelt ist, wobei die Spule 82 nicht direkt auf dem Blechpaket 80 aufliegt sondern einerseits am Träger 78 und andererseits an der Leitblechabdeckung aufliegt. In der Spule 82 wird ein Wechselstrom erzeugt, welcher dafür sorgt, dass sich an den freien Enden des Blechpakets 80 eine alternierende Polarisierung ausbildet. Im Rotor 58 sind die Magnete 62, 62' fest angeordnet und mittels der Abdeckungen 70, 70' montiert, die das von den Magneten 62, 62' ausgebildete Feld optimieren. Der Rotor 58 ist innerhalb des Blechpakets 80 drehbar gelagert. Durch die Polarisierung der freien Enden des Blechpakets 80 will sich der Rotor 58 mit den Magneten 62, 26' im Feld neu ausrichten, wodurch eine Bewegung entsteht. Werden die Enden des Blechpakets 80 umpolarisiert, so will sich der Rotor 58 in die andere Richtung ausrichten. Dadurch entsteht eine oszillierende Hin- und Her-Bewegung des Rotors 58. Die Rückstellfeder 72 auf der Rotationsachse stellt die Rückführung des Rotors 58 in eine Nullposition sicher, des Weiteren sorgt sie für sanftere Bewegungsübergänge wenn die Polarisierung wechselt. Insgesamt ist die Rückstellfeder 72 notwendig, damit die Bewegungen überhaupt möglich sind, da die Kräfte durch die Polarisierung ansonsten so groß wären, dass keine Oszillation möglich wäre.

Was mittels der Leiterplatte 56 gesteuert wird, sind die Energie-Pulse die der Antriebseinheit 48 zugeführt werden. Diese Größen sind spezifisch auf den vorliegenden Antrieb bzw. das Produkt angepasst. Damit ein ruhiger Lauf der Antriebseinheit 48 erreicht wird, wird die Antriebseinheit 48 sinusförmig angesteuert und nicht mit Pulsen und Pausen.

Ferner ist die Leiterplatte 56 mit der Ladespule 54 gekoppelt. Die Leiterplatte 56 ist zu einer Steuerung eines Ladevorgangs des Energiespeichers 50.1; 50.2 vorgesehen. Des Weiteren weist die Leiterplatte 56 ein sich durch den Grundkörper 112 des Gehäuses 46 hindurch betätigbares Betätigungselement 136 auf, welches zu einer Aktivierung und/oder Deaktivierung des Zahnbürstenhandteils 12 dient. Das Betätigungselement 136 ist dazu vorgesehen, durch die Umspritzung 114 des Gehäuses 46 hindurch betätigt zu werden. Ferner sind auf der Leiterplatte 56 weitere Elemente vorgesehen, wie insbesondere Leitungen, Widerständer, LED's und/oder eine Steuereinheit. Die Leiterplatte 56 ist ferner teilweise formschlüssig durch die Rahmeneinheit 52 aufgenommen und erstreckt sich über einen Großteil einer axialen Erstreckung der Rahmeneinheit 52. Die Leiterplatte 56 erstreckt sich zumindest über den Energiespeicher 50.1; 50.2 und die Antriebseinheit 48 des Zahnbürstenhandteils 12. Zu einer formschlüssigen Aufnahme der Leiterplatte 56 weist die Rahmeneinheit 52 mehrere hakenförmige Formschlusselemente 138 auf, welche dazu vorgesehen sind, die Leiterplatte 56 in einem montierten Zustand teilweise zu übergreifen. Die Leiterplatte 56 weist für eine Montage an einer Außenkante zu den Formschlusselementen 138 korrespondierende Ausnehmungen 140 auf, über welche die Leiterplatte 56 zu einer Montage an den Formschlusselementen 138 vorbei in eine Endlage bewegt werden kann. Vorzugsweise wird die Leiterplatte 56 bei einer Montage zu einer Endlage versetzt auf die Rahmeneinheit 52 aufgesetzt, wobei die Leiterplatte 56 mittels der Ausnehmungen 140 an den Formschlusselementen 138 vorbeigeführt werden kann. Anschließend wird die Leiterplatte 56 unter die Formschlusselemente 138 geschoben und dadurch fixiert. Die Leiterplatte 56 weist dazu nicht weiter sichtbare separate kleine Aussparungen zum Einrasten in der Endposition auf. Zusätzlich dienen die Formschlusselemente 138 als Niederhalter, welche die Leiterplatte 56 kraftschlüssig halten. An einem unteren Ende der Leiterplatte 56 weist die Rahmeneinheit 52 zudem einen Anschlag mit Rampe auf, welcher zu einer exakten Positionierung der Leiterplatte 56 dient.

Toleranzen zwischen der Rahmeneinheit 52 und ihren Bauteilen und dem Gehäuse 46 müssen aufgefangen werden, damit einerseits das Betätigungselement 136 im montierten Zustand an der korrekten Position für die Betätigung durch das Gehäuse 46 hindurch ist und andererseits aber auch die Ladespule 54 optimal liegt, damit der induktive Ladevorgang einen optimalen Wirkungsgrad erreicht. Weiter müssen Toleranzen aufgefangen werden, damit die Rahmeneinheit 52 satt im Gehäuse 46 sitzt und im Betrieb keine Geräusche entstehen. Der Längenausgleich zum Auffangen von Toleranzen kann durch die Einlage eines komprimierbaren Längenausgleichselements 57, beispielsweise eines komprimierbaren Kunststoffs, passieren, der beispielsweise zwischen Ladespule 54 und Rahmeneinheit 52 angebracht ist. Weiter könnten aber auch elastische Elemente an der Rahmeneinheit 52 integriert sein, um den Längenausgleich sicherzustellen. Beispielsweise biegbare Elemente, die beim Montieren des Deckels 113 gespannt d.h. verbogen werden.

Insgesamt kann die Rahmeneinheit 52 in mehrere Zonen unterteilt werden. Die Rahmeneinheit 52 weist eine Spulenzone auf. Die Spulenzone bildet von unten her gesehen die erste Zone und dient zu einer direkten Aufnahme und Montage der Ladespule 54. Ferner weist die Rahmeneinheit 52 eine Akkuzone auf. Die Akkuzone schließt direkt an die Spulenzone an und ist zu einer Aufnahme des Energiespeichers 50.1; 50.2 vorgesehen. Des Weiteren weist die Rahmeneinheit 52 eine Federzone auf. Die Federzone schließt auf einer der Spulenzone abgewandten Seite direkt an die Akkuzone an und ist zu einer Aufnahme der Rückstellfeder 72 sowie des Fixierelements 74 vorgesehen. Zudem weist die Rahmeneinheit 52 eine Schwingankerzone auf. Die Schwingankerzone schließt auf einer der Spulenzone abgewandten Seite direkt an die Federzone an und ist zu einer Aufnahme der Antriebseinheit 48 vorgesehen. Die Rahmeneinheit 52 ist im Bereich der Schwingankerzone durchgängig geöffnet. Zudem weist die Rahmeneinheit 52 eine Achszone auf. Die Achszone schließt auf einer der Spulenzone abgewandten Seite direkt an die Schwingankerzone an und ist zu einer Aufnahme der Schnittstelle 24 bzw. der Achse 110 der Schnittstelle 24 vorgesehen. Des Weiteren weist die Rahmeneinheit 52 eine Print-Zone auf. Die Print-Zone ist auf einer Vorderseite der Rahmeneinheit angeordnet und ist zu einer Aufnahme der Leiterplatte 56 vorgesehen.

Eine Bestückung der Rahmeneinheit 52 erfolgt im Wesentlichen über eine Rückseite. Von vorne werden lediglich die Leiterplatte 56 und die Rotorabdeckung 88 montiert. Ferner werden entlang der Längsachse die Ladespule 54 und eine Verbindungskappe montiert. Die Antriebseinheit 48 und der Energiespeicher 50.1; 50.2 werden von einer Rückseite der Rahmeneinheit 52 her montiert.

Bei einer Montage des elektrischen Zahnbürstenhandteils 12 wird vorzugsweise in einem ersten Schritt das gesamte Innenleben über die Rahmeneinheit 52 montiert und anschließend in einem zweiten Schritt in das Gehäuse 46 eingeschoben. Die Rahmeneinheit 52 wird dabei im Gehäuse 46 verklemmt. Die Rahmeneinheit 52 weist dazu Rastnasen auf, welche in Rastausnehmungen des Gehäuses 46 eingreifen. Darauffolgend wird in einem dritten Schritt der Deckel 113 an dem Gehäuse 46 fixiert und fixiert und verschließt damit das Innenleben. Der Deckel 113 kann sowohl mit dem Gehäuse 46 verschraubt als auch beispielsweise mittels eines Bajonettverschlusses verriegelt werden.

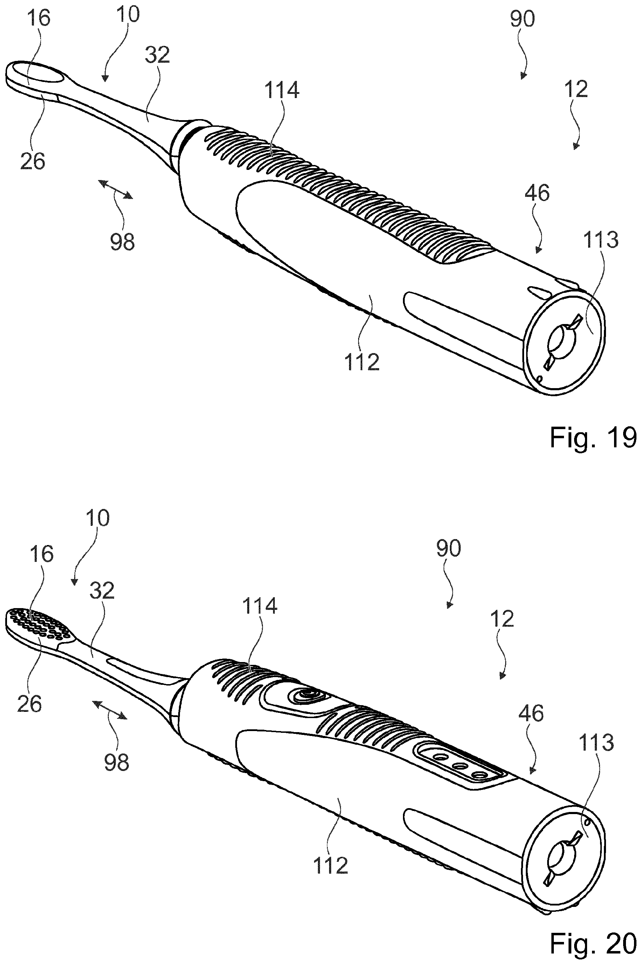

Die Figuren 19 bis 22 zeigen eine elektrische Zahnbürste 90 mit dem elektrischen Zahnbürstenhandteil 12 und mit der Aufsteckbürste 10 in einem aufgesteckten Zustand. Aufgrund der unterschiedlichen Ansichten sind einige Elemente nicht in sämtlichen Figuren dargestellt und entsprechend nicht in sämtlichen Figuren mit Bezugszeichen versehen. Bei einer Montage der Aufsteckbürste 10 auf das elektrische Zahnbürstenhandteil 12 wird die korrekte Montage durch die Form der Achse 110 sichergestellt. Beim Einführen weiß der Bediener insbesondere durch die Borsten auf der Aufsteckbürste 10 und durch die Gestaltung des Zahnbürstenhandteils 12 etwa wo vorne ist. Die Geometrie im Innern der Aufsteckbürste 10 führt durch die verschiedenen Stufungen und Verläufe der Schnittstellenaufnahme 20 und schlussendlich durch die Führung der beiden Abflachungen der Achse 110 vorne und hinten zu einer genauen und korrekten Montage. Als Anschlag dient bei der Montage ein freies Ende der Achse 110. Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

## Patentansprüche

1. Elektrisches Zahnbürstenhandteil mit zumindest einer Schnittstelle (24) zu einer Kopplung mit einer Aufsteckbürste (10), mit zumindest einem Gehäuse (46), mit zumindest einer in dem Gehäuse (46) aufgenommenen Antriebseinheit (48) zu einem Antrieb der Schnittstelle (24),mit zumindest einem Energiespeicher (50.1; 50.2) zu einer Versorgung der Antriebseinheit (48) mit Energie,
und mit
zumindest einer, in dem Gehäuse (46) angeordneten, festen, insbesondere einstückig ausgeführten, Rahmeneinheit (52), welche zumindest teilweise die Antriebseinheit (48) und den Energiespeicher (50.1; 50.2) aufnimmt, wobei die Antriebseinheit (48) zumindest einen Rotor (58) aufweist, wobei der Rotor (58) der Antriebseinheit (48) in einem Aufnahmebereich der Rahmeneinheit (52) aufgenommen ist, wobei der Aufnahmebereich zu einer Seite hin geöffnet ist, wobei die Antriebseinheit (48) zumindest einen Stator (76) aufweist, der einen einstückig ausgeführten Träger (78), ein in den Träger (78) eingesetztes Blechpaket (80) und eine das Blechpaket (80) umgreifende Spule (82) aufweist, wobei der Träger (78) eine erste geöffnete Seite des Aufnahmebereichs der Rahmeneinheit (52) für den Rotor (58) verdeckt,
**dadurch gekennzeichnet, dass**
der Rotor (58) der Antriebseinheit (48) über zwei Lager (118, 120) in dem Aufnahmebereich der Rahmeneinheit (52) aufgenommen ist.

2. Elektrisches Zahnbürstenhandteil nach Anspruch 1,
**gekennzeichnet durch**
zumindest eine Ladespule (54) zu einem Aufladen des Energiespeichers (50.1; 50.2), welche in der festen Rahmeneinheit (52) aufgenommen ist.

3. Elektrisches Zahnbürstenhandteil nach Anspruch 1 oder 2,
**gekennzeichnet durch**
eine Leiterplatte (56) zu einer Steuerung der Antriebseinheit (48), welche zumindest teilweise formschlüssig durch die Rahmeneinheit (52) aufgenommen ist und sich zumindest über einen Großteil einer axialen Erstreckung der Rahmeneinheit (52) erstreckt.

4. Elektrisches Zahnbürstenhandteil nach einem der vorhergehenden Ansprüche,
**dadurch gekennzeichnet, dass**
der zumindest eine Rotor (58) zumindest ein einstückig ausgeführtes Käfigelement (60) umfasst, welches zumindest einen Aufnahmebereich zu einer Aufnahme von zumindest einem Magneten (62, 62') aufweist.

5. Elektrisches Zahnbürstenhandteil nach Anspruch 4,
**dadurch gekennzeichnet, dass**
das Käfigelement (60) einen, zumindest einen Aufnahmebereich für den zumindest einen Magneten (62, 62') umfassenden Grundkörper (64) und auf beiden Seiten des Grundkörpers (64) angeordnete Achsfortsätze (66, 68) aufweist, die eine Rotationsachse des Rotors (58) ausbilden.

6. Elektrisches Zahnbürstenhandteil nach Anspruch 5,
**dadurch gekennzeichnet, dass**
der Rotor (58) zumindest eine Abdeckung (70, 70') aufweist, welche zu einer Verschließung des Aufnahmebereichs des Käfigelements (60) vorgesehen ist.

7. Elektrisches Zahnbürstenhandteil zumindest nach Anspruch 5,
**dadurch gekennzeichnet, dass**
die Antriebseinheit (48) zumindest eine Rückstellfeder (72) aufweist, welche mit einem ersten Ende drehfest mit einem ersten Achsfortsatz (66) des Rotors (58) gekoppelt ist und mit einem zweiten Ende über ein Fixierelement (74) variabel drehfest an der Rahmeneinheit (52) fixiert ist.

8. Elektrisches Zahnbürstenhandteil nach einem der vorhergehenden Ansprüche,
**dadurch gekennzeichnet, dass**
die Antriebseinheit (48) von einem Schwingankermotor gebildet ist.

9. Elektrisches Zahnbürstenhandteil nach einem der vorhergehenden Ansprüche,
**dadurch gekennzeichnet, dass**
der Träger (78) der Antriebseinheit (48) direkt mit der Rahmeneinheit (52) verbunden ist und einen Rotor (58) der Antriebseinheit (48) von zumindest einer Seite abdeckt.

10. Elektrisches Zahnbürstenhandteil nach einem der vorhergehenden Ansprüche,
**gekennzeichnet durch**
zumindest ein Anschlagselement (84.1, 84.2), welches dazu vorgesehen ist, eine Verdrehung eines Rotors (58) der Antriebseinheit (48) aus einer Ausgangslage heraus zu begrenzen.

11. Elektrisches Zahnbürstenhandteil nach Anspruch 10,
**dadurch gekennzeichnet, dass**
das zumindest eine Anschlagselement (84.1) von einem fest mit dem Rotor (58) der Antriebseinheit (48) verbundenen Stift (86) gebildet ist, welcher mit einem Ende elastisch an der Rahmeneinheit (52) gelagert ist.

12. Elektrisches Zahnbürstenhandteil nach einem der vorhergehenden Ansprüche,
**gekennzeichnet durch**
zumindest eine Rotorabdeckung (88), welche fest mit der Rahmeneinheit (52) verbunden ist und zusammen mit der Rahmeneinheit (52) zu einer Lagerung und/oder Fixierung eines Rotors (58) der Antriebseinheit (48) vorgesehen ist.

13. Elektrisches Zahnbürstenhandteil nach Anspruch 10 und 12,
**dadurch gekennzeichnet, dass**
das zumindest eine Anschlagselement (84.2) einstückig mit der Rotorabdeckung (88) ausgeführt ist.

14. Elektrische Zahnbürste mit einem elektrischen Zahnbürstenhandteil (12) nach einem der Ansprüche 1 bis 13 und mit einer Aufsteckbürste (10).

## Claims

1. Electric toothbrush handpiece with at least one interface (24) for a coupling with a plug-on brush (10), with at least one housing (46), with at least one drive unit (48) accommodated in the housing (46) for driving the interface (24), with at least one energy storage (50.1; 50.2) for a supply of the drive unit (48) with energy,
and with at least one fix frame unit (52), which is arranged in the housing (46), which is in particular implemented integrally and which at least partly accommodates the drive unit (48) and the energy storage (50.1; 50.2),
wherein the drive unit (48) comprises at least one rotor (58), wherein the rotor (58) of the drive unit (48) is accommodated in a receiving region of the frame unit (52), wherein the receiving region is open toward a side, wherein the drive unit (48) has at least one stator (76) comprising an integrally implemented carrier (78), a metal-sheet package (80) inserted in the carrier (78) and a coil (82) encompassing the metal-sheet package (80), wherein the carrier (78) covers a first open side of the receiving region of the frame unit (52) provided for the rotor (58),
**characterised in that**
the rotor (58) of the drive unit (48) is accommodated in the receiving region of the frame unit (52) via two bearings (118, 120).

2. Electric toothbrush handpiece according to claim 1,
**characterised by** at least one charging coil (54), which is accommodated in the fix frame unit (52), for charging the energy storage (50.1; 50.2).

3. Electric toothbrush handpiece according to claim 1 or 2,
**characterised by** a circuit board (56) for a controlling of the drive unit (48), which is at least partly accommodated by the frame unit (52) in a form-fit manner and which extends at least over a large portion of an axial extension of the frame unit (52).

4. Electric toothbrush handpiece according to one of the preceding claims,
**characterised in that** the at least one rotor (58) comprises at least one integrally implemented cage element (60), which has at least one receiving region for receiving at least one magnet (62, 62').

5. Electric toothbrush handpiece according to claim 4,
**characterised in that** the cage element (60) has a base body (64) comprising at least one receiving region for the at least one magnet (62, 62'), and has shaft extensions (66, 68), which are arranged on both sides of the base body (64) and form a rotation shaft of the rotor (58).

6. Electric toothbrush handpiece according to claim 4,
**characterised in that** the rotor (58) comprises at least one cover (70, 70'), which is configured for a closure of the receiving region of the cage element (60).

7. Electric toothbrush handpiece at least according to claim 5,
**characterised in that** the drive unit (48) comprises at least one reset spring (72), which is with a first end coupled with a first shaft extension (66) of the rotor (58) in a rotationally fixed manner, and is with a second end fixated to the frame unit (52) in a variably rotationally fixed manner via a fixation element (74).

8. Electric toothbrush handpiece according to one of the preceding claims,
**characterised in that** the drive unit (48) is implemented by an oscillating armature motor.

9. Electric toothbrush handpiece according to one of the preceding claims,
**characterised in that** the carrier (78) of the drive unit (48) is directly connected with the frame unit (52) and covers a rotor (58) of the drive unit (48) from at least one side.

10. Electric toothbrush handpiece according to one of the preceding claims,
**characterised by** at least one abutment element (84.1, 84.2), which is configured to limit a rotation of a rotor (58) of the drive unit (48) out of a starting position.

11. Electric toothbrush handpiece according to claim 10,
**characterised in that** the at least one abutment element (84.1) is implemented by a pin (86), which is fixedly connected to the rotor (58) of the drive unit (48) and which is with one end supported elastically on the frame unit (52).

12. Electric toothbrush handpiece according to one of the preceding claims,
**characterised by** at least one rotor cover (88), which is fixedly connected to the frame unit (52) and is configured, together with the frame unit (52), for a support and/or fixation of a rotor (58) of the drive unit (48).

13. Electric toothbrush handpiece according to claims 10 and 12,
**characterised in that** the at least one abutment element (84.2) is implemented integrally with the rotor cover (88).

14. Electric toothbrush with an electric toothbrush handpiece (12) according to one of claims 1 to 13 and with a plug-on brush (10).

## Revendications

1. Partie poignée électrique de brosse à dents avec au moins une interface (24) pour un couplage avec une brosse enfichable (10), avec au moins un boîtier (46), avec au moins une unité d'entraînement (48) accueillie dans le boîtier (46) pour un entraînement de l'interface (24), avec au moins un réservoir d'énergie (50.1 ; 50.2) pour un fournissement de l'unité d'entraînement (48) de l'énergie,
et avec
au moins une unité cadre fixe (52), qui est disposée dans le boîtier (46), qui est en particulier réalisée intégralement, et qui au moins partiellement accueille l'unité d'entraînement (48) et le réservoir d'énergie (50.1 ; 50.2),
où l'unité d'entraînement (48) comprend au moins un rotor (58), où le rotor (58) de l'unité d'entraînement (48) est accueilli dans une zone d'accueil de l'unité cadre (52), où la zone d'accueil est ouverte vers un côté, où l'unité d'entraînement (48) comprend au moins un stator (76) ayant une porteuse (78) réalisée intégralement, un paquet de toile (80) inséré dans la porteuse (78) et une bobine (82) entourant le paquet de toile (80), où la porteuse (78) couvre un premier côté ouvert de la zone d'accueil pour le rotor (58) de l'unité cadre (52),
**caractérisée en ce que**
le rotor (58) de l'unité d'entraînement (48) est accueilli dans la zone d'accueil de l'unité cadre (52) par le biais de deux paliers (118, 120).

2. Partie poignée électrique de brosse à dents selon la revendication 1,
**caractérisée par** au moins une bobine à chargement (54) pour charger le réservoir d'énergie (50.1 ; 50.2) accueilli dans l'unité cadre fixe (52).

3. Partie poignée électrique de brosse à dents selon la revendication 1 ou 2,
**caractérisée par** une plaque de circuit (56) pour la commande de l'unité d'entraînement (48), qui est accueillie par l'unité cadre (52) au moins partiellement en liaison de forme et qui s'étend à travers au moins une grande partie d'une étendue axiale de l'unité cadre (52).

4. Partie poignée électrique de brosse à dents selon l'une des revendications précédentes,
**caractérisée en ce que** l'au moins un rotor (58) comprend au moins un élément de cage (60) réalisé intégralement et qui comporte au moins une zone d'accueil pour accueillir au moins un aimant (62, 62').

5. Partie poignée électrique de brosse à dents selon la revendication 4,
**caractérisée en ce que** l'élément de cage (60) comporte un corps de base (64) comprenant au moins une zone d'accueil pour l'au moins un aimant (62, 62') et comporte des prolongements d'axe (66, 68) qui sont disposés sur les deux côtés du corps de base (64) formant un axe rotatif du rotor (58).

6. Partie poignée électrique de brosse à dents selon la revendication 5,
**caractérisée en ce que** le rotor (58) comprend au moins une couverture (70, 70') prévue pour une fermeture de la zone d'accueil de l'élément de cage (60).

7. Partie poignée électrique de brosse à dents au moins selon la revendication 5,
**caractérisée en ce que** l'unité d'entraînement (48) comprend au moins un ressort de rappel (72), qui est couplé par une première extrémité à un premier prolongement d'axe (66) du rotor (58) immobile en rotation, et qui est par une deuxième extrémité fixé sur l'unité cadre (52) variablement immobile en rotation par le biais d'un élément de fixation (74).

8. Partie poignée électrique de brosse à dents selon l'une des revendications précédentes,
**caractérisée en ce que** l'unité d'entraînement (48) est implémenté d'un moteur à armature oscillante.

9. Partie poignée électrique de brosse à dents selon l'une des revendications précédentes,
**caractérisée en ce que** la porteuse (78) de l'unité d'entraînement (48) est directement raccordée à l'unité cadre (52) et couvre un rotor (58) de l'unité d'entraînement (48) d'au moins un côté.

10. Partie poignée électrique de brosse à dents selon l'une des revendications précédentes,
**caractérisée par** au moins un élément de butée (84.1, 84.2), qui est prévu pour limiter une rotation d'un rotor (58) de l'unité d'entraînement (48) hors d'une position initiale.

11. Partie poignée électrique de brosse à dents selon la revendication 10,
**caractérisée en ce que** l'au moins un élément de butée (84.1) est implémenté par une broche (86), qui est fixement raccordée au rotor (58) de l'unité d'entraînement (48) et qui est supportée élastiquement sur l'unité cadre (52) par une extrémité.

12. Partie poignée électrique de brosse à dents selon l'une des revendications précédentes,
**caractérisée par** au moins une couverture de rotor (88), qui est fixement raccordée à l'unité cadre (52) et qui est prévue, avec l'unité cadre (52), pour un support et/ou une fixation d'un rotor (58) de l'unité d'entraînement (48).

13. Partie poignée électrique de brosse à dents selon les revendications 10 et 12,
**caractérisée en ce que** l'au moins un élément de butée (84.2) est réalisé intégralement avec la couverture de rotor (88).

14. Brosse à dents électrique avec une partie poignée électrique de brosse à dents (12) selon l'une des revendications 1 à 13 et avec une brosse enfichable (10).
